# EUROPEAN PATENT SPECIFICATION

(11) **EP 1 700 890 B1**
(45) Date of publication and mention of the grant of the patent: **24.08.2011**
(21) Application number: 06004714.9
(22) Date of filing: 08.03.2006
(51) Int. Cl.: C09D 11/00

(54) **Ink composition, inkjet recording method, printed material, method of producing planographic printing plate, and planographic printing plate**
Tintenzusammensetzung, Tintenstrahldruckverfahren, bedrucktes Material, Methode zur Herstellung einer planograohischen Druckplatte, planographische Druckplatte
Composition d'encre, méthode d'enregistrement par jet d'encre, produit imprimé, procédé de fabrication d'une plaque d'impression planographique, plaque d'impression planograpgique

(30) Priority: 08.03.2005 JP 2005064604; 23.03.2005 JP 2005084943; 23.03.2005 JP 2005084944; 25.03.2005 JP 2005090155; 28.03.2005 JP 2005093235
(43) Date of publication of application: 13.09.2006
(73) Proprietor: FUJIFILM Corporation, Minato-ku Tokyo (JP)
(72) Inventor: Aoai, Toshiaki, Yoshida-cho Haibara-gun Shizuoka-ken (JP)
(74) Representative: HOFFMANN EITLE

(56) References cited:
- EP-A- 1 262 829
- EP-A- 1 275 689
- EP-A- 1 528 088
- EP-A- 1 621 594
- EP-A1- 0 967 522
- EP-A2- 1 528 089
- WO-A-01/25288
- WO-A-01/42313
- DE-A1- 19 545 125
- DE-A1- 19 739 620
- GB-A- 1 476 536
- JP-A- 6 093 037
- JP-A- 11 116 874
- US-A- 3 842 051
- US-A- 4 751 102
- US-A1- 2003 105 201
- US-A1- 2003 138 727
- US-A1- 2003 199 609
- US-A1- 2004 010 159
- US-A1- 2004 019 128
- US-A1- 2004 099 170
- US-A1- 2004 214 945
- US-A1- 2004 244 641

## Description

### BACKGROUND OF THE INVENTION

### Field of the Invention

The present invention relates to: an ink composition which is suitably used for inkjet recording; an inkjet recording method; a printed material using the same; and further a planographic printing plate obtained by using the ink composition; and a method of producing the planographic-printing plate.In more detail, it relates to: an ink composition which is curable by irradiation of radiation with a high sensitivity, capable of forming a high quality image, excellent in storage stability, and suitable for inkjet recording; an inkjet recording method; a printed material using the same; a planographic printing plate obtained by using it; and a method of producing the planographic printing plate.

### Description of the Related Art

As an image recording method for forming an image on a recording medium such as a paper, based on image data signals, there are an electrographic method, a dyesublimatic and fusible thermal transfer method, and an inkjet method. Among these, the inkjet method is feasible with a low cost device, wherein an image is directly formed on a recording medium. by ejecting an ink on a necessary image area only. Therefore, the ink can be efficiently used and the running cost is low. Furthermore, the inkjet method is superior as an image recording method since the noise is low.

According to the inkjet method, it is possible to print not only on a regular paper but also on a non-absorptive recording medium such as a plastic sheet and a metal plate. However, speeding-up at the time of printing and extending the definition are key matters, and there is a property in which the time required for drying and curing droplets after printing greatly affects the productivity of printed materials and the sharpness of printed images.

As one of the inkjet methods, there is a recording method using an inkjet recording ink curable by irradiation of radiation. According to this method, by curing ink droplets by irradiating radiation right after or after a fixed time after the ink is ejected, the productivity of printed letters can be increased and sharp images can be formed.

By achieving an improvement in the sensitivity of an inkjet recording ink curable by irradiation of radiation such as ultraviolet rays, a high curability with respect to radiation is given, causing numerous benefits such as improving the productivity of inkjet recording, reducing power consumption, elongating the lifetime due to a decrease in a load on the radiation generator, and preventing the occurrence of volatilization of low molecule substances by insufficient curing. Moreover, improving the sensitivity means to improve the strength of an image formed by, in particular, an inkjet recording ink. Particularly if it is applied to the formation of a planographic printing plate, strength of the cured image area is increased and a high printing durability can be obtained.

Such an inkjet method curable by radiation, for example, ultraviolet rays has been drawing attention from the point of relatively less odor, quick drying properties, and a capability of recording onto a non-ink absorptive recording medium. Ultraviolet ray curable ink compositions for inkjet using radical polymerization are disclosed in JP-A No.63-235382, JP-A No.3-216379, JP-A No.5-214280, JP-B No.6-21256, and JP-B No.6-62905. Moreover, with an object of providing an inkjet recording ink capable of recording an image without bleeding, but with a high sensitivity, and a high adhesiveness onto a recording medium, even for a substrate that is. normally difficult to directly record by an inkjet recording method, and which is highly safe due to less irritation and -sensitization to skin, compositions comprising colorants and polymerizable compounds comprising a specific radial polymerizable acrylate compound group are proposed in JP-A No. 2003-192943 and JP-A No. 2003-192944. These radical polymerizable inks are superior in cure rate, and are capable of forming an image without bleeding, but have a problem in that the adhesiveness onto a recording medium is decreased due volume shrinkage at the time of curing.

Therefore, with an object of improving the adhesiveness onto a recording medium, cation polymerizable ink compositions with a lower shrinkage rate at the time of curing by ultraviolet rays, are proposed in JP-A No.9-183928. However, these cation polymerizable inks have a big disadvantage for practical use in that the stability during the storage is not sufficient due to a reaction based on acid generated over time. Therefore, as an attempt to improve the storage stability, techniques of adding a basic compound or a thermal base generator are proposed in JP-A No. 2003-312121, JP-A No. 2003-341217, and JP-A No. 2004-91558. However, it was found that a new problem occurs in that the basic compound inhibits the function of an acid generated by exposure, thus decreasing the ink curing sensitivity. Therefore, compatibility of storage stability and high sensitivity is strongly desired.

### SUMMARY OF THE INVENTION

According to the present invention, an ink composition which is curable by irradiation of radiation with a high sensitivity, is capable of forming a high quality image, is superior in adhesiveness onto a recording medium, is excellent in storage stability, and is suitable for inkjet recording, and an inkjet recording method using the ink composition, can be provided.

Moreover, according to the present invention, a printed material, a planographic printing plate, and a method of producing a planographic printing plate obtained by using an ink composition which is superior in the storage stability and is curable by irradiation of radiation with a high sensitivity, can be provided.

The present inventors have made earnest and repeated examinations, resulting in a finding that: by using a compound having a basic nitrogen atom with a specific function as an additive, there can be obtained an ink composition suitable for inkjet recording wherein the storage stability is improved while maintaining a high sensitivity, and the ejection property, the particle shape maintenance property, and the adhesiveness onto a recording medium, of the ink composition, are improved, and have thus accomplished the present invention.

A first aspect of the invention is to provide an ink composition comprising: a cationic polymerizable compound (a), a compound (b) which generates an acid by irradiation of radiation, and a polyfunctional amine compound (c1) having at least two basic nitrogen atoms, where two of the basic nitrogen atoms can be coordinated with hydrogen ions.

A second aspect of the invention is to provide an ink composition comprising: a cationic polymerizable compound (a), 4 compound (b) which generates an acid by irradiation of radiation, and a compound (c2) having a basic nitrogen atom and a conjugate acid exhibiting a pKa value of 3 or more.

A third aspect of the invention is to provide an ink, composition comprising: a cationic polymerizable compound (a), a compound (b) which generates an acid by irradiation of radiation, and a hindered amine compound (c3) having a basic nitrogen atom, wherein the nitrogen atom is substituted with at least two tertiary alkyl groups.

A fourth aspect of the invention is to provide an ink composition comprising: a cationic polymerizable compound (a), a compound (b) which generates an acid by irradiation of radiation, and a compound (c4) having a basic nitrogen atom and an ether linkage in the molecule.

A fifth aspect of the invention is to provide an inkjet recording method comprising: ejecting the ink composition of the present invention onto a recording medium by an inkjet printer; and curing the ejected ink composition by irradiating radiation.

A sixth aspect of the invention is to provide a printed material formed by ejecting the ink composition of the present invention onto a recording medium by an inkjet printer, and then curing the ink composition by irradiating radiation.

A seventh aspect of the invention is to provide a method of producing planographic printing plate comprising: ejecting the ink composition of the present invention onto a hydrophilic substrate, and then curing the ink composition by irradiation of radiation so as to form a hydrophobic area.

An eighth aspect of the invention is to provide a planographic printing plate comprising a hydrophobic area formed by ejecting the ink composition of the present invention onto a hydrophilic substrate, and then curing the ink composition by irradiating radiation.

### DETAILED DESCRIPTION OF THE INVENTION

### INK COMPOSITION

The ink composition of the present invention is curable by irradiation of radiation, and comprises; a cationic polymerizable compound (a), and a compound (b) which generates an acid by irradiation of radiation.

The ink composition of the present invention further comprises the following (c1) to (c4) in the respective aspects. Hereinafter, compounds of (c1) to (c4) may be simply called "(c) specific base component" in some cases.
a polyfunctional amine compound (c1) having at least two basic nitrogen atoms, wherein two of the basic nitrogen atoms can be coordinated with and hydrogen ions (first aspect). a compound (c2) having a basic nitrogen atom and a conjugate acid exhibiting a pKa value of 3 or more (second aspect).
a hindered amine compound (c3) having a basic nitrogen atom, wherein the nitrogen atom is substituted with at least two tertiary alkyl groups (third aspect).
a compound (c4) having a basic nitrogen atom and an ether linkage in the molecule (fourth aspect).

The compound (c2) having a basic nitrogen atom and a conjugate acid exhibiting a pKa value of 3 or more can be classified into; a compound (c2A) having a basic nitrogen atom and a conjugate acid exhibiting a pKa value of 3 to 10, and a compound (c2B) having a basic nitrogen atom and a conjugate acid exhibiting a pKa value of 10 or more.

Hereinafter, a compound having the above (a) to (c) is called an ink composition of the present invention. The ink composition of the present invention may comprises; an organic acidic component (d) exhibiting a pKa value of 2 to 6, and a colorant (e), as desired.

The "radiation" referred to in the present invention is not specifically limited as long as it can impart an energy capable of generating an initiator by its irradiation in the ink composition, and widely includes α rays, y rays, X rays, visible rays, electron beams, and the like. Among these, from the viewpoint of curing sensitivity and availability of devices, ultraviolet rays and electron beams are preferred, and in particular ultraviolet rays are preferred. Consequently, the ink composition of the present invention is preferably an ink composition curable by irradiation of ultraviolet rays, as radiation.

Hereinafter, respective components used for the ink composition of the present invention are described in order.

### COMPOUND (C)

### A POLYFUNCTIONAL AMINE COMPOUND (C1) HAVING AT LEAST TWO BASIC NITROGEN ATOMS, WHEREIN TWO OF THE BASIC NITROGEN ATOMS CAN BE COORDINATED WITH AND HYDROGEN IONS

Firstly, a component (c1) is a polyfunctional amine compound (hereinafter, appropriately called "specific base component (c1)") having at least two basic nitrogen atoms, wherein two of the basic nitrogen atoms and hydrogen ions can be coordinated (so called chelated).

Here, the "basic nitrogen atom" in the present invention denotes a nitrogen atom which is in the unoxidized state and is capable of bonding with carbon atoms only, and has one lone electron-pair.

According to the present invention, by utilizing the phenomenon in which two such basic nitrogen atoms are coordinated with hydrogen ions, there is a superior effect where acids being impurities existing in the ink composition can be effectively captured, greatly improving the storage stability of the ink composition.

The polyfunctional amine compound serving as the above specific base component (c1) may have at least two basic nitrogen atoms capable of being coordinated with hydrogen ions as described above, in the molecule. Moreover, if the specific base component has three or more basic nitrogen atoms in the molecule, all of the basic nitrogen atoms may be capable of being coordinated with hydrogen ions, or a part of the basic nitrogen atoms may be capable of being coordinated with hydrogen ions.

In this manner, since the amount of captured hydrogen ions (acids) varies according to the number of basic nitrogen atoms existing in the molecule, which are capable of being coordinated with hydrogen ions, then the addition thereof can be appropriately adjusted by the structure of the polyfunctional amine compound serving as the specific base component.

Moreover, as the polyfunctional amine compound serving as the specific base component (c1), preferably two basic nitrogen atoms are bonded via a linking group having 2 or 3 carbon atoms, in the molecule. As a result, two basic nitrogen atoms are coordinated with and hydrogen ions, by which an intermediate state,of a 5- or 6-membered ring including hydrogen atoms can be formed. This is more preferred since the form where hydrogen ions are coordinated can be stabilized by this intermediate state.

In the present invention, the "number of carbon atoms" in the linking group having 2 or 3 carbon atoms does not include the number of carbon atoms of substituents, and denotes the number of carbon atoms used for linking between two basic nitrogen atoms only. In this manner, a bond between the carbon atom constituting the linking group, and the basic nitrogen atom, may be either a single bond or a double bond.

Specifically, this linking group having 2 or 3 carbon atoms includes an ethylene group, and a propylene group, and in addition a carbon comprising atomic group forming a part of a monocyclic or polycyclic alicyclic structure, a monocyclic or polycyclic aromacyclic structure, and a monocyclic or polycyclic heterocyclic structure.

These linking groups may further have substituents. For example, the basic nitrogen atom may be substituted via 2 or 3 carbon atoms.

These substituents may be mutually bonded to other groups in the molecule to form a ring structure. The formed ring structure is an aliphatic ring, an aromatic ring, a heterocycle comprising basic nitrogen atoms, or the like.

Hereinafter, specific examples [(c1) to (c-27)] of the specific base component (c1) preferably used in the present invention are shown. However, the present invention is not limited to these.

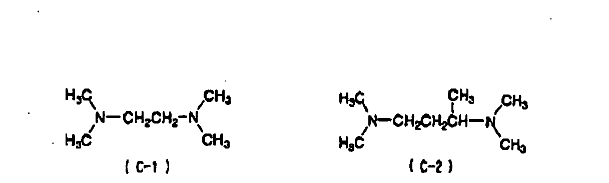

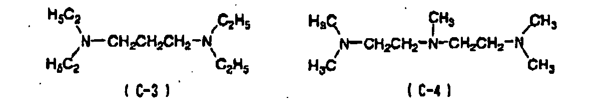

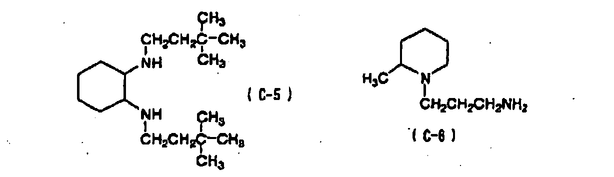

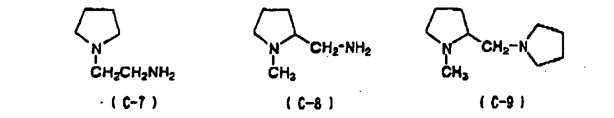

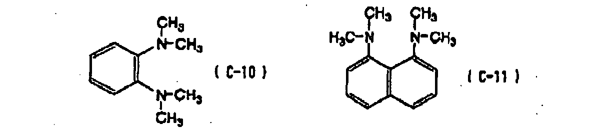

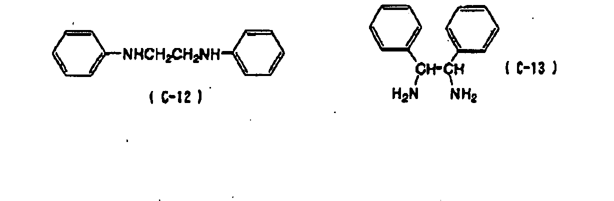

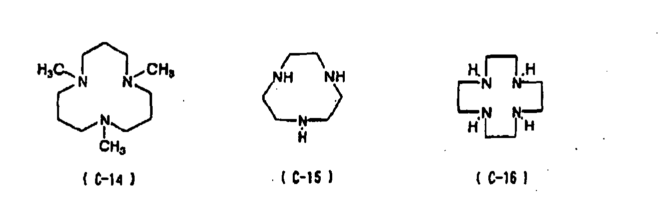

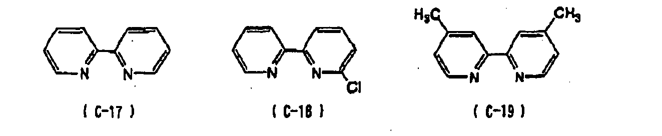

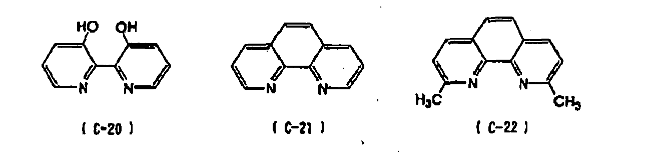

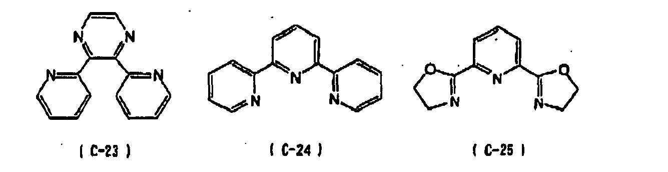

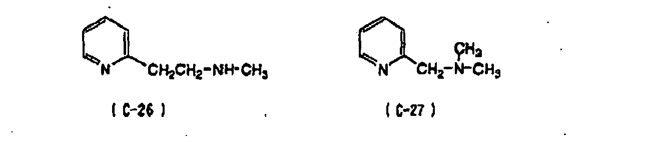

The ink composition of the present invention may be added with only one type of the specific base component (c1), or a plurality of types thereof in combination.

The content of the specific base component (c1) in the ink composition is suitably 0.001 to 10 % by mass, preferably 0.01 to 7 % by mass, and more preferably 0.03 to 5 % by mass with respect to the total solid content of the composition.

Moreover, the employable proportion of the specific base component (c1) and the compound (b) which generates an acid by irradiation of radiation is within a range from 0.001 to 0.5, and preferably 0.005 to 0.2 at the mole ratio of (c1)/(b).

### COMPOUND (C2) HAVING A BASIC NITROGEN ATOM AND A CONJUGATE ACID EXHIBITING A PKA VALUE OF 3 OR MORE

The compound (c2) having a basic nitrogen atom and a conjugate acid exhibiting a pKa value of 3 or more can be largely classified into a compound (c2A) having a basic nitrogen atom and a conjugate acid exhibiting a pKa value of 3 to 10, and a compound (c2B) having a basic nitrogen atom and a conjugate acid exhibiting a pKa value of 10 or more. Hereinafter is a description thereof.

### Compound (c2A) having a basic nitrogen atom and a conjugate acid exhibiting a pKa value of 3 to 10

Firstly, the component (c2A) is a compound (hereinafter, appropriately called "specified base component (c2A)") having a basic nitrogen atom and a conjugate acid exhibiting a pKa value of 3 to 10.

Here, the specific base component (c2A) is a compound having a basic nitrogen atom in the molecule and exhibiting basicity, specifically having a conjugate acid exhibiting a pKa value of 3 to 10, and preferably a compound having a basic nitrogen atom and a conjugate acid exhibiting a pKa value of 4 to 7.

The pKa value specified here is defined as a negative of a common logarithm of a dissociation constant Ka in a weak electrolytic solution, that is pKa =-log₁₀Ka.

Moreover, the "basic nitrogen atom" denotes a nitrogen atom which is in the unoxidized state and capable of bonding with carbon atoms only, and has one lone electron-pair.

Specific examples of such a specific base component (c2A) include anilines such as 2-chloroaniline, 2-bromoaniline, 4-methylaniline, 3-chloroaniline, 3,5-dibromoaniline, N-methylaniline, N,N-dimethylaniline, 3-nitroaniline, 2-aminobenzoic acid, 4-aminoazobenzcne, N-phenylaniline, and N-phenylglycine; pyridines such as 3-chloropyridine, 3-bromopyridine, 4-hydroxypyridine, 3-carboxypyridine, 2,6-dimethylpyridine, and 2,4,6-trimethylpyridine; in addition, cyclic amines such as prolinc, hydroxyproline, purine, 8-hydroxypurine, N-methylpyrazine, thiazole, and tryptophane; and aliphatic amines such as arginine, aspartic acid, glutamic acid, N-methylglycine, N-propylglycine, histidine, cystine, leucine, isoleucine, ornithine, serine, methionine, alanine, methoxyalanine, and threonine. However, specially preferred are compounds represented by the following formula (I-2A) or the formula (II-2A).

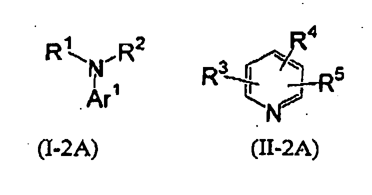

In the formula (I-2A) and the formula (II-2A), R¹ and R² independently represent a hydrogen atom, an alkyl group, a cycloalkyl group, an aralkyl group, or an aryl group. Ar¹ represents an aryl group. R³ to R⁵ independently represent a hydrogen atom, an alkyl group, a cycloalkyl group, an aralkyl group, an aryl group, a hydroxy group, a carboxy group, a cyano group, a nitro group, an acyl group, or a -N(R¹)(R²) group. Moreover, a pair of R¹ and R² in the formula (I-2A), or any two of R³ to R⁵ in the formula (II-2A) may be bonded to each other to form an aliphatic ring, an aromatic ring, or a heterocycle.

In the formula (I-2A) and the formula (II-2A), R¹, R² and R³ to R⁵ are preferably an alkyl group having 1 to 8 carbon atoms, or a monocyclic or polycyclic cycloalkyl group having 5 to 12 carbon atoms.

In the case where a pair of R¹ and R² or any two of R³ to R⁵ are bonded to each other to form a ring, examples of the ring formed include a pyrrolidine ring, a piperidine ring, a pyrazine ring, a 1,3-diazacyclopentene ring, a 1,3-diazacyclohexene ring, and a 1,3-diazacycloheptane ring.

Preferably, the alkyl group includes those having 1 to 10 carbon atoms, such as a methyl group, an ethyl group, a propyl group, an n-butyl group, a sec-butyl group, a hexyl group, an octyl group, and a decyl group.

The cycloalkyl group includes those having 3 to 10 carbon atoms, such as a cyclopropyl group, a cyclobutyl group, a cyclopentyl group, a cyclohexyl group, a cyclopentyl group, and a norbomyl group.

The aralkyl group includes those having 7 to 12 carbon atoms, such as a benzyl group, a phenethyl group, and a naphthylmethyl group.

The aryl group includes those having 6 to 15 carbon atoms, such as a phenyl group, a tolyl group, a methoxyphenyl group, a naphthyl group, and an anthryl group.

Moreover, these groups may have substituents. Here, the introducible substituents include linear, branched, or cyclic alkyl groups (such as a methyl group, an ethyl group, a propyl group, an isopropyl group, an n-butyl group, a sec-butyl group, a t-butyl group, a cyclopropyl group, a cyclopentyl group, and a cyclohexyl group), linear, branched, or cyclic alkoxy groups (such as a methoxy group, an ethoxy group, a propoxy group, a butoxy group, and a hydroxyethoxy group), the abovementioned aryl groups, halogen atoms (a fluorine atom, a chlorine atom, a bromine atom, and an iodine atom), hydroxy groups, carboxyl groups, cyano groups, acyl groups (such as an acetyl group, a propanoyl group, and a benzoyl group), nitro groups, alkylamino groups, dialkylamino groups (the alkyl groups are the same as the above), arylamino groups (the aryl groups are the same as the above), and -S-R⁰ groups. Here, R⁰ represents the above linear, branched, or cyclic alkyl group, or the aryl group. Particularly preferred substituents include hydrophillic groups such as a hydroxy group (OH group) and a carboxyl group (COOH group).

Hereinafter, specific examples [(I-1) to (I-40) and (II-1) to (II-24)] of the specific base component (c2A) suitably used in the present invention are shown. However, the preset invention is not limited to these.

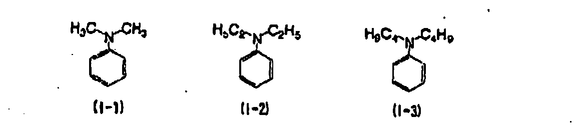

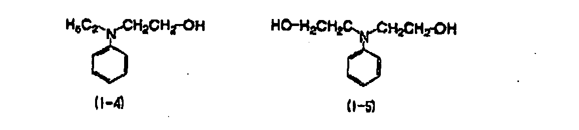

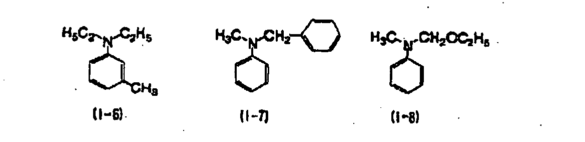

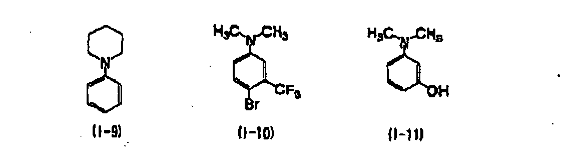

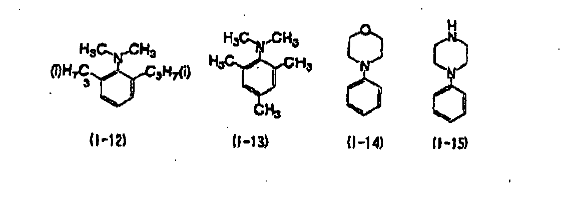

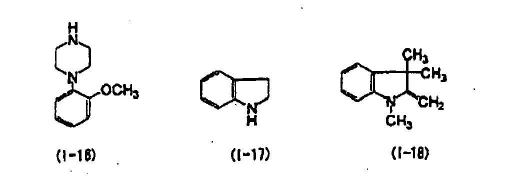

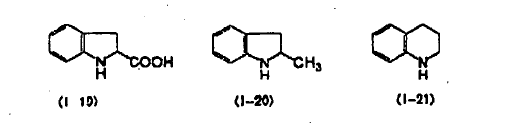

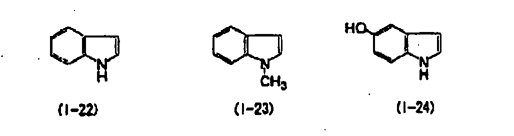

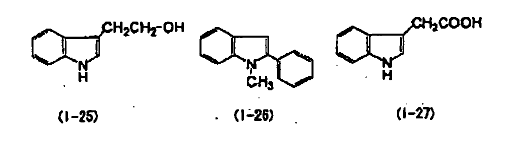

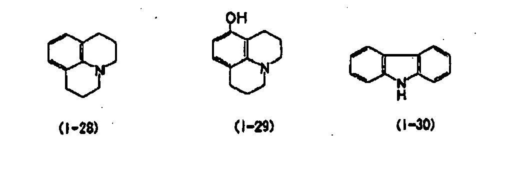

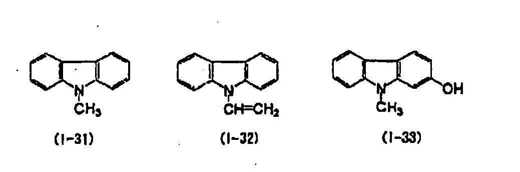

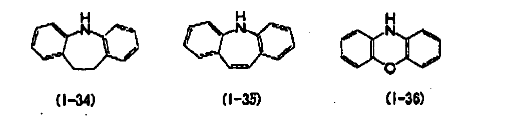

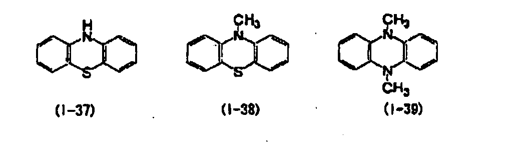

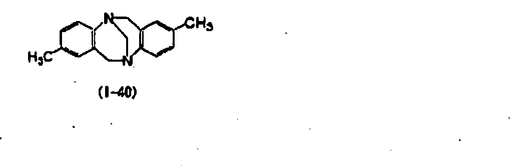

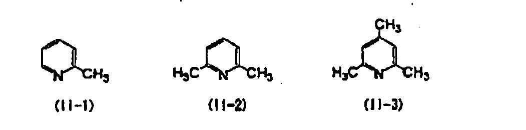

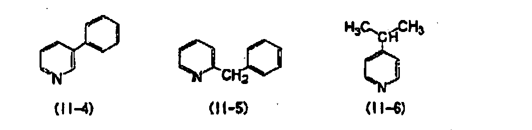

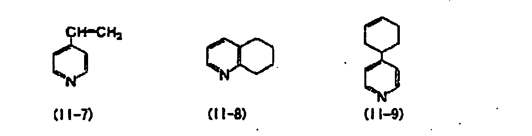

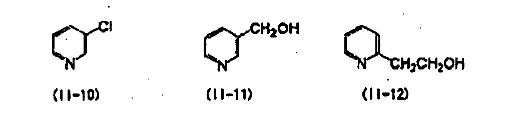

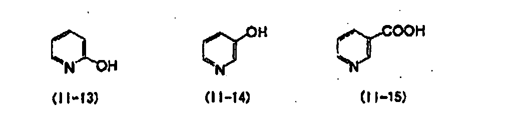

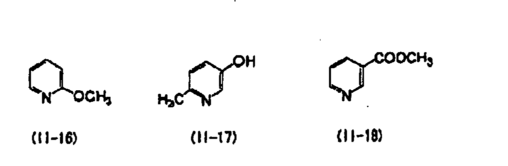

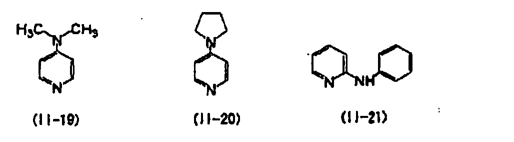

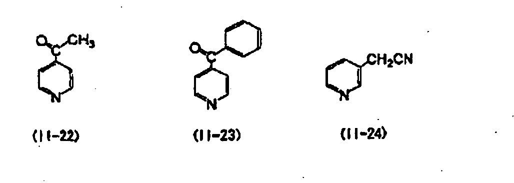

The ink composition of the present invention may be added with only one type of the specific base component (c2A), or a plurality of types thereof in combination.

The content of the specific base component (c2A) in the ink composition is suitably 0.001 to 10 % by mass, preferably 0.01 to 7 % by mass, and more preferably 0.03 to 5 % by mass with respect to the total solid content of the composition.

Moreover, the employable proportion of the specific base component (c2A) and the compound (b) which generates an acid by irradiation of radiation described in detail later, is within a range between 0.001 and 0.5, and preferably 0.005 and 0.2 at the mole ratio of (c2A)/(b).

### Compound (c2B) having a basic nitrogen atom and a conjugate acid exhibiting a pKa value of 10 or more

Next, the component (c2B) is a compound (hereinafter, appropriately called Specific base component (c2B)") having a basic nitrogen atom and a conjugate acid exhibiting a pKa value of 10 or more.

Here, the specific base component (c2B) is a compound having a basic nitrogen atom in the molecule, and exhibiting a relatively strong basicity in the ink composition. The pKa value specified here is defined as a negative of a common logarithm of a dissociation constant Ka in a weak electrolytic solution, that is, pKa = -log₁₀Ka.

In the present invention, this pKa value is calculated by titration using HCl and NaOH standard solutions in ethanol/water (7/3).

As such a specific base component (c2B), anything can be used as long as it has a basic nitrogen atom and a conjugate acid exhibiting a pKa value of 10 or more. However, specifically a compound having an aliphatic tertiary amine structure and a compound having a 1,3-diaxapropene structure are preferred, and more preferably this is a compound represented by the following formula (I-2B) or the formula (II-2B).

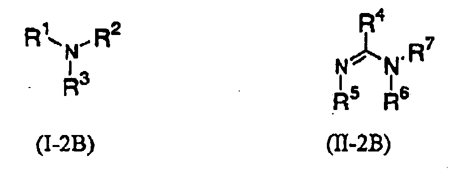

In the formulae (I-2B) and the formula (II-2B), R¹ to R³ and R⁵ to R⁷ independently represent a hydrogen atom, an alkyl group, a cycloalkyl group, or an aralkyl group. And, R⁴ represents an alkyl group, a cycloalkyl group, an aralkyl group, an aryl group, an -N(R⁸)(R⁹) group, or an -OR¹⁰ group. Here, R⁸ to R¹⁰ independently represent a hydrogen atom, an alkyl group, a cycloalkyl group, or an aralkyl group.

Preferably, the alkyl group includes those having 1 to 10 carbon atoms, such as a methyl group, an ethyl group, a propyl group, an n-butyl group, a sec-butyl group, a hexyl group, an octyl group, and a decyl group.

The cycloalkyl group includes those having 3 to 10 carbon atoms, such as a cyclopropyl group, a cyclobutyl group, a cyclopentyl group, a cyclohexyl group, a cyclopentyl group, and a norbornyl group.

The aralkyl group includes those having 7 to 12 carbon atoms, such as a benzyl group, a phenethyl group, and a naphthylmethyl group.

The aryl group includes those having 6 to 15 carbon atoms, such as a phenyl group, a tolyl group, a methoxyphenyl group, a naphthyl group, and an anthryl group.

And, any two of R¹ to R³ in the formula (I-2B), or any two of R⁴ to R¹⁰ in the formula (II-2B) may be bonded to each other to form an aliphatic ring, an aromatic ring, or a heterocycle.

Here, examples of the ring structure formed as above include a pyrrolidine ring, a piperidine ring, a pyrazine ring, a 1,3-diazacyclopentene ring, a 1,3-diazacyclohexene ring, and a 1,3-diazacycloheptane ring.

The respective groups above may have further substituents, if introducible. The introducible substituents include linear, branched, or cyclic alkyl groups (such as a methyl group, an ethyl group, a propyl group, an isopropyl group, an n-butyl group, a sec-butyl group, a t-butyl group, a cyclopropyl group, a cyclopentyl group, and a cyclohexyl group), linear, branched, or cyclic alkoxy groups (such as a methoxy group, an ethoxy group, a propoxy group, a butoxy group, and a hydroxyethoxy group), aryl groups (as abovementioned as the aryl group), halogen atoms (a fluorine atom, a chlorine atom, a bromine atom, and an iodine atom), hydroxy groups, carboxyl groups, cyano groups, acyl groups (for example, an acetyl group, a propanoyl group, a benzoyl group, and the like), nitro groups, alkylamino groups, dialkylamino groups (the alkyl parts are the same as the above alkyl groups), arylamino groups (the aryl parts are the same as the above aryl groups), and -S-R⁰ groups. Here, R⁰ represents a linear, branched, or cyclic alkyl group, or aryl group.

In the formula (I-2B), R¹ to R³ are preferably an alkyl group that may have a substituent or a cycloalkyl group that may have a substituent, and more preferably an alkyl group having 1 to 8 carbon atoms or a monocyclic or polycyclic cycloalkyl group having 5 to 12 carbon atoms.

In the formula (II-2B), R⁴ is preferably an alkyl group that may have a substituent, a cycloalkyl group that may have a substituent, or an -N(R⁸)(R⁹) group, and more preferably an alkyl group having 1 to 6 carbon atoms or an -N(R⁸)(R⁹) group. In the formula (II-2B), R⁵ to R⁷ are preferably an alkyl group that may have a substituent or a cycloalkyl group that may have a substituent, and more preferably an alkyl group having 1 to 8 carbon atoms or a monocyclic or polycyclic cycloalkyl group having 5 to 12 carbon atoms.

Hereinafter, specific examples [(I-1) to (1-21) and(II-1) to (II-12)] of the specific base component (c2B) preferably used in the present invention are shown. However, the present invention is not limited to these.

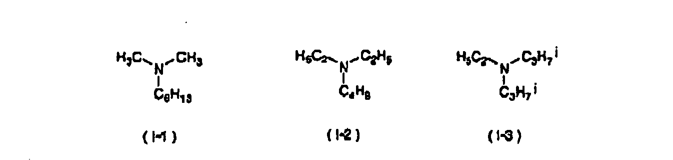

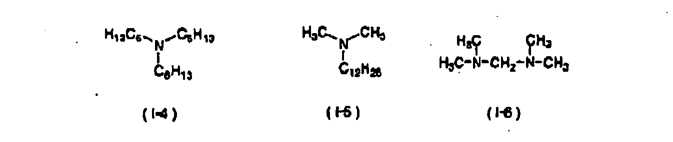

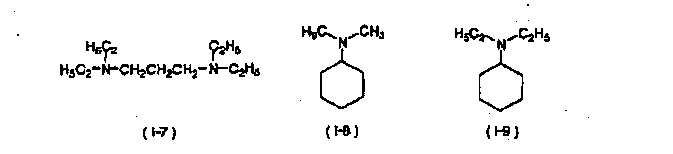

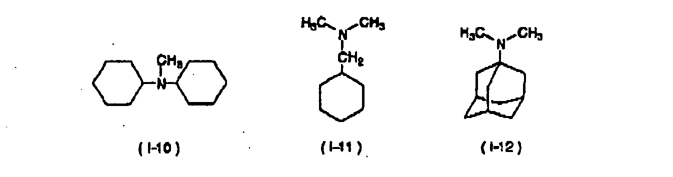

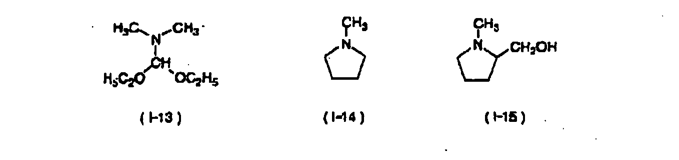

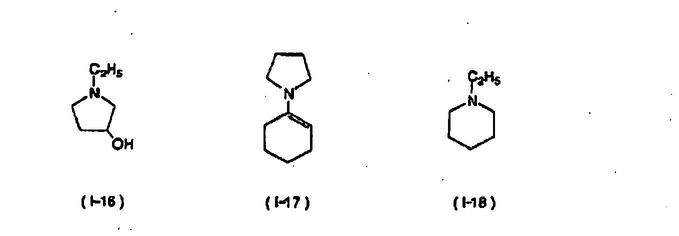

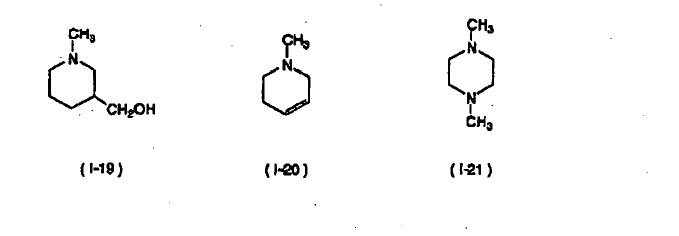

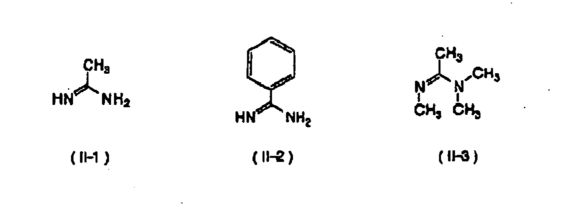

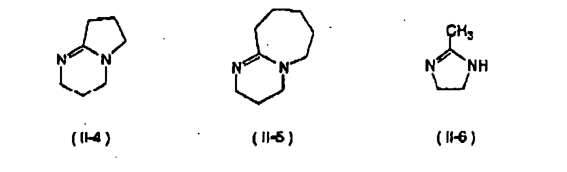

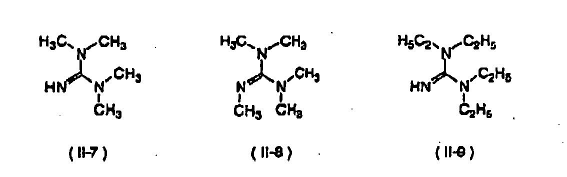

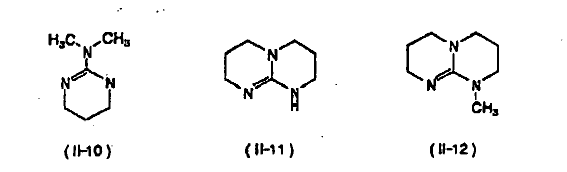

The ink composition of the present invention may be added with only one type of the specific base component (c2B), or a plurality of types thereof in combination.

The content of the Specific base component (c2B) in the ink composition is suitably 0.001 to 10 % by mass, preferably 0.01 to 7 % by mass, and more preferably 0.03 to 5 % by mass with respect to the total solid content of the composition.

And, the employable proportion of the specific base component (c2B) and the compound (b) which generates an acid by irradiation of radiation is within a range between 0.001 and 0.5, and preferably 0.005 and 0.2 at the mole ratio of (c2B)/(b).

### HINDERED AMINE COMPOUND (C3) HAVING A BASIC NITROGEN ATOM, WHEREIN THE NITROGEN ATOM IS SUBSTITUTED WITH AT LEAST TWO TERTIARY ALKYL GROUPS

Firstly, the component (c3) is a hindered amine compound (hereinafter, appropriately called "specific base component (c3)") having a basic nitrogen atom, wherein the nitrogen atom is substituted with at least two tertiary alkyl groups.

Here, the hindered amine compound means an amine compound having a structure serving as a steric hindrance against the basic nitrogen atom.

The specific base component (c3) according to the present invention is preferably a hindered amine compound represented by the following formula (I-3), which is a piperidine compound introduced with two substituents at each second and sixth position.

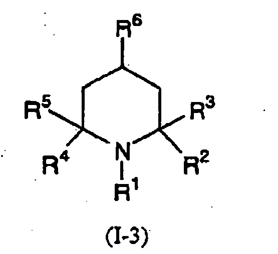

In the formula, R¹ represents a hydrogen atom, an alkyl group, a cycloalkyl group, an aralkyl group, or an acyl group. R² to R⁵ independently represent an alkyl group, a cycloalkyl group, or an aralkyl group. R⁶ represents a hydrogen atom, an alkyl group, a cycloalkyl group, an aralkyl group, a hydroxy group, an -O-CO-R⁷ group, or an - N(R⁸)(R⁹) group. R⁷ represents an alkyl group, a cycloalkyl group, an aralkyl group, or an aryl group. R⁸ and R⁹ independently represent a hydrogen atom, an alkyl group, a cycloalkyl group, an acyl group, an acyloxy group, or an amide group.

Preferably, the alkyl group includes those having 1 to 10 carbon atoms, such as a methyl group, an ethyl group, a propyl group, an n-butyl group, a sec-butyl group, a hexyl group, an octyl group, and a decyl group.

The cycloalkyl group includes those having 3 to 10 carbon atoms, such as a cyclopropyl group, a cyclobutyl group, a cyclopentyl group, a cyclohexyl group, a cyclopentyl group, and a norbornyl group.

The aralkyl group includes those having 7 to 12 carbon atoms, such as a benzyl group, a phenethyl group, and a naphthylmethyl group.

The aryl group includes those having 6 to 15 carbon atoms, such as a phenyl group, a tolyl group, a methoxyphenyl group, a naphthyl group, and an anthryl group.

The acyl group includes those having 2 to 8 carbon atoms; such as an acetyl group, a propanoyl group, a butanoyl group, a pentanoyl group, and a benzoyl group.

The acyloxy group includes groups represented by -CO-O-R¹⁰, such as a methoxycarbonyl group, an ethoxycarbonyl group, a propoxycarbonyl group, and a phenoxycarbonyl group. R¹⁰ is synonymous with the above R⁷.

The amide group includes groups represented by -CO-NH-R¹¹, such as an N-methylamide group, an N-ethylamide group, an N-phenylamide group, and an N-tolylamide group. R¹¹ is synonymous with the above R⁷.

The respective groups above may have further substituents, if introducible. The introducible substituents include linear, branched, or cyclic alkyl groups (such as a methyl group, an ethyl group, a propyl group, an isopropyl group, an n-butyl group, a sec-butyl group, a t-butyl group, a cyclopropyl group, a cyclopentyl goup, and a cyclohexyl group), linear, branched, or cyclic alkoxy groups (such as a methoxy group, an ethoxy group, a propoxy group, a butoxy group, and a hydroxyethoxy group), the abovementioned aryl groups, halogen atoms (a fluorine atom, a chlorine atom, a bromine atom, and an iodine atom), hydroxy groups, carboxyl groups; cyano groups, acyl groups (such as an acetyl group, a propanoyl group, and a benzoyl group), nitro groups, alkylamino groups, dialkylamino groups (the alkyl parts are the same as the above alkyl groups), arylamino groups (the aryl parts are the same as the above aryl groups), and -S-R⁰ groups. Here, R⁰ represents a linear, branched, or cyclic alkyl group, or aryl group.

Moreover, a compound represented by the formula (I-3) may be mutually linked with another compound represented by the formula (I-3) either directly or via a linking group, at any of R¹ to R⁶.

In the formula (I-3), R¹ is preferably an alkyl group that may have a substituent, and more preferably an alkyl group having 1 to 8 carbon atoms.

In the formula (I-3), R² to R⁵ are preferably an alkyl group that may have a substituent, and more preferably an alkyl group having 1 to 4 carbon atoms.

In the formula (1-3), R⁶ is preferably a hydrogen atom, a hydroxy group, an -O-CO-R⁷ group, or an -N(R⁸)(R⁹) group.

Specific examples (I-1) to (I-18) as the specific base component (c3) preferably used in the present invention are shown. However, the present invention is not limited to these.

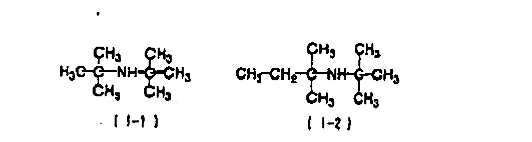

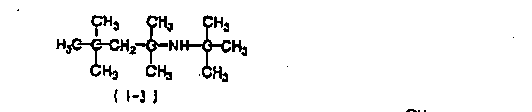

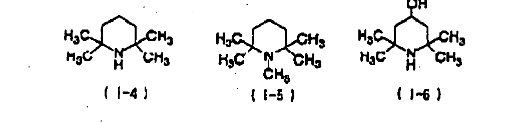

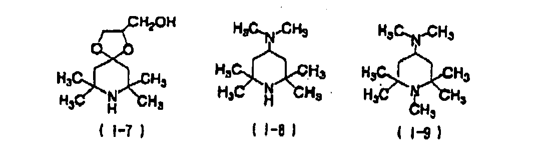

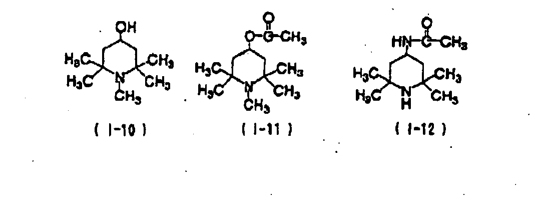

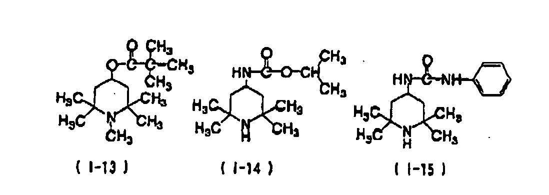

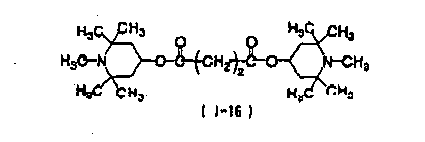

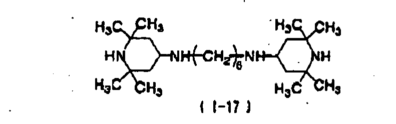

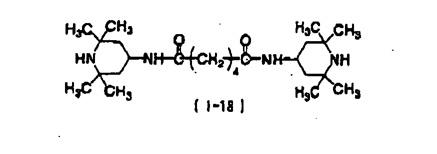

The specific base component (c3) in the present invention further includes those widely used as a hindered amine-based photostabilizer typically in the field of polymer stabilizers.

Specifically, the following are included, any one of which can be used in the present invention:
bis(1,2,2,6,6-pentamethy)-4-piperidyl)sebacate (commercially available under the name of "Tinuvin 765" made by Ciba Speciality Chemicals Inc., and under the name of "Sanol LS-765" made by Sankyo Co., Ltd.), bis(2,2,6,6-tetramethyl-4-piperidyl)sebacatc (commercially available under the name of "Tinuvin 770" made by Ciba Speciality Chemicals Inc., and under the name of "Sanol LS-770" made by Sankyo Co., Ltd.), 2,2,6,6-tetramethyl-4-piperidylbenzoate (commercially available under the name of "Sanol LS-744" made by Sankyo Co., Ltd.), 1,2,2,6,6-pentamethyl-4-piperidylmethacrylate (commercially available under the name of "Adeka Stab LA-82" made by Asahi Denka Kogyo KK), 2,2,6,6-tetramethyl-4-piperidylmethacrylate (commercially available under the name of "Adeka Stab LA-87" made by Asahi Denka Kogyo KK), 1-[2-(3-(3,5-di-tert-butyl-4-hydroxyphenyl)propionyloxy}ethyl]-4-[3-(3,5-di-tert-butyl-4-hydroxyphenyl)propionyloxy]-2,2,6,6-tetramethylpiperidine (commercially available under the name of "Sanol LS-2626" made by Sankyo Co., Ltd.), bis(1,2,2,6,6-pentamethyl-4-piperidyl)2-n-butyl-2-(3,5-di-tert-butyl-4-hydroxybenzyl)malonate (commercially available under the name of "Tinuvin" 144 made by Ciba Speciality Chemicals Inc.), bis(1,2,2,6,6-pentamethyl-4-piperidyl)4-methoxybenzylidene malonate (commercially available under the name of "Sanduvor PR-31" made by Clariant),
2" ,2" ,6" ,6" -tetramethyLcyclododecanspiro-2'-oxazolidine-5'-spiro-4"-piperazine-4'-one (moreover, this may also be named 1-oxa-3,8-diaza-2-undecamethyleno-4-oxo-7,7,9,9-tetramethylspiro[4.5]decane; commercially available under the name of "Hostavin N 20" made by Hoechst), 8-acetyl-3-dodecyl-7,7,9,9-tetramethyl-1,3,8-triazaspiro[4.5]decane-2,4-dione (commercially available under the name of "Sanol LS-440" made by Sankyo Co., Ltd.),
tetrakis(1,2,2,6,6-pentamethyl-4-piperidyl)1,2,3,4-butanetetracarboxylate (commercially available under the name of "Adeka Stab LA-52" made by Asahi Denka Kogyo KK), tetrakis(2,2,6,6-tetramethyl-4-piperidyl)1,2,3,4- , butanetetracazboxylate (commercially available under the name of "Adeka Stab LA-57" made by Asahi Denka Kogyo KK), a mixed ester compound of 1,2,3,4-butanctetracarboxylate, 1,2,2,6,6-pentamethyl-4-piperidinol, and 1-tridecanol (commercially available under the name of "Adeka Stab LA-62" made by Asahi Denka Kogyo KK), a mixed ester compound of 1,2,3,4-butanetetracarboxylate, 2,2,6,6-tetramethyl-4-piperidinol, and 1-tridecanol (commercially available under the name of "Adeka Stab LA-67" made by Asahi Denka Kogyo KK), a mixed ester compound of 1,2,3,4-butanetetracarboxylate, 1,2,2,6,6-pentamethyl-4-piperidinol, and 3,9-bis(2-hydroxy-1,1-dimethylethyl)-2,4,8,10-tetraoxaspiro[5.5]undecane (commercially available under the name of "Adeka Stab LA-63" made by Asahi Denka Kogyo KK), a mixed ester compound of 1,2,3,4-butanetetracarboxylate,2,2,6,6-tetramethy-4-piperidinol, and 3,9-bis(2-hydroxy-1,1-dimethylethyl)-2,4,8,10-tetraoxaspiro[5.5]undecane (commercially available under the name of "Adeka Stab LA-68" made by Asahi Denka Kogyo KK),
a polycondensate of dimethylsuccinate and 1-(2-bydroxyethyl)-4-hydroxy-2,2,6,6-tetramethylpiperidine (this may also be named 4-hydroxy-2,2,6,6-tetramethyl)-1-piperidinoethanol/succinate copolymer; commercially available under the name of "Tinuvin 622" made by Ciba Speciality Chemicals Inc.), a polycondensate of N,N'-bis(2,2,6,6-tetramethyl-4-piperidyl)hexamethylenediamine and 1,2-dibromoethane (this may also be named poly[N,N' -di(2,2,6,6-tetramethyl-4-piperidyl)hexamethylenediaminoN' -ethylene]: commercially available under the name of "Spinuvex A-36" made by Montefluos), poly[{6-(1,1,3,3-tetramethylbutyl)imino1,3,5-triazine-2,4-diyl}{(2,2,6,6-tetramethyl-4-pipendyl)imino}hexamethylene{(2,2,6,6-tetramethyl-4-piperidyl)imino}] (commercially available under the name of "Chimassorb 944 made by Ciba Speciality Chemicals Inc.), poly[(6-morpholino-1,3,5-triazine-2,4-diyl){(2,2,6,6-tetramethyl-4-piperidyl)imino}hexamethylene{(2,2,6,6-tetramethyl-4-piperidyl)imino}] (commercially available under the name of "Cyasorb UV 3346" made by American Cyanamid), and the like.

The ink composition of the present invention may be added with only one type of the above hindered amine compounds serving as the specific base component (c3), or a plurality of types thereof in combination.

The content of the specific base component (c3) is suitably 0.001 to 10 % by mass, preferably 0.01 to 7 % by mass, and more preferably 0.03 to 5% by mass with respect to the total solid content of the composition.

Moreover, the employable proportion of the specific base component (c3) and the compound (b) which generates an acid by irradiation of radiation, is within a range between 0.001 and 0.5, and preferably 0.005 and 0.2 at the mole ratio of (c3)/(b).

### COMPOUND (C4) HAVING A BASIC NITROGEN ATOM AND AN ETHER LINKAGE IN THE MOLECULE

Firstly, the component (c4) is a compound (hereinafter, appropriately called "specific base component (c4)") having a basic nitrogen atom and an ether linkage in the molecule.

The specific base component (c4) in the present invention is a compound which has a basic nitrogen atom in the molecule, and an ether linkage for at least one of each, or which may have a plurality thereof.

The specific base component (c4) is a compound having a low volatility since it has a basic nitrogen in the molecule and the boiling point is relatively high. Consequently, the concentration variance due to the volatilization in the ink composition is less, and an effect of stably maintaining the function of the basicity, that is the ink stability, is demonstrated, and the decrease in this stability over time can be effectively suppressed. Moreover, after printing this ink composition on a recording medium, there is also an advantage of it remaining in the cured ink without being volatilized, and decreasing the odor derived from the basic nitrogen compound.

Here, the basic nitrogen atom denotes a nitrogen atom which is in the unoxidized state, and is capable of bonding with carbon atoms only, and has one lone electron-pair.

Preferred examples of such a specific base component (c4) include a compound represented by the following formula (I-4), the formula (II-4), or the formula (III-4).

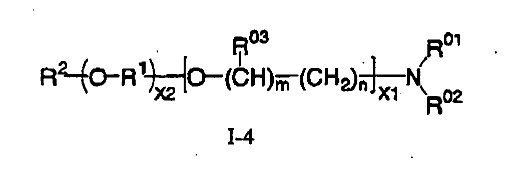

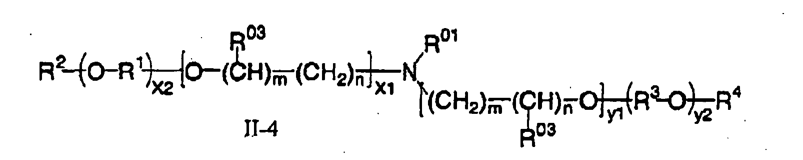

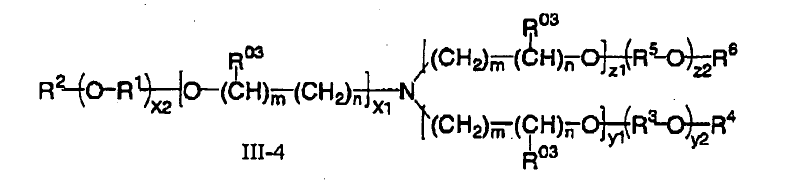

In the formula (I-4) through the formula (III-4), R⁰¹ and R⁰² indcpcndently represent a hydrogen atom, an alkyl group, a cycloalkyl group, an aryl group, or an aralkyl group. R⁰³ represents a hydrogen atom, or an alkyl group. R¹, R³ and R⁵ independently represent an alkylene group, a cycloalkylene group, or an aralkylene group. R², R⁴ and R⁶ independently represent a hydrogen atom, an alkyl group, a cycloalkyl group, an aralkyl group, an aryl group, or an -N(R⁷)(R⁸) group. Here, R⁷ and R⁸ independently represent a hydrogen atom, an alkyl group, a cycloalkyl group, or an aralkyl goup. x1 x2, y1, y2, z1, and z2 independently represent an integer of 0 to 20. m and n independently represent an integer of 0 to 6. However, x1 and x2, y1 and y2, z1 and z2, and m and n are not 0 at the same time, and R², R⁴ and R⁶ is not a hydrogen atom if the corresponding x2, y2, or z2 is 0. Moreover, any two of R⁰¹, R⁰², R⁰³ and R² in the formula (1-4), any two of R⁰¹, R⁰³, R² and R⁴ in the formula (II-4), or any two of R⁰³, R², R⁴ and R⁶ in the formula (III-4) may be bonded to each other to form a ring.

In the case where any two of R⁰¹, R⁰², R⁰³ and R² in the formula (I-4), any two of R⁰¹, R⁰³, R² and R⁴ in the formula (II-4), or any two of R⁰³, R², R⁴ and R⁶ in the formula (III-4) are bonded to each other to form a ring, examples of the ring formed include a pyrrolidine ring, a piperidine ring, a pyrazine ring, a 1,3-diazacyclopentene ring, a 1,3-diazacyclohexene ring, and a 1,3-diazacycloheptane ring.

Preferably, the alkyl group includes those having 1 to 10 carbon atoms, such as a methyl group, an ethyl group, a propyl group, an n-butyl group, a sec-butyl group, a hexyl group, an octyl group, and a decyl group.

The cycloalkyl group includes those having to 10 carbon atoms, such as a cyclopropyl group, a cyclobutyl group, a cyclopentyl group, a cyclohexy) group, a cycloheptyl group, and a norbornyl group.

The aralkyl group includes those having 7 to 12 carbon atoms, such as a benzyl group, a phenethyl group, and a naphthylmethyl group.

The aryl group includes those having 6 to 15 carbon atoms, such as a phenyl group, a tolyl group, a methoxyphenyl group, a naphthyl group, and an anthryl group.

The alkylene group includes those having I to 10 carbon atoms, such as an ethylene group, a propylene group, a butylene group, a hexylene group, an octylene group, and a 1,4-cyclohexyldimethylene group.

The cycloalkylene group includes those having 5 to 12 carbon atoms, such as a cyclopentylene group, a cyclohexylene group, and a tricyclodecanylene group.

Moreover, these groups may have substituents. Here, the introducible substituents include linear, branched, or cyclic alkyl groups (such as a methyl group, an ethyl group, a propyl group, an isopropyl group, an n-butyl group, a sec-butyl group, a t-butyl group, a cyclopropyl group, a cyclopentyl group, and a cyclohexyl group), linear, branched, or cyclic alkoxy groups (such as a methoxy group, an ethoxy group, a propoxy group, a butoxy group, and a hydroxyethoxy group), the above aryl groups, halogen atoms (a fluorine atom, a chlorine atom, a bromine atom, and an iodine atom), hydroxy groups, carboxyl groups, cyano groups, acyl groups (such as an acetyl group, a propanoyl group, and a benzoyl group), nitro groups, alkylamino groups, dialkylamino groups (the alkyl groups are the same as the above), arylamino groups (the aryl groups are the same as the above), and -S-R0⁰ groups. Here, R⁰ represents a linear, branched, or cyclic alkyl group, or aryl group.

In the formula (I-4) through the formula (III-4), R⁰¹ and R⁰² preferably represent an alkyl group, a cycloalkyl group, and an aryl group, and more preferably an alkyl group having 1 to 8 carbon atoms (such as a methyl group, an ethyl group, a propyl group, a butyl group, a hexyl group, and an octyl group), a cycloalkyl group having 5 to 8 carbon atoms (such as a cyclopentyl group, a cyclohexyl group, and a cycloheptyl group), and an aryl group having 6 to 10 carbon atoms (such as a phenyl group, a tolyl group, and a naphthyl group).

Moreover, R⁰³ preferably represents a hydrogen atom, an alkyl group having 1 to 4 carbon atoms (a methyl group, an ethyl group, a propyl group, and a butyl group), and more preferably a hydrogen atom, and a methyl group.

R¹ R³ and R⁵ preferably represent an alkylene group and a cycloallcylene group, and more preferably an alkylene group having 2 to 8 carbon atoms (such as an ethylene group, a propylene group, a butylene group, a hexylene group, an octylene group, and a 1,4-cyclohexyldimethylene group), and a cycloalkylene group having 5 to 10 carbon atoms (such as a cyclopentylene group, a cyclohexylene group, and a tricyclodecanylene group).

R², R⁴ and R⁶ preferably represent a hydrogen atom, an alkyl group, a cycloalkyl group, and an aryl group, and more preferably a hydrogen atom and an alkyl group having 1 to 4 carbon atoms (a methyl group, an ethyl group, a propyl group, and a butyl group).

The preferable groups may respectively have further substituents.

Hereinafter, specific examples (I-3) to (I-40), (II-1) to (II-13), and (III-1) to (III-8) of the specific base component (c4) suitably used in the present invention are shown. However, the present invention is not limited to these.

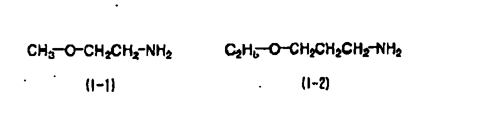

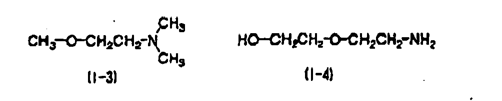

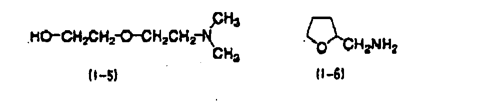

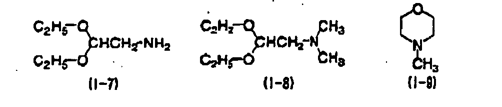

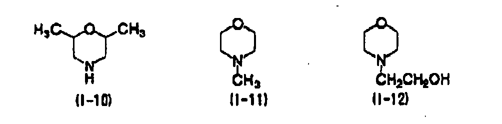

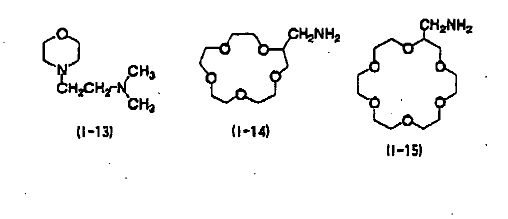

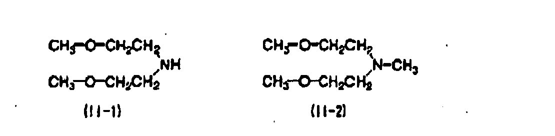

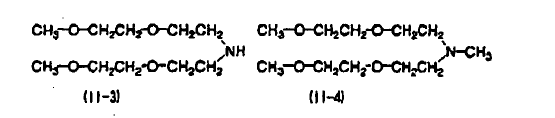

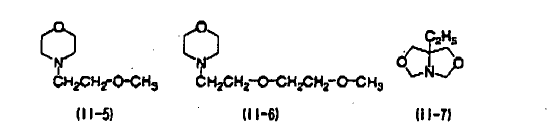

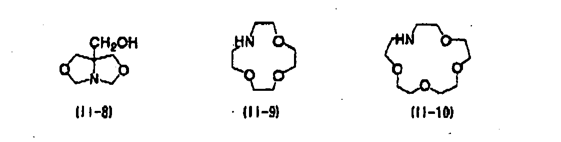

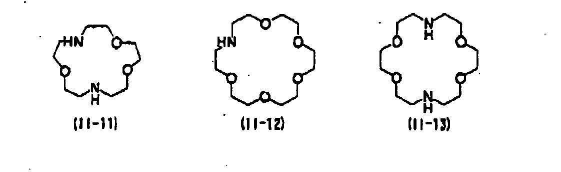

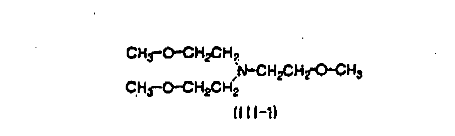

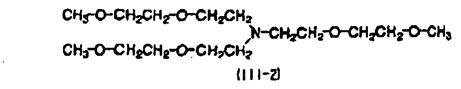

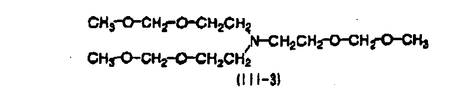

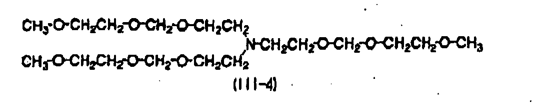

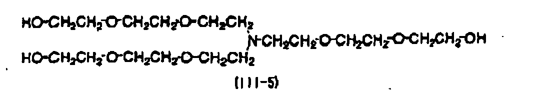

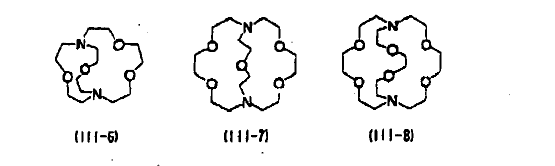

The ink composition of the present invention may be added with only one type of the specific base component (c4), or a plurality of types thereof in combination.

The content of the specific base component (c4) in the ink composition is suitably 0.001 to 10% by mass, preferably 0.01 to 7 % by mass, and more preferably 0.03 to 5 % by mass with respect to the total solid content of the composition.

Moreover, the employable proportion of the specific base component (c4) and the compound (b) which generates an acid by irradiation of radiation which is described later, is within a range between 0.001 and 0.5, and preferably 0.005 and 0.2 at the mole ratio of (c4)/(b).

### CATIONIC POLYMERIZABLE COMPOUND (a)

The cationic polymerizable compound (a) used in the present invention is not specifically limited as long as it is a compound which causes a polymerization reaction by an acid generated from a photo-acid generator (b) described later, and is cured. Various cationic polymerizable monomers publicly knows as a photo cationic polymerizable monomer may be used. Examples of the cationic polymerizable monomer include epoxy compounds, vinylether compounds, and oxetane compounds described in JP-A No.6-9714, JP-A Nos. 2001-31892, 2001-40068, 2001-55507, 2001-310938, 2001-310937, 2001-220526, and the like.

The epoxy compound includes an aromatic epoxide, an alicyclic epoxide, and an aliphatic epoxide.

The aromatic epoxide includes a di- or poly-glycidyl ether produced by a reaction between epichlorohydrin and polyphenol having at least one aromatic nucleus, or an alkylene oxide adduct thereof. Examples thereof include a di- or poly-glycidyl ether of bisphenol A or its alkylene oxide adduct, di- or poly-glycidyl ether of hydrogenated bisphenol A or its alkylene oxide adduct, and novolac type epoxy resin. Here, the alkylene oxide includes ethylene oxide and propylene oxide.

The alicyclic epoxide preferably includes a cyclohexene oxide or cyclopentene oxide comprising compound obtained by epoxidizing a compound having at least one cycloalkane ring such as a cyclohexene or cyclopentene ring, by a suitable oxidizer such as hydrogen peroxide and peroxy acid.

The aliphatic epoxide includes a di- or poly-glycidyl ether of aliphatic polyalcohol or its alkylene oxide adduct. The representative examples thereof include: diglycidyl ether of alkylene glycol such as diglycidyl ether of ethylene glycol, diglycidyl ether of propylene glycol, or diglycidyl ether of 1,6-hexanediol; polyglycidyl ether of polyalcohol such as di- or tri-glycidyl ether of glycerin or its alkylene oxide adduct; and diglycidyl ether of polyalkylene glycol represented by diglycidyl ether of polyethylene glycol or its alkylene oxide adduct, and diglycidyl ether of polypropylene glycol or its alkylene oxide adduct. Here, the alkylene oxide includes ethylene oxide and propylene oxide.

The epoxy compound may be either monofunctional or polyfunctional.

Examples of the monofunctional epoxy compound used in the present invention include phenylglycidyl ether, p-tert-butylphenylglycidyl ether, butylglycidyl ether, 2-ethylhexylglycidyl ether, allyl glycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Moreover, examples of the polyfunctional epoxy compound include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-meta-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate, 3,4-epoxy-6-methylcyclohexyl-3',4'-epoxy-6'-methylcyclohexanecarboxylate, methylenebis(3,4-epoxycyclohexanc), dicyclopentadienediepoxide, di(3,4-epoxycyclohexylmethyl)ether of ethylene glycol, ethylenebis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,1,3-tetradecadiene dioxide, limonene dioxide, 1,2,7,8-diepoxyoctane, and 1,2,5,6-diepoxycyclooctane.

Among these epoxy compounds, aromatic epoxide and alicyclic epoxide are preferred from the viewpoint of superior cure rate, in particular alicyclic epoxide is preferred.

Examples of the vinylether compound include: di- or tri-vinylether compounds such as ethylene glycol divinylether, diethylene glycol divinylether, triethylene glycol divinylether, propylene glycol divinylether, dipropylene glycol divinylether, butanediol divinylether, hexanediol divinylether, cyclohexanedidimethanol divinylether, and trimethylolpropane trivinylether; and monovinylether compounds such as ethylvinylether, n-butylvinylether, isobutylvinylether, octadecylvinylether, cyclohexylvinylether, hydroxybutylvinylether, 2-ethylhexylvinylether, cyclohexanedimethanol monovinylether, n-propylvinylether, isppropylvinylether, isopropenylether-o-propylene carbonate, dodecylvinylether, diethylene glycol monovinylether, and octadecylvinylether.

The vinylether compound may be either monofunctional or polyfunctional.

Specifically, examples of the monofunctional vinylether include methylvinylether, ethylvinylether, propylvinylether, n-butylvinylether, t-butylvinylether, 2-ethylhexylvinylether, n-nonylvinylether, laurylvinylether, cyclohexylvinylether, cyclohexylmethylvinylether, 4-methylcyclohexylmethylvinylether, benzylvinylether, dicyclopentenylvinylether, 2-dicyclopentenoxy ethylvinylether, methoxyethylvinylether, ethoxyethylvinylether, butoxyethylvinylether, methoxyethoxyethylvinylether, ethoxyethoxyethylvinylether, methoxypolycthylene glycol vinylether, tetrahydrofurylvinylether, 2-hydroxyethylvinylether, 2-hydroxypropylvinylether, 4-hydroxybutylvinylether, 4-hydroxymethylcyclohexylmethylvinylether, diethylene glycol monovinylether, polyethylene glycol vinylether, chloroethylvinylether, chlorobutylvinylether, chloroethoxyethylvinylether, phenylethylvinylether, and phenoxypolyethylene glycol vinylether.

Moreover, examples of the polyfunctional vinylether include: divinylethers such as ethylene glycol divinylether, diethylene glycol divinylether, polyethylene glycol divinylether, propylene glycol divinylether, butylene glycol divinylether, hexanediol divinylether, bisphenol A alkylene oxide divinylether, and bisphenol F alkylene oxide divinylether; and polyfunctional vinylethers such as trimethylolethane trivinylethcr, trimethylolpropane trivinylether, ditrimethylolpropane tetravinylether, glycerin trivinylether, pentaerythritol tetravinylether, dipentaerythritol pentavinylether, dipentaerythritol hexavinylether, ethylene oxide adduct trimethylolpropane trivinylether, propylene oxide adduct trimethylolpropane trivinylether, ethylene oxide adduct ditrimethylolpropane tetravinylether, propylene oxide adduct ditrimethylolpropane tetravinylether, ethylene oxide adduct pentaerythritol tetravinylether, propylene oxide adduct pentaerythritol tetravinylcther, ethylene oxide adduct dipentaerythritol hexavinylether, and propylene oxide adduct dipentaerythritol hexavinylether.

As the vinylether compound, from the viewpoint of curability, adhesiveness onto the recording medium, and surface hardness of the formed image, di- or tri- vinylether compounds are preferred, in particular divinylether compounds are preferred.

The oxetane compound in the present invention denotes a compound having oxetane rings, and publicly known oxetane compounds such as described in JP-A Nos. 2001-220526, 2001-310937, and 2003-341217 may be optionally selected and used.

The oxetane ring-comprising compound employable for the ink composition of the present invention is preferably a compound having 1 to 4 oxetane rings in its structure. By using such a compound, the viscosity of the ink composition can be readily kept within a range of excellent handling properties, and a high adhesiveness of the cured ink onto the recording medium can be obtained.

The compound having 1 or 2 oxetane rings in the molecule includes the compounds represented by the following formulae (I) through (3).

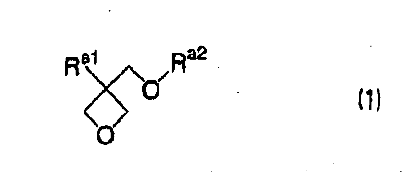

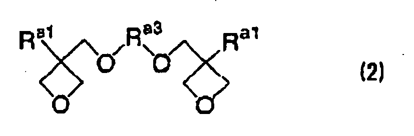

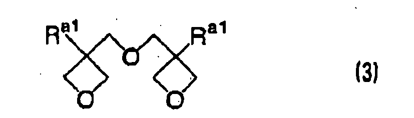

In the formulae (1) through (3), R^{a1} represents a hydrogen atom, an alkyl group having 1 to 6 carbon atoms, a fluoroalkyl group having 1 to 6 carbon atoms, an allyl group, an aryl group, a furyl group, or a thienyl group. If there are two R^{a1} in a molecule, they may be the same or different.

The alkyl group includes a methyl group, an ethyl group, a propyl group, and a butyl group. Preferred examples of the fluoroalkyl group include the alkyl groups wherein any one of the hydrogens is substituted with a fluorine atom.

In the formula (1), R^{a2} represents a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, and an N-alkylcarbamoyl group having 2 to 6 carbon atoms. The alkyl group includes a methyl group, an ethyl group, a propyl group, and a butyl group. The alkenyl group includes a 1-propenyl group, a 2-propenyl group, a 2-methyl-1-propenyl group, a 2-methyl-2-propenyl group, a 1-butenyl group, a 2-butenyl group, and a 3-butenyl group. The group having an aromatic ring includes a phenyl group, a benzyl group, a fluorobenzyl group, a methoxybenzyl group, and a phenoxyethyl group. The alkylcarbonyl group includes an ethylcarbonyl group, a propylcarbonyl group, and a butylcarbonyl group. The alkoxycarbonyl group includes an ethoxycarbonyl group, a propoxycarbonyl group, and a butoxycarbonyl group.

The N-alkylcarbamoyl group includes an ethylcarbamoyl group, a propylcarbamoyl group, a butylcarbamoyl group, and a pentylcarbamoyl group.

In the formula (2), R^{a3} represents a linear or branched alkylene group, a linear or branched poly(alkyleneoxy) group, a linear or branched unsaturated hydrocarbon group, a carbonyl group, an alkylene group including a carbonyl group, an alkylene group including a carboxyl group, an alkylene group including a carbamoyl group, or the following groups. Examples of the alkylene group include an ethylene group, a propylene group, and a butylene group. The poly(alkyleneoxy) group includes a poly (ethyleneoxy) group and a poly (propyleneoxy) group. The unsaturated hydrocarbon group includes a propenylene group, a methylpropenylene group, and a butenylene group.

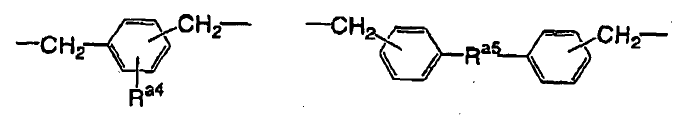

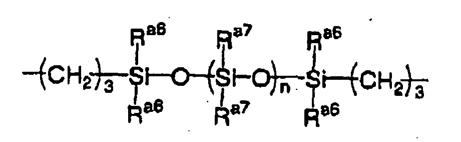

In the above polyvalent groups, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkylcarboxyl group, a carboxyl group, or a carbamoyl group.

R^{a5} represents an oxygen atom, a sulfur atom, a methylene group, NH, SO, SO₂, C(CF₃)₂, or C(CH₃)₂.

R^{a6} represents an alkyl group or an aryl group having 1 to 4 carbon atoms, n is an integer of 0 to 2000.

R^{a7} represents an alkyl group or an ar aliphatic yl group having 1 to 4 carbon atoms, or a monovalent group having the following structure.

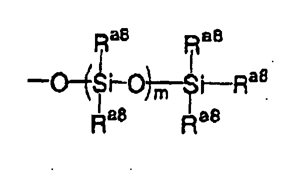

In the above monovalent group, R^{a8} represents an alkyl group or aryl group having 1 to 4 carbon atoms. m is an integer of 0 to 100.

The compound having 3 or 4 oxetane rings includes the compounds represented by the following formula (4).

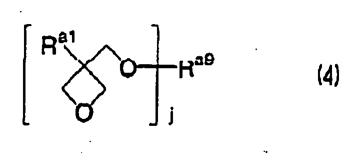

In the formula (4), R^{a1} is synonymous with R^{a1} in the formula (1). And, R^{a9} is a monovalent linking group. Examples thereof include a branched alkylene group having 1 to 12 carbon atoms such as groups represented by A to C below, a branched poly(alkyleneoxy) group such as a group represented by D below, and a branched polysiloxy group such as a group represented by E below. j is 3 or 4.

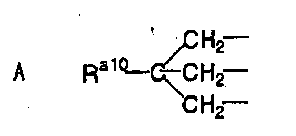

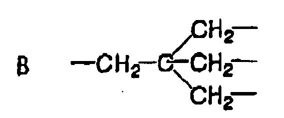

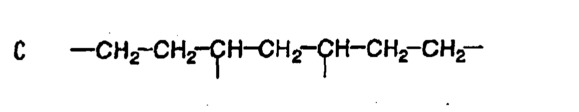

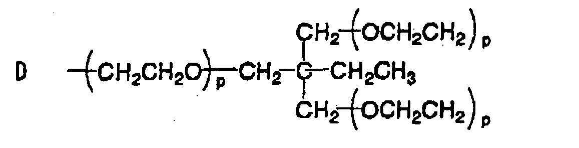

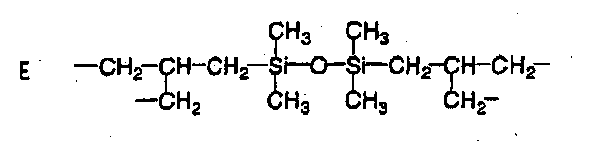

In the above A, R^{a10} represents a methyl group, an ethyl group, and a propyl group. In the above D, p is an integer of 1 to 10.

Another aspect of the oxetane compound suitably used in the present invention includes a compound represented by the formula (5) having an oxetane ring on the side chain.

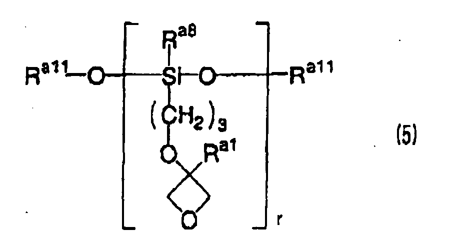

in the formula (5), R^{a1} is synonymous with R^{a1} in the formula (1). And, R^{a8} is synonymous with R^{a8} in the formula (4). R^{a11} represents an alkyl group having 1 to 4 carbon atoms such as a methyl group, an ethyl group, a propyl group, or a butyl group, or a trialkylsilyl group. r is 1 to 4.

Examples of such an oxetane ring-comprising compound are described in detail in JP-A No. 2003-341217, paragraphs [0021] to [0084]. The compounds described therein can also be suitably used in the present invention.

Among the oxetane compounds used in the present invention, a compound having one oxetane ring is preferably used from the viewpoint of viscosity and cohesiveness of the ink composition.

In the ink composition of the present invention, one type of these polymerizable compounds may be solely used, or a plurality of types thereof may be used in combination. However, preferably, a vinylether compound and at least one type of compound selected from oxctane compounds and epoxy compounds, are used in combination from the viewpoint of effectively suppressing the shrinkage of the ink at the time of being cured.

The content of the cationic polymerizable compound (a) in the ink composition is suitably 10 to 95 % by mass, preferably 30 to 90 % by mass, and more preferably 50 to 85 % by mass with respect to the total solid content of the composition.

### COMPOUND (B) WHICH GENERATES AN ACID BY IRRADIATION OF RADIATION

The ink composition of the present invention comprises compound (hereinafter, suitably called "photo-acid generator") which generates an acid by irradiation of radiation.

As a photo-acid generator employable in the present invention, there may be suitably selected and used a photoinitiator of photo cation polymerization, a photoinitiator of photo radical polymerization, a photo decolorizing agent for a pigment, a photochromic agent, and compounds which generate an acid by irradiation of light used for a microresist and the like (ultraviolet rays of 400 to 200 nm, far ultraviolet rays, particularly preferably, g rays, h rays, i rays, KrF excimer laser beams), ArF excimer laser beams, electron beams, X rays, molecular beams, ion beams, or the like.

Examples of such a photo-acid generator include a compound that is decomposed by irradiation of radiation to generate an acid, such as onium salts such as a diazonium salt, an ammonium salt, a phosphonium salt, an iodonium salt, a sulfonium salt, a selenonium salt, and an arsonium salt, an organic halogen compound, an organic metal/organic halogen compound, a photo-acid generator having an o-nitrobenzyl type protective group, a compound such as iminosulfonate that is photodecomposed to generate a sulfonic acid, a disulphone compound, a diazoketosulphone, and a diazodisulphone compound.

Moreover, other examples of the compound which generates an acid by irradiation of active rays or radiation used for the present invention include onium salts such as: a diazonium salt described in S. I. Schlesinger, Photogr. Sci. Eng., 18,387 (1974), T. S. Bal etal, Polymer, 21, 423 (1980), and the like; an ammonium salt described in US Patent Nos. 4,069,055, 4,069,056 and Re27,992, JP-A No.3-140,140, and the like; a phosphonium salt described in D. C. Necker etal, Macromolecules, 17,2468 (1984), C. S. Wen etal, Tech, Proc. Conf. Rad. Curing ASIA, p478 Tokyo, Oct (1988), US Patent Nos. 4,069,055 and 4,069,056, and the like; an iodonium salt described in J. V. Crivello etal, Macromolecules, 10(6), 1307 (1977), Chem. & Eng. News, Nov.28, p31 (1988), European Patent Nos. 104,143, 339,049, 410,201, JP-A No.2-150848, JP-A No.2-296514, and the like;

Aa sulfonium salt described in J. V. Crivello etal, Polymer J. 17,73 (1985), J. V. Crivello etal. J. Org. Chem., 43,3055 (1978), W. R. Watt etal, J. Polymer Sci., Polymer Chem. Ed., 22, 1789 (1984), J. V. Crivello etal, Polymer Bull., 14,279 (1985), J. V. Crivello etal, Macromolecules, 14(5), 1141 (1981), J. V. Crivello etal, J. Polymer Sci., Polymer Chem. Ed., 17,2877 (1979), European Patent Nos. 370,693, 161,811, 410,201, 339,049, 233,567, 297,443, and 297,442, US Patent Nos. 3,902,114, 4,933,377, 4,760,013,4,734,444, and 2,833,827, German Patent Nos. 2,904,626, 3,604,580, and 3,604,581, JP-A Nos. H7-28237 and 8-27102, and the like;

A selenonium salt described in J. V. Crivello etal, Macromolecules, 10(6), 1307 (1977), J. V. Crivello etal, J. Polymer Sci., Polymer Chem. Ed., 17,1047 (1979), and the like; an arsonium salt described in C. S. Wen etal, Tech, Proc. Conf. Rad. Curing ASIA, p478 Tokyo, Oct (1988), and the like; an organic halogen compound described in US Patent No. 3,905,815, JP-B No.46-4605, JP-A S48-36281, JP-A No.55-32070, JP-A No.60-239736, JP-A No.61-169835, JP-A No.61-169837, JP-A No.62-58241, JP-A No.62-212401, JP-A No.63-70243, JP-A No.63-298339, and the like; an organic metal/organic halogen compound described in K. Meier et al, J. Rad. Curing,13(4), 26 (1986), T. P. Gill et al, Inorg. Chem., 19,3007 (1980), D. Astruc, Acc. Chem. Res., 19(12), 377 (1896), JP-A No.2-161445, and the like;
a photo-acid generator having an o-nitrobenzyl type protective group described in S. Hayase etal, J. Polymer Sci., 25,753 (1987), E. Reichmanis etal, J. Polymer, Sci., Polymer Chem. Ed., 23,1 (1985), Q. Q. Zhu etal, J. Photochem., 36,85,39,317 (1987), B. Amit etal, Tetrahedron Lett., (24)2205 (1973), D. H. R Barton etal, J. Chem. Soc., 3571 (1965), P. M. Collins et al, J. Chem. Soc., Perkin 1, 1695 (1975), M. Rudinstein etal, Tetrahedron Lett., (17), 1445 (1975), J. W. Walker etal, J. Am. Chem. Soc., 110,7170 (1988), S. C. Busman etal, J. Imaging Technol., 11(4), 191 (1985), H. M. Houlihan etal, Macromolecules, 21,2001 (1988), P. M. Collins etal, J. Chem. Soc., Chem. Commun., 532 (1972), S. Hayase etal, Macromolecules, 18,1799 (1985), E. Reichmanis etal, J. Electrochem. Soc., Solid State Sci.Technol.,130(6), F. M. Houlihan etal, Macromolecules, 21,2001 (1988), European Patent Nos. 0290,750, 046,083, 156,535, 271,851, and 0,388,343, US Patent Nos. 3,901,710 and 4,181,531, JP-A No.60-198538, JP-A No.53-133022, and the like;

A compound such as iminosulfonate that is photodecomposcd to generate a sulfonic acid described in M. TUNOOKA etal, Polymer Preprints Japan, 35(8), G. Berner etal, J. Rad. Curing, 13(4), W. J. Mijs etal, Coating Technol., 55(697), 45(1983), Akzo, H. Adachi etal, Polymer Preprints, Japan, 37(3). European Patent Nos. 0199,672, 84515, 044,115, 618,564, and 0101,122, US Patent Nos. 4,371,605 and 4,431,774, JP-A No.64-18143, JP-A No.2-245756, JP-A No.3-140109, and the like; a disulphone compound described in JP-A No.61-166544, JP-A No.2-71270 and the like; and a diazoketosulphone and diazodisulphone compound described in JP-A Nos. H3-103854, 3-103856, and 4-210960, and the like.

Moreover, there may be employable compounds in which groups or compounds which generate an acid by these rays are introduced into a main chain or side chain of a polymer, such as compounds described in M. E. Woodhouse et al, J. Am. Chem. Soc., 104,5586 (1982), S. P. Pappas et al, J. Imaging Sci., 30(5), 218(1986), S. Kondo etal, Makromol. Chem., Rapid Commun., 9,625 (1988), Y. Yamada etal, Makromol. Chem., 152, 153, 163 (1972), J. V. Crivello et al, J. Polymer Sci., Polymer Chem. Ed., 17,3845 (1979), US Patent No. 3,849,137, German Patent No. 3914407, JP-A No.63-26653, JP-A No.55-164824, JP-A No.62-69263, JP-A No.63-146038, JP-A No.63-163452, JP-A No.62-153853, JP-A No.63-146029, and the like.

Furthermore, there may be employable compounds which generates an acid by rays described in V. N. R. Pillai, Synthesis, (1), 1 (1980), A. Abad etal, Tetrahedron Lett., (47) 4555 (1971), D. H. R. Barton et al, J. Chem. Soc., (c1),329(1970), US Patent No. 3,779,778, European Patent No. 126,712, and the like.

Preferred compounds of the photo-acid generator (compound (b)) employable for the present invention include compounds represented by the following formulae (b1), (b2), and (b3).

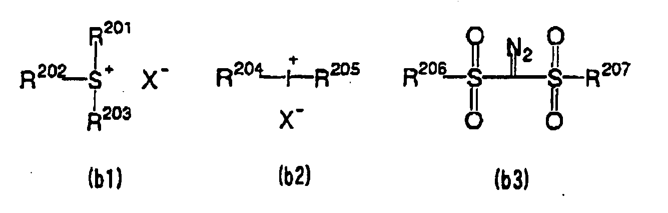

In the formula (b1), R²⁰¹, R²⁰² and R²⁰³ independently represent an organic group.

X⁻ represents a non-nucleophilic anion. Preferred examples thereof include a sulphonate anion, a carboxylate anion, a bis(akylsulfonyl)amide anion, a tris(alkylsulfonyl)methide anion, BF₄⁻, PF₆⁻, SbF₆⁻, and a group shown below, and preferably an organic anion having carbon atoms.

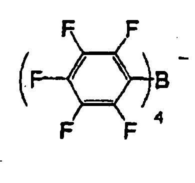

Preferred organic anions include organic anions shown by the following formulae.

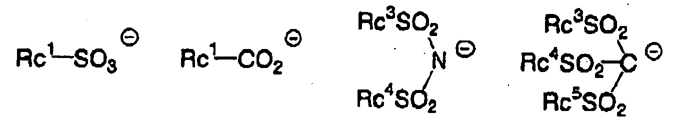

Rc¹ represents an organic group.

The organic group represented by Rc¹ include those having 1 to 30 carbon atoms, preferably an alkyl group, a cycloalkyl group, an aryl group, or a plurality thereof linked by a linking group such as a single bond, -O- -CO₂-, -S-, -SO₃-, -SO₂N(Rd¹)-, and the like. Rd¹ represents a hydrogen atom, or an alkyl group.

These organic groups may further have substituents.

Rc³ ,Rc⁴ and Rc⁵ independently represent an organic group.

The organic group represented by Rc³ ,Rc⁴, or Rc⁵ preferably includes the same organic groups preferred for Rc¹, and most preferably a perfluoroalkyl group having 1 to 4 carbon atoms.

Rc³ and Rc⁴ may be bonded to form a ring.

The group formed by bonding Rc³ and Rc⁴ includes an alkylene group and an arylene group, and preferably a perfluoroalkylene group having 2 to 4 carbon atoms.

The organic group represented by Rc¹ and Rc³ to Rc⁵ most preferably includes an alkyl group having the first position substituted with a fluorine atom or a fluoroalkyl group, and a phenyl group having the first position substituted with a fluorine atom or a fluoroalkyl group. By having a fluorine atom or a fluoroalkyl group, the acidity of the acid generated by photo irradiation is increased, and the sensitivity is improved.

In the formula (b1), the number of carbon atoms of an organic group represented by R²⁰¹, R²⁰², or R²⁰³ is generally 1 to 30, and preferably 1 to 20.

And, any two of R²⁰¹ to R²⁰³ may be bonded to form a ring structure, and may include an oxygen atom, a sulfur atom, an ester bond, an amide bond, or a carbonyl group in the ring. The group formed by bonding any two of R²⁰¹ to R²⁰³ includes an alkylene group (such as a butylene group and a pentylene group).

Specific examples of the organic group represented by R²⁰¹, R²⁰², or R²⁰³ include corresponding groups in the compounds (b1-1), (b1-2), and (b1-3) described later.

The photo-acid generator may be a compound having a plurality of structures represented by the formula (b1). For example, it may be a compound having a structure where at least any one of R²⁰¹ to R²⁰¹ in a compound represented by the formula (b1) is bonded with at least any one of R²⁰¹ to R²⁰³ in another compound represented by the formula (b1), directly or via a linking group.

The compound represented by the formula (b1) more preferably includes the compounds (b1-1), (b1-2), and (b1-3) described below.

The compound (b1-1) is an arylsulfonium compound where at least any one of R²⁰¹ to R²⁰³ in the formula (b1) is an aryl group, that is, a compound having arylsulfonium as a cation.

In the arylsulfonium compound, all of R²⁰¹ to R²⁰³ may be an aryl group, or a part of R²⁰¹ to R²⁰³ may be an aryl group and the rest may be an alkyl group or a cycloalkyl group.

Examples of the arylsulfonium compound include a triarylsulfonium compound, a diarylalkylsulfonium compound, an aryldialkylsulfonium compound, a diarylcycloalkylsulfonium compound, and an aryldicycloalkylsulfonium compound.

As an aryl group of the arylsulfonium compound, an aryl group such as a phenyl group and a naphthyl group, and a heteroaryl group such as an indole residue and a pyrrole residue are preferred, and more preferably a phenyl group and an indole residue. When the arylsulfonium compound has two or more aryl groups, the two or more aryl groups may be the same or different.

As the alkyl group held by the arylsulfonium compound as required, a linear or branched alkyl group having 1 to 15 carbon atoms is preferred. Examples thereof include a methyl group, an ethyl group, a propyl group, an n-butyl group, a sec-butyl group, and a t-butyl group.

As the cycloalkyl group held by the arylsulfonium compound as required, an acycloalkyl group having 3 to 15 carbon atoms is preferred. Examples thereof include a cyclopropyl group, a cyclobutyl group, and a cyclohexyl group.

The aryl group, alkyl group, and cycloalkyl group represented by R²⁰¹ to R²⁰³ may have an alkyl group (for example, 1 to 1 carbon atoms), a cycloalkyl group (for example, 3 to 15 carbon atoms), an aryl group (for example, 6 to 14 carbon atoms), an alkoxy group (for example, 1 to 15 carbon atoms), a halogen atom, a hydroxy group, or a phcnylthio group as a substituent. Preferred substituents are a linear or branched alkyl group having 1 to 12 carbon atoms, a cycloalkyl group having 3 to 12 carbon atoms, a linear, branched, or cyclic alkoxy group having 1 to 12 carbon atoms, and most preferably an alkyl group having 1 to 4 carbon atoms, and an alkoxy group having 1 to 4 carbon atoms. Any one of three R²⁰¹ to R²⁰³ may be substituted with the substituent, or all three of them may be substituted. And, if the R²⁰¹ to R²⁰³ is an aryl group, the p-position of the aryl group is preferably substituted with the substituent.

Next is a description of the compound (b1-2).

The compound (b1-2) is a compound in a case where R²⁰¹ to R²⁰³ in the formula (b1) independently represent an organic group not comprising an aromatic ring. Here, the aromatic ring includes an aromatic ring comprising a hetero atom.

The organic group not comprising an aromatic ring represented by R²⁰¹ to R²⁰³ is generally an organic group having 1 to 30 carbon atoms, and preferably 1 to 20 carbon atoms.

Preferably, R²⁰¹ to R²⁰³ independently represent an alkyl group, a cycloalkyl group, an allyl group, or a vinyl group, more preferably a linear, branched, or cyclic 2-oxoalkyl group or an alkoxycarbonylmethyl group, and particularly preferably a linear or branched 2-oxoalkyl group.

The alkyl group represented by R²⁰¹ to R²⁰³ may be either linear or branched, preferably including linear or branched alkyl groups having 1 to 10 carbon atoms (such as a methyl group, an ethyl group, a propyl group, a butyl group, and a pentyl group), and more preferably a linear or branched 2-oxoalkyl group or alkoxycarbonylmethyl group.

The cycloalkyl group represented by R²⁰¹ to R²⁰³ preferably includes cycloalkyl groups having 3 to 10 carbon atoms (a cyclopentyl group, a cyclohexyl group, and a norbonyl group), and more preferably a cyclic 2-oxoalkyl group.

The linear, branched, or cyclic 2-oxoalkyl group represented by R²⁰¹ to R²⁰³ preferably includes the above alkyl groups and cycloalkyl groups having >C=O at the second position.

The alkoxy group in the alkoxycarbonylmethyl group represented by R²⁰¹ to R²⁰³ preferably includes alkoxy groups having to 5 carbon atoms (a methoxy group, an ethoxy group, a propoxy group, a butoxy group, and a pentoxy group).

R²⁰¹ to R²⁰³ may be further substituted with a halogen atom, an alkoxy group (for example, having 1 to 5 carbon atoms), a hydroxy group, a cyano group, or a nitro group.

Next is a description of the compound (b1-3).

The compound (b1-3) is a compound represented by the following formula (b1-3) having a phenacylsulfonium salt structure.

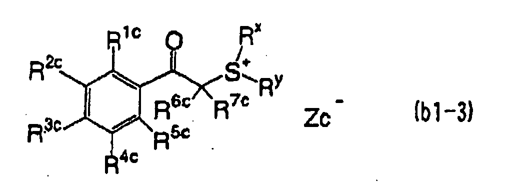

In the formula (b1-3), R^{1c} to R^{5c} independently represent a hydrogen atom, an alkyl group, a cycloalkyl group, an alkoxy group, or a halogen atom.

R^{6c} and R^{7c} independently represent a hydrogen atom, an alkyl group, or a cycloalkyl group.

R^{x} and R^{y} independently represent an alkyl group, a cycloalkyl group, an allyl group, or a vinyl group.

Any two or more among R^{1c} to R^{5c}, R^{6c} and R^{7c}, or R^{x} and R^{y} may be bonded to each other to form a ring structure.

Zc⁻ represents a non-nucleophilic anion, including a similar one to the abovementioned non-nucleophilic anions represented by X⁻ in the formula (b1).

The alkyl group represented by R^{1c} to R^{7c} may be either linear or branched. Examples thereof include linear and branched alkyl groups having 1 to 20 carbon atoms, preferably 1 to 12 carbon atoms (for example, a methyl group, an ethyl group, a linear or branched propyl group, a linear or branched butyl group, and a linear or branched pentyl group).

The cycloalkyl group represented by R^{1c} to R^{7c} preferably includes a cycloalkyl groups having 3 to 8 carbon atoms (for example, a cyclopentyl group and a cyclohexyl group).

The alkoxy group represented by R^{1c} to R^{5c} may be linear, branched or cyclic. Examples thereof include linear and branched alkoxy groups having 1 to 10 carbon atoms, preferably 1 to 5 carbon atoms (for examples, a methoxy group, an ethoxy group, a linear or branched propoxy group, a linear or branched butoxy group, and a linear or branched pentoxy group), and cyclic alkoxy groups having 3 to 8 carbon atoms (for example, a cyclopentyloxy group, and a cyclohexyloxy group).

Groups formed by any two or more among R^{1c} to R^{5c}, R^{6c} and R^{7c}, or R^{x} and R^{y} bonded to each other include a butylene group and a pentylene group. This ring structure may include an oxygen atom, a sulfur atom, an ester bond, or an amide bond.

Preferably, any one of R^{1c} to R^{5c} is a linear or branched alkyl group, a cycloalkyl group, or a linear, branched, or cyclic alkoxy group, and more preferably the sum of carbon atoms of R^{1c} to R^{5c} is 2 to 15. As a result, the solvent solubility is more improved and particle generation during storage can be suppressed.

The alkyl group and the cycloalkyl group represented by R^{x} and R^{y} are similar to the alkyl groups and cycloalkyl groups represented by R^{1c} to R^{7c}.

R^{x} and R^{y} are preferably a 2-oxoalkyl group or an alkoxycarbonylmethyl group.

The 2-oxoalkyl group includes the alkyl groups and the cycloalkyl groups represented by R^{1c} to R^{5c} having >C=O at the second position.

The alkoxy groups in the alkoxycarbonylmethyl group are similar to the alkoxy groups as R^{1c} to R^{5c}.

R^{x} and R^{y} are preferably an alkyl group or a cycloalkyl group having 4 or more carbon atoms, more preferably 6 or more carbon atoms, and even more preferably 8 or more carbon atoms.

In the formulae (b2) and (b3), R²⁰⁴ to R²⁰⁷ independently represent an aryl group, an alkyl group, or a cycloalkyl group. X⁻ represents a non-nucleophilic anion, including a similar one to the abovementioned non-nucleophilic anion represented by X⁻ in the formula (b1).

The aryl group represented by R²⁰⁴ to R²⁰⁷ is preferably a phenyl group or a naphthyl group, and more preferably a phenyl group.

The alkyl group represented by R²⁰⁴ to R²⁰⁷ may be either linear or branched, and preferably includes linear or branched alkyl groups having 1 to 10 carbon atoms (such as a methyl group, an ethyl group, a propyl group, a butyl group, and a pentyl group). The cycloalkyl group represented by R²⁰⁴ to R²⁰⁷ preferably includes cycloalkyl groups having 3 to 10 carbon atoms (a cyclopentyl group, a cyclohexyl group, or a norbonyl groups).

Examples of the substituent that may be held by R²⁰⁴ to R²⁰⁷ include an alkyl group (for example, 1 to 15 carbon atoms), a cycloalkyl group (for example, 3 to 15 carbon atoms), an aryl group (for example, 6 to 15 carbon atoms), an alkoxy group (for example, 1 to 15 carbon atoms), a halogen atom, a hydroxy group, or a phenylthio group.

Preferred compounds (photo-acid generators) which generate an acid by irradiation of active rays or radiation employable in the present invention include compounds represented by the following formulae (b4), (b5), and (b6).

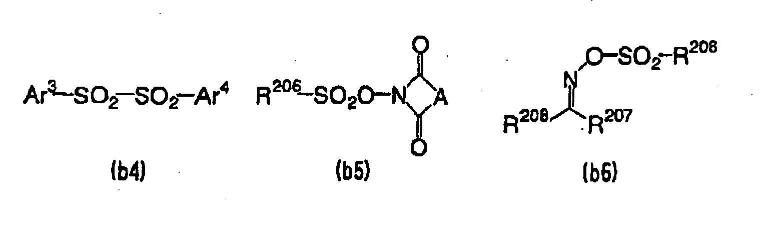

In the formulae (b4), Ar³ and Ar⁴ independently represent an aryl group.

In the formulae (b5) and (b6), R²⁰⁶, R²⁰⁷ and R²⁰⁸ independently represent an alkyl group, a cycloalkyl group, or an aryl group.

In the formula (b5), A represents an alkylene goup, an alkenyne, or an arylene group.

Preferred compounds of the photo-acid generator include compounds represented by the following formulae (b1) through (b3).

Hereinafter, preferred compound examples (b1) to (b-96) of the photo-acid generator (b) employable in the present invention are shown. However, the present invention is not limited to these.

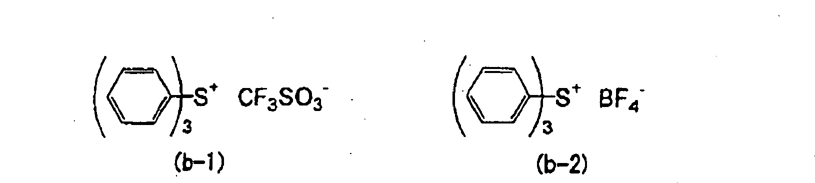

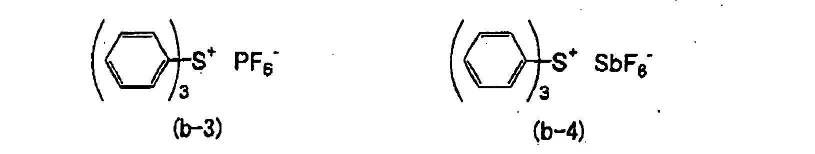

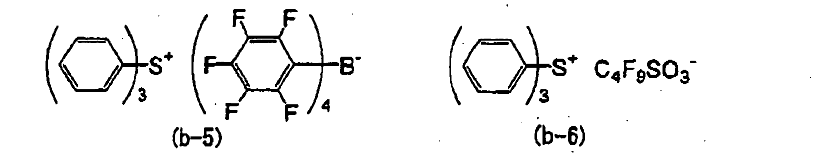

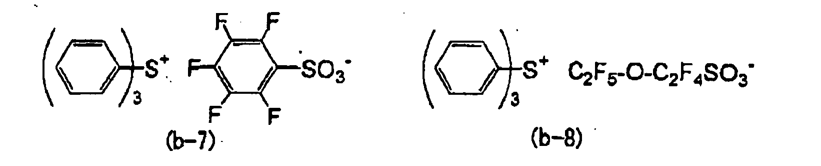

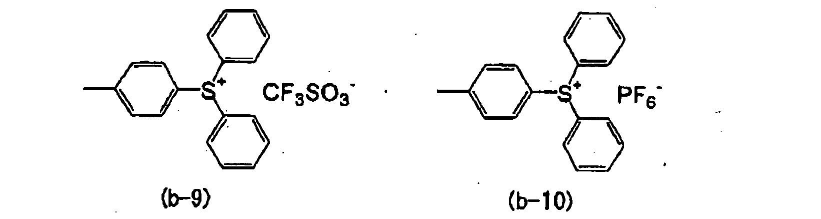

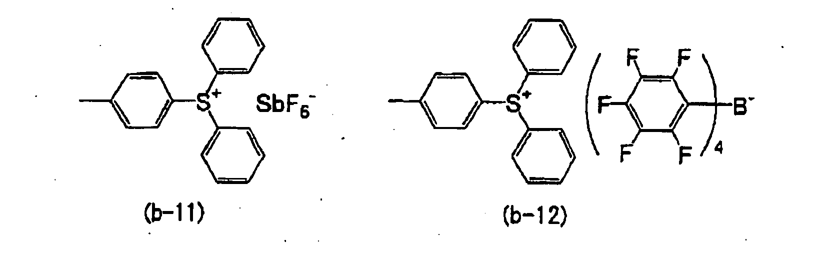

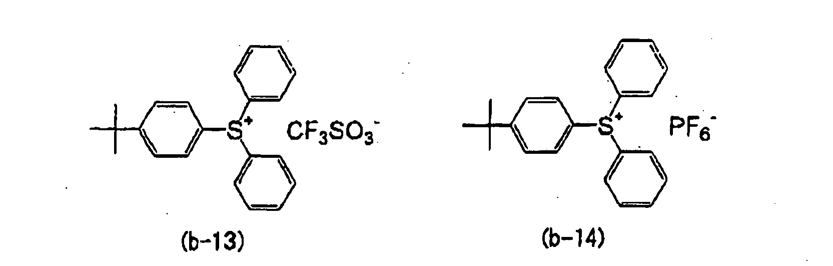

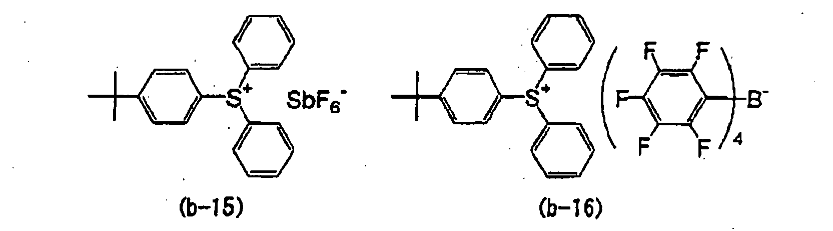

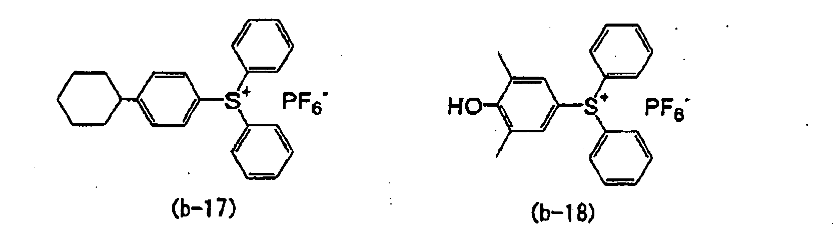

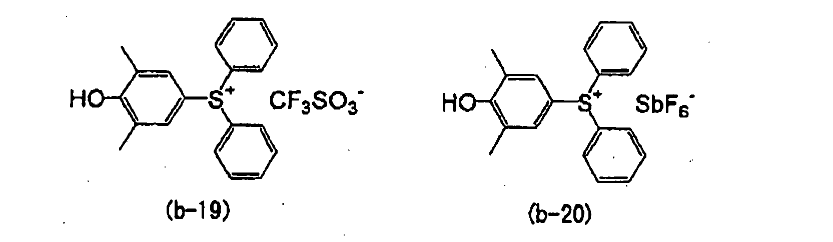

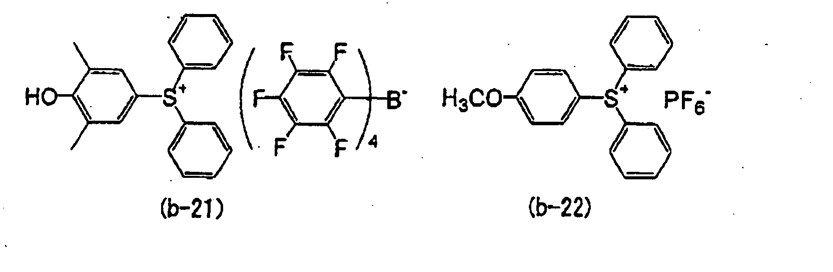

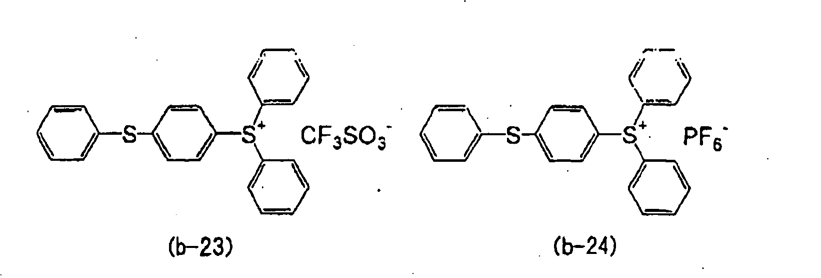

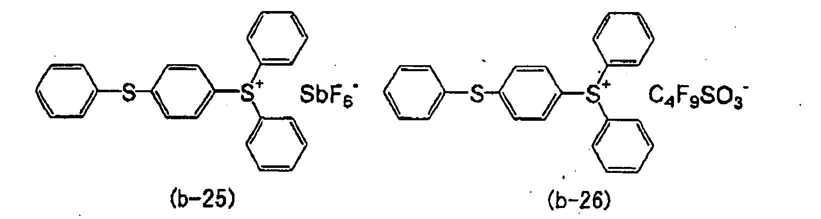

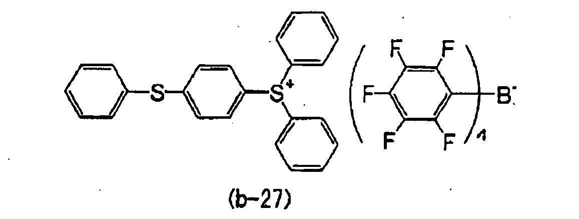

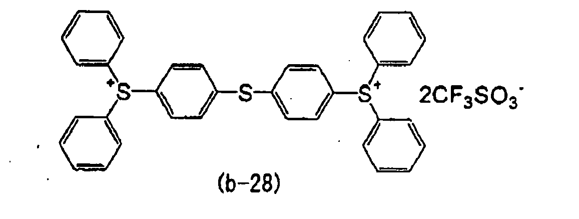

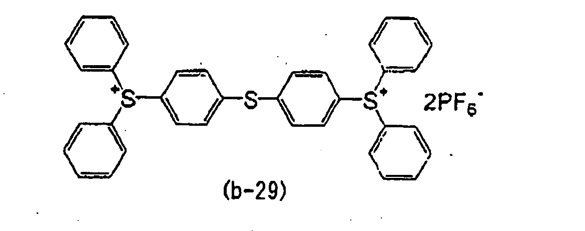

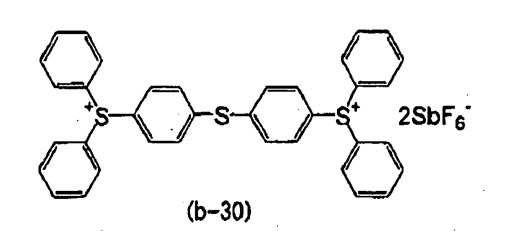

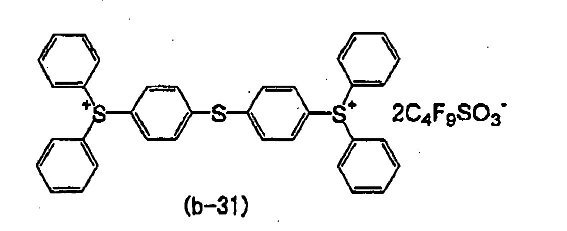

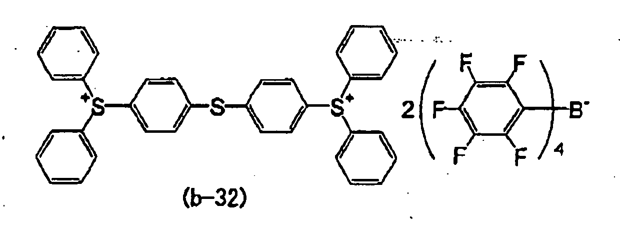

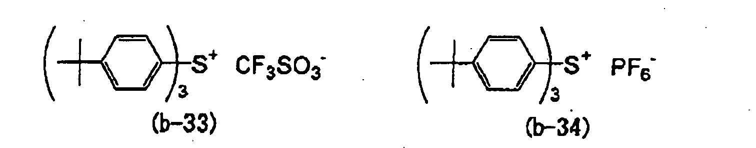

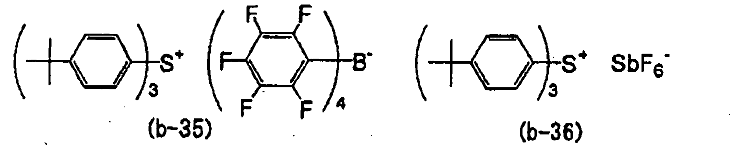

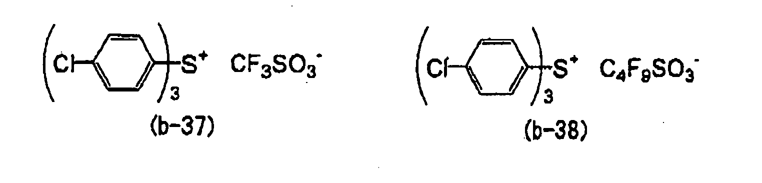

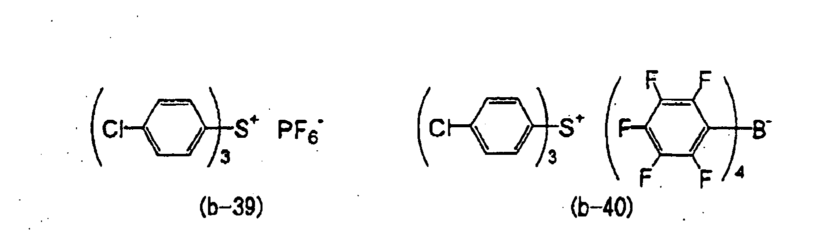

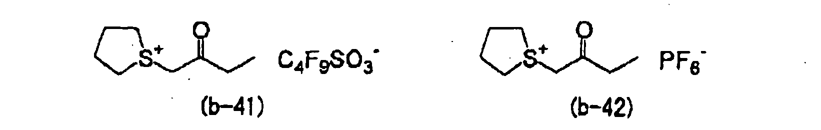

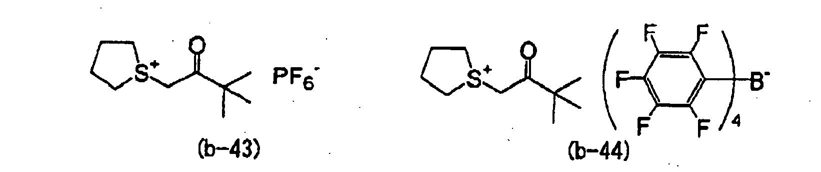

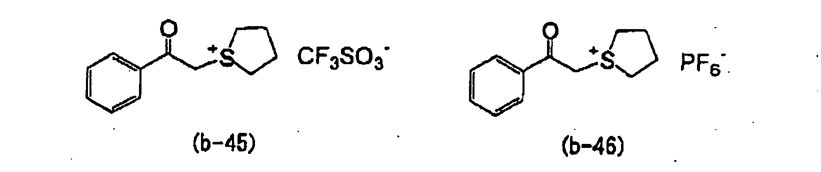

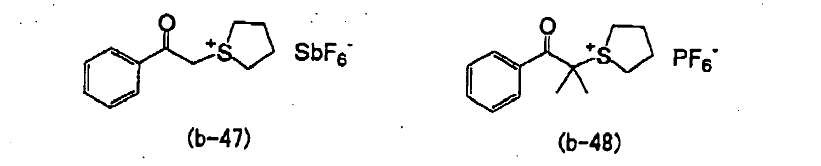

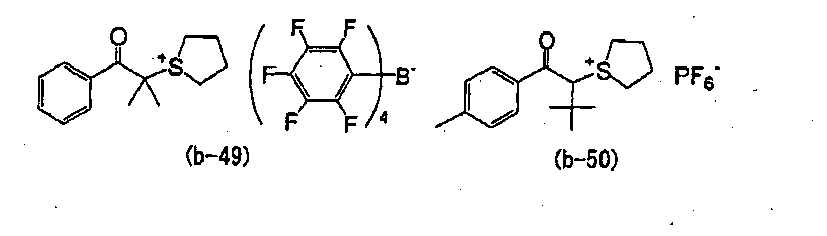

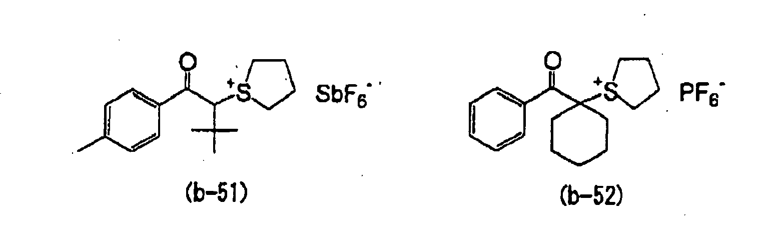

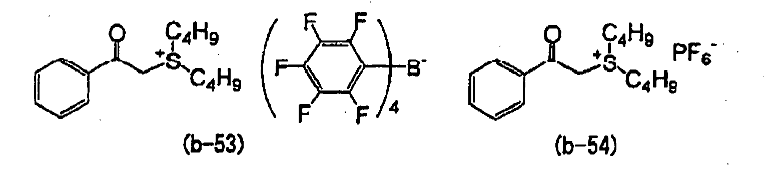

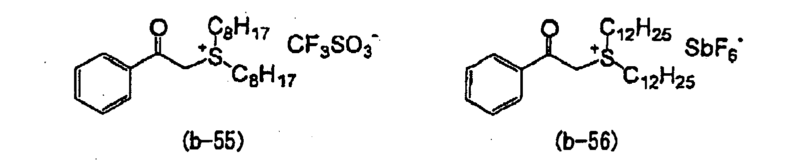

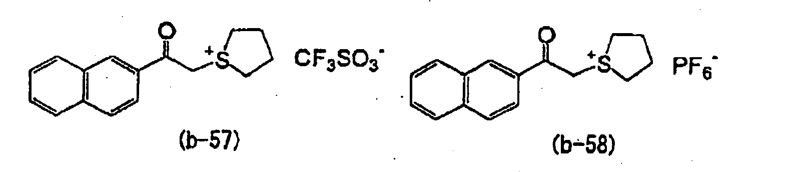

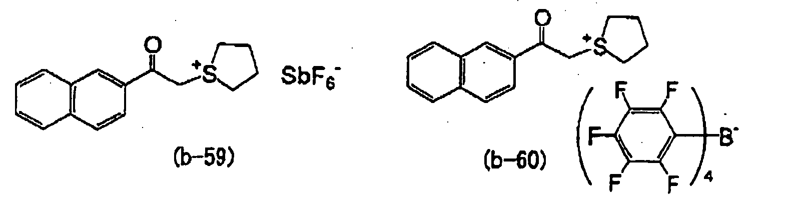

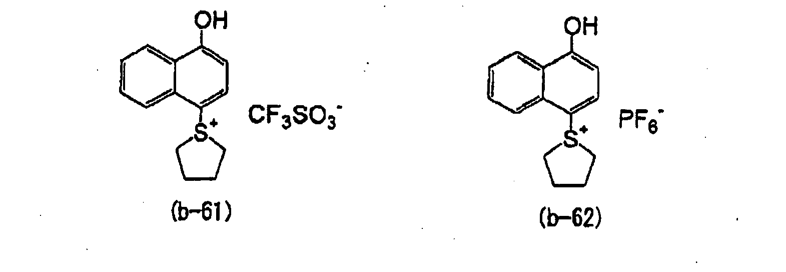

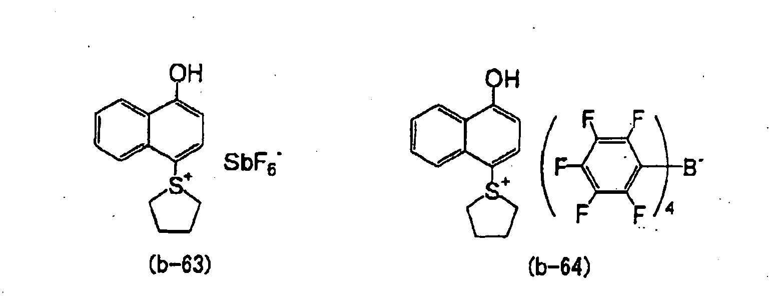

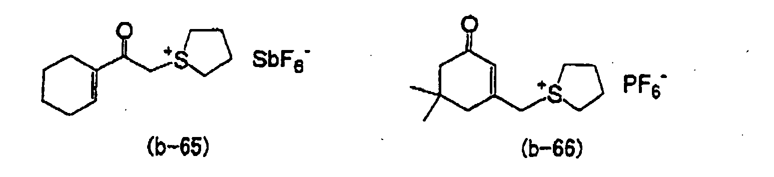

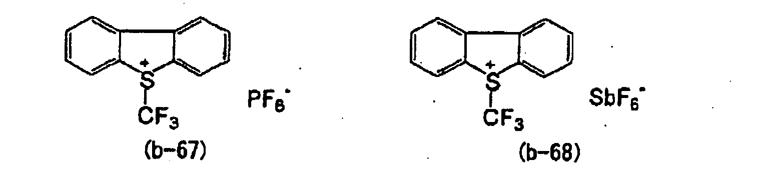

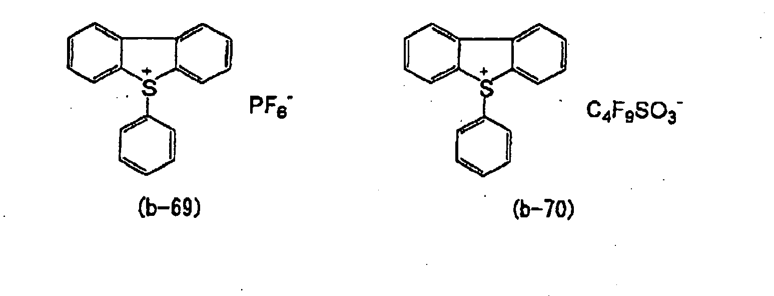

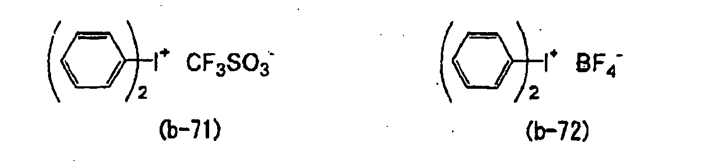

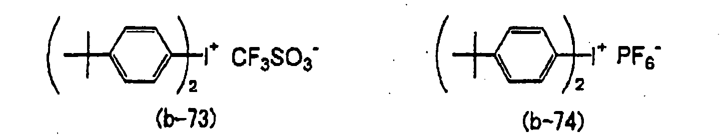

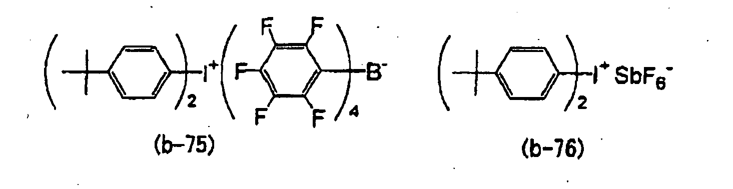

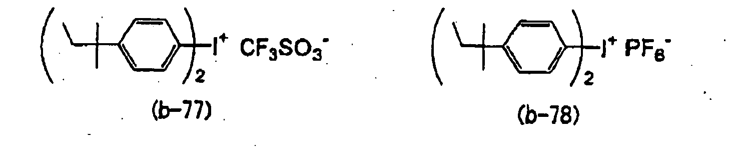

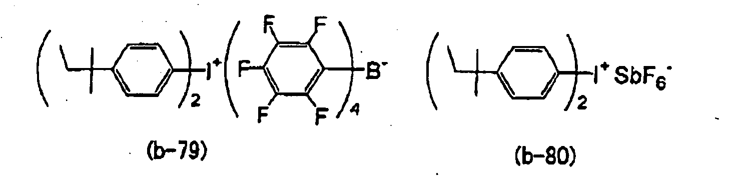

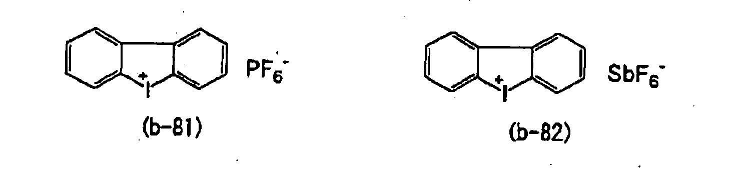

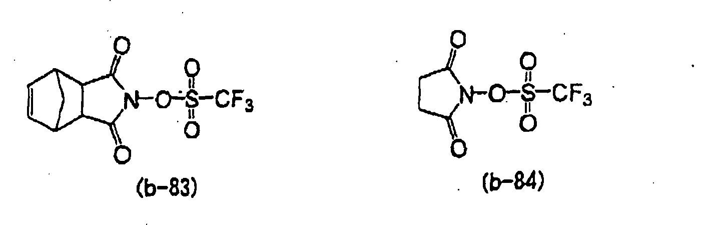

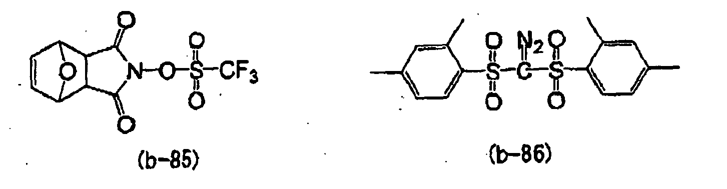

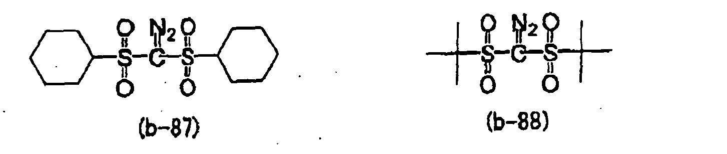

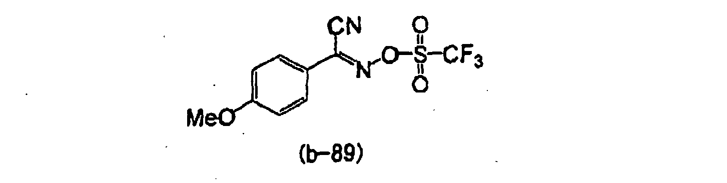

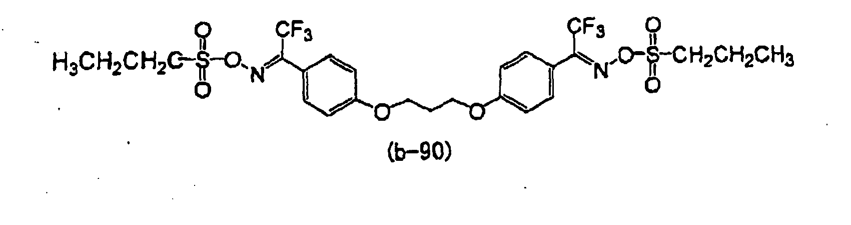

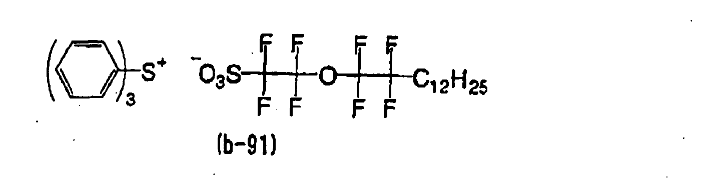

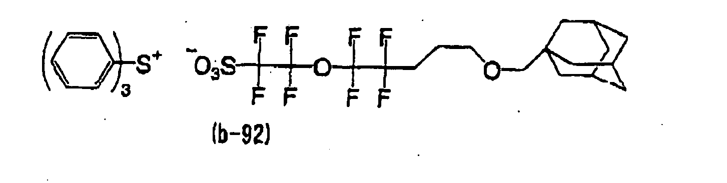

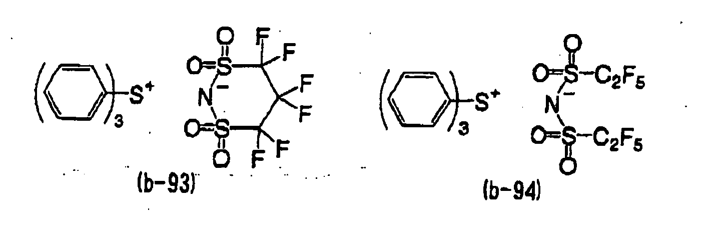

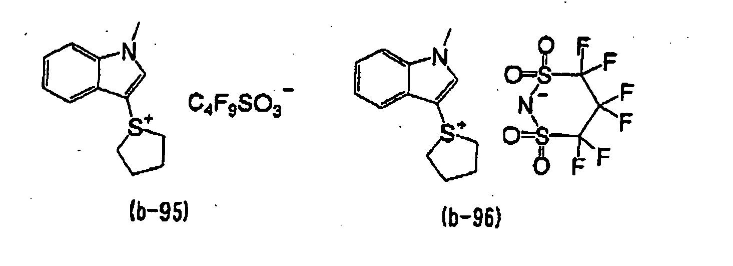

As the photo-acid generator, oxazole derivatives and s-triazine derivatives described in JP-A No. 2002-122994, paragraphs [0029] and [0030], and the like can be also preferably used. Furthermore, onium salt compounds and sulfonate compounds described in JP-A No. 2002-122994, paragraphs [0037] to [0063] can be also preferably used as the photo-acid generator in the present invention.

One type of the photo-acid generator (b), or a plurality of types thereof in combination may be used. The content of the photo-acid generator (b) is suitably 0.1 to 20 % by mass, preferably 0.5 to 10 % by mass, and more preferably 1 to 7 % by mass with respect to the total solid content of the ink composition.

The ink composition of the present invention may be used together with various additives according to the object, in addition to the above essential components. These optional components are described.

### ORGANIC ACIDIC COMPONENT (d) EXHIBITING A PKA VALUE OF 2 TO 6

The ink composition of the present invention may be added with a organic acidic component (d) exhibiting a pKa value of 2 to 6 (hereinafter, also simply called "organic acidic component" ). The organic acidic component (d) exhibiting a pKa value of 2 to 6 used for the present invention corresponds to a qualitatively weak acidic organic compound. If the pKa of the organic acidic component is greater than 6, the sensitivity is reduced when it is added into the ink composition of the present invention. If the pKa is less than 2, deterioration of the stability over time of the ink composition is caused. Therefore, in the present invention, those exhibiting a pKa value of 2 to 6 are preferably applied as the organic acidic component.

Specific compounds of the organic acidic component exhibiting a pKa value of 2 to 6 include, in particular carboxylic acids. Examples of the carboxylic acids include aliphatic or aromatic monocarboxylic acids, dicarboxylic acids, and tricarboxylic acids having I to 20 carbon atoms, such as an acetic acid, a phcnylacetic acid, a phenoxyacetic acid, a methoxyproprionic acid, a lactic acid, a hexanoic acid, a heptanoic acid, an octanoic acid, a palmitic acid, a stearic acid, an oleic acid, a linoleic acid, a cyclopropylcarboxylic acid, a cyclobutanecarboxylic acid, a cyclopentanecarboxylic acid, a cyclohaxanecarboxylic acid, a 1-adamantanecarboxylic acid, a 1,3-adamantanedicarboxylic acid, a norbornene-2,3-dicarboxylic acid, an abietic acid, a trans-retinoic acid, a cyclohexylacetic acid, a dicyclohexylacetic acid, an adamantaneacetic acid, a malonic acid, a malonic acid monomethyl ester, a fumaric acid, a maleic acid, a maleate monomethyl ester, an itaconic acid, a crotonic acid, a succinic acid, an adipic acid, a sebacic acid, a glycolic acid, a diglycolic acid, a mandelic acid, a tartaric acid, a malic acid, an alginic acid, a cinnamic acid, a methoxycinnamic acid, a 3,5-dimethoxycinnamic acid, a benzoic acid, a salicylic acid, a 4-hydroxybenzoic acid, a gallic acid, a 3-nitrobenzoic acid, a 3-chlorobenzoic acid, a 4-vinylbenzoic acid, a t-butylbenzoic acid, a 1-naphthoic acid, a 1-hydroxy-2-naphthoic acid, a fluorenone-2-carboxylic acid, a 9-anthracene carboxylic acid, a 2-anthraquinonecarboxylic acid, a phthalic acid, a phthalic acid monomethyl ester, an isophthalic acid, a terephthalic acid, a trimellitic acid, and a trimellitic acid monomethyl ester. However, the present invention is not limited to these.

### COLORANT (e)

By adding a colorant into the ink composition of the present invention, a visible image can be formed. For example, if an image area on a planographic printing plate is formed, a colorant is not necessarily added. However, a colorant is preferably used from the viewpoint of detectability of the obtained planographic printing plate.

The employable colorant is not specifically limited, and various publicly known colorants (pigments and dyes) may be suitably selected and used according to the usage. For example, if an image having an excellent weather resistance is to be formed, a pigment is preferred. As a dye, either one of a water soluble dye or an oil soluble dye may be used, however an oil soluble dye is preferred.

### Pigment

The pigment preferably used in the invention is described.

The pigment is not particularly limited, and any commercially available organic and inorganic pigment, a pigment dispersed in an insoluble resin or the like as a dispersion medium, or a pigment having a resin grafted on the surface thereof can be used. Resin particles dyed with a dye can also be used.

Examples of these pigments include the pigments described in Seijiro Ito "Pigment dictionary" (2000), W. Herbst, K. Hunger "Industrial Organic Pigment" , JP-A No. 2002-12607, JP-A No. 2002-188025, JP-A No. 2003-26978, and JP-A No. 2003-342503.

Specific examples of the organic and inorganic pigments exhibiting, for example, yellow color employable in the present invention, include a monoazo pigment such as C.I. Pigment Yellow 1 (e.g., Fast Yellow G), and C.I. Pigment Yellow 74, a disazo pigment such as C.I. Pigment Yellow 12 (e.g., Disazo Yellow AAA) and C.I. Pigment Yellow 17, a non-benzidine azo pigment such as C.I. Pigment Yellow 180, an azo lake pigment such as C.I. Pigment Yellow 100 (e.g., Tartrazine Yellow Lake), a condensed azo pigment such as C.I. Pigment Yellow 95 (e.g., Condensed Azo Yellow GR), an acidic dye lake pigment such as C.I. Pigment Yellow 115 (e.g., Quinoline Yellow Lake), a basic dye lake pigment such as C.I. Pigment Yellow 18 (e.g., Thioflavin Lake), an anthraquinone pigment such as Flavanthrone Yellow (Y-24), an isoindolinone pigment such as Isoindolinone Yellow 3RLT (Y-110), a quinophthalone pigment such as Quinophthalone Yellow (Y-138), an isoindoline pigment such as Isoindoline Yellow (Y-139), a nitroso pigment such as C.I. Pigment Yellow 153 (e.g., Nickel Nitroso Yellow), and a metallic complex azomethine pigment such as C.I. Pigment Yellow 117 (e.g., Copper Azomethine Yellow).

Examples thereof exhibiting red or magenta color include a monoazo pigment such as C.I. Pigment Red 3 (e.g., Toluidine Red), a disazo pigment such as C.I. Pigment Red 38 (e.g., Pyrazolone Red B), an azo lake pigment such as C.I. Pigment Red 53:1 (e.g., Lake Red C) and C.I. Pigment Red 57:1 (e.g., Brilliant Carmine 6B), a condensed azo pigment such as C.I. Pigment Red 144 (e.g., Condensed Azo Red BR), an acidic dye lake pigment such as C.I. pigment red 174 (e.g., Phloxin B lake), a basic dye lake pigment such as C.I. Pigment Red 81 (e.g., Rhodamine 6G' Lake), an anthraquinone pigment such as C.I. Pigment Red 177 (e.g., Dianthraquinonyl Red), a thioindigo pigment such as C.I. Pigment Red 88 (e.g., Thioindigo Bordeaux), a perynone pigment such as C.I. Pigment Red 194 (e.g., Perynone Red), a perylene pigment such as C.I. Pigment Red 149 (e.g., Perylene Scarlett), a quinacridone pigment such as C.I. Pigment Violet 19 (unsubstituted quinacridone), C.I. Pigment Red 122 (e.g., Quinacridone Magenta), an isoindolinone pigment such as C.I. Pigment Red 180 (e.g., Isoindolinone Red 2BLT), and an alizarin lake pigment such as C.I. Pigment Red 83 (e.g., Madder Lake).

Examples thereof exhibiting blue or cyan color include a disazo pigment such as C.I. Pigment Blue 25 (e.g., Dianisidine Blue), a phthalocyanine pigment such as C.I. Pigment Blue 15 (e.g., Phthalocyanine Blue), an acidic dye lake pigment such as C.I. Pigment Blue 24 (e.g., Peacock Blue Lake), a basic dye lake pigment such as C.I. Pigment Blue 1 (e.g., Victoria Pure Blue BO Lake), an anthraquinone pigment such as C.I. Pigment Blue 60 (e.g., Indanthrone Blue), and an alkali blue pigment such as C.I. Pigment Blue 18 (e.g., Alkali Blue V-5:1).

Examples thereof exhibiting green color include a phthalocyanine pigment such as C.I. Pigment Green 7 (Phthalocyanine Green), and C.I. Pigment Green 36 (Phthalocyanine Green), and an azo metal complex pigment such as C.I. Pigment Green 8 (Nitroso Green).

Examples thereof exhibiting orange color include an isoindolin pigment such as C.I. Pigment Orange 66 (Isoindolin Orange), and an anthraquinone pigment such as C.I. Pigment Orange 51 (Dichloropyranthrone Orange).

Examples thereof exhibiting black color include carbon black, titanium black, and aniline black.

As specific examples of white pigment, basic lead carbonate (2PbCO₃Pb(OH)₂, so-called silver white), zinc oxide (ZnO, so-called zinc white), titanium oxide (TiO₂, socalled, titanium white), and strontium titanate (SrTiO₃, so-called titanium strontium white) are employable.

Here, titanium oxide has a lesser specific gravity and a greater refractive index, and is chemically and physically stable, compared to other white pigments. Therefore, it has a greater concealing and tinting power as a pigment, and furthermore has a superior durability against acid, alkali, and other environments. Therefore, the titanium oxide is preferably used as a white pigment Of course, other white pigments (which may be other than the abovementioned white pigments) may be used as necessary.

For dispersing the pigment, respective dispersing devices such as a ball mill, a sand mill, an attritor, a roll mill, a jet mill, a homogenizer, a paint shaker, a kneader, an agitator, a Henschel mixer, a colloid mill, an ultrasonic homogenizer, a pearl mill, and a wet type jet mill may be used.

Dispersing agents can also be added when a pigment is to be dispersed. Examples of the dispersing agent include a hydroxy group comprising carboxylate ester, a salt of long-chain polyaminoamide and high molecular weight acid ester, a salt of high molecular weight polycarboxylate, a high molecular weight unsaturated acid ester, a high molecular weight copolymer, a modified polyacrylate, an aliphatic polyvalent carboxylic acid, a naphthalenesulfonic acid-formalin condensate, a polyoxyethylenealkyl phosphate ester, and pigment derivatives. Moreover, a commercially available polymer dispersing agent such as a Solsperse series made by Zeneca Co. may be preferably used.

As a dispersing auxiliary, a synergist according to various types of pigments may be used. 1 to 50 parts by mass of the dispersing agent and the dispersing auxiliary are preferably added with respect to 100 parts by mass of the pigment.

In the ink composition, a solvent may be added as a dispersion medium for various components such as a pigment. Moreover, the cationic polymerizable compound (a) serving as a low molecular weight component may be used as a dispersion medium, without any solvent. Since the ink composition of the present invention is a radiation curable ink, and the ink is cured after the application onto the recording medium, it is preferred not to use a solvent. The reason is that, if the solvent remains in a cured ink image, the solvent resistance is degraded, and problems with volatile organic compounds (VOC) of the residual solvent would occur. From such a viewpoint, cationic polymerizable compound (a)s are preferably used as the dispersion medium. Among these, a cationic polymerizable monomer having the lowest viscosity is preferably selected from the viewpoint of dispersing properties, and improving the handling properties of the ink composition.

The mean particle diameter of the pigment is preferably set to 0.02 to 14 µm, more preferably 0.02 to 0.1 µm, and even more preferably within a range between 0.02 and 0.07 µm.

In order to set the mean particle diameter of the pigment particle within the preferable range, a pigment, a dispersing agent, and a dispersing medium are selected, and dispersing and filtering conditions are set. Such control of the particle diameter prevents clogging at the jet nozzle, and keeps the ink storage stability, the ink transparency, and the curing sensitivity.

### Dyc

The dye used in the present invention is preferably oil soluble. Specifically, it means a dye having a solubility in water (mass of dye soluble in 100 g of water) at 25°C of not more than 1g, preferably not more than 0.5 g, and more preferably not more than 0.1 g. Therefore, a so-called oil soluble dye that is water insoluble, is preferably used.

In the dye used in the present invention, an oil soluble group is preferably introduced into the parent of the abovementioned dyes so as to dissolve the required amount thereof into the ink composition.

Examples of the oil soluble group include: a long-chain or branched alkyl group, a long-chain or branched alkoxy group, a long-chain or branched alkylthio group, a long-chain or branched alkylsulfonyl group, a long-chain or branched acyloxy group, a long-chain or branched alkoxycarbonyl group, a long-chain or branched acyl group, a longchain or branched acylamino group, a long-chain or branched alkylsulfonylamino group, a long-chain or branched alkylaminosulfonyl group; and an aryl group, an aryloxy group, an aryloxycarbonyl group, an arylcarbonyloxy group, an arylaminocarbonyl group, an arylaminosulfonyl group, and an arylsulfonylamino group including the above long-chain or branched substituents.

Moreover, a dye may be obtained, with respect to a water soluble dye having a carboxylic acid or a sulfonic acid, by converting into an alkoxycarbonyl group, an aryloxy carbonyl group, an alkylaminosulfonyl group, and an arylaminosulfonyl group serving as an oil soluble group, using a long-chain or branched alcohol, amine, phenol, and aniline derivatives.

The oil soluble dye preferably has a melting point of not more than 200°C, more preferably, a melting point of not more than 150°C, and even more preferably a melting point of not more than 100°C. The use of an oil-soluble dye having a low melting point the, precipitating of dye crystals in the ink composition, and therefore the storage stability of the ink composition is improved.

Moreover, in order to improve the resistance against discoloration, in particular against an oxidizer such as ozone, and to improve the curing property, the oxidation potential is desirably noble (high). Therefore, the oil soluble dye used in the present invention preferably has an oxidation potential of not less than 1.0V (vsSCE). The oxidation potential is preferably higher, more preferably not less than 1.1 V (vsSCE), and even more preferably not less than 1.15V (vsSCE).

As a dye of yellow color, preferred are the compounds having a structure represented by the formula (Y-I) described in JP-A No. 2004-250483.

Particularly preferred dye includes the dyes represented by the formulae (Y-II) through (Y-IV) described in JP-A No. 2004-250483, paragraph [0034]. Specific examples thereof include the compounds described in JP-A No. 2004-250483, paragraphs [0060] to [0071]. The oil soluble dye represented by the formula (Y-I) described in the document may be used for an ink of any color such as a black ink and a red ink as well as the yellow one.

As a dye of magenta color, preferred are the compounds having a structure represented by the formulae (3) and (4) described in JP-A No. 2002-114930. Specific examples thereof include the compounds described in JP-A No. 2002-114930, paragraphs [0054] to [0073].

Particularly preferred dye includes the azo dyes represented by the formulae (M-1) and (M-2) described in JP-A No. 2002-121414, paragraphs [0084] to [0122]. Specific examples thereof include the compounds described in JP-A No. 2002-121414, paragraphs [0123] to [0132]. The oil soluble dye represented by the formulae (3), (4), (M-1), and (M-2) described in the document may be used for an ink of any color such as a black ink and a red ink as well as the magenta one.

As a dye of cyan color, preferred are the dyes represented by the formulae (I) through (IV) described in JP-A No. 2001-181547, and the dyes represented by the formulae (IV-1) through (IV-4) described in JP-A No. 2002-121414, paragraphs [0063] to [0078]. Specific examples thereof include the compounds described in JP-A No. 2001-181547, paragraphs [0052] to [0066], and the compounds described in JP-A No. 2002-121414, paragraphs [0079] to [0081].

Particularly preferred dye includes the phthalocyanine dyes represented by the formulae (C-I) and (C-II) described in JP-A No. 2002-121414, paragraphs [0130] to [0196], and furthermore the phthalocyanine dyes represented by the formula (C-II). Specific examples thereof include the compounds described in JP-A No. 2002-121414, paragraphs [0198] to [0201]. The oil soluble dye represented by the formulae (I) to (IV), (IV-1) through (IV-4), (C-I), and (C-II) may be used for an ink of any color such as a black ink and a green ink as well as the cyan one.

### Oxidation potential

The oxidation potential value (Eox) of the dye of the present invention can be easily measured by one skilled in the art The method therefor is described, for example, in P. Delahay, New Instrumental Methods in Electrochemistry, Interscience Publishers (1954), A. J. Bard et al., Electrochemical Methods, John Wiley & Sons (1980), and Akira Fujishima et al., Denkikagaku Sokutei Ho (Electrochemical Measuring Method), Gihodo Shuppan Sha (1984).

Specifically, a test sample is dissolved to a concentration of 1 x 10⁻² to 1 x 10⁻⁶ mol/liter in a solvent such as dimethylformamide or acetonitrile comprising a supporting electrolyte such as sodium perchlorate or tetrapropylammonium perchlorate, and the oxidation potential is measured as a value with respect to SCE (saturated calomel electrode) by a cyclic voltammetry or a direct current polarography apparatus, using the intermediate potential value of a line segment made from: an intersection of an approximated line of an oxidation wave when swept to the oxidization side (nobler side) using a carbon (GC) as an active electrode and a rotating platinum electrode as a counter electrode, and a remaining current/potential line; and an intersection of a line and a saturated current line (or an intersection with a line in parallel to a vertical axis passing through the peak potential value). This value sometimes deviates in the order of several tens of millivolt due to the effect of, for example, the liquid junction potential or the liquid resistance of the sample solution, but the reproducibility of the potential can be guaranteed by adding a standard sample (for example, bydroquinone). The supporting electrolyte and the solvent to be used may be appropriately selected depending on the oxidation potential or the solubility of the sample. The employable supporting electrolyte and the solvent are described in Akira Fujishima, et al., Denki Kagaku Sokutei-ho, 1984, Gihodo Shuppan Co., Ltd., pages 101 to 118.

Hereinafter are preferred specific examples of the dye used for the present invention, however the dyes used for the present invention are not limited to the following specific examples.

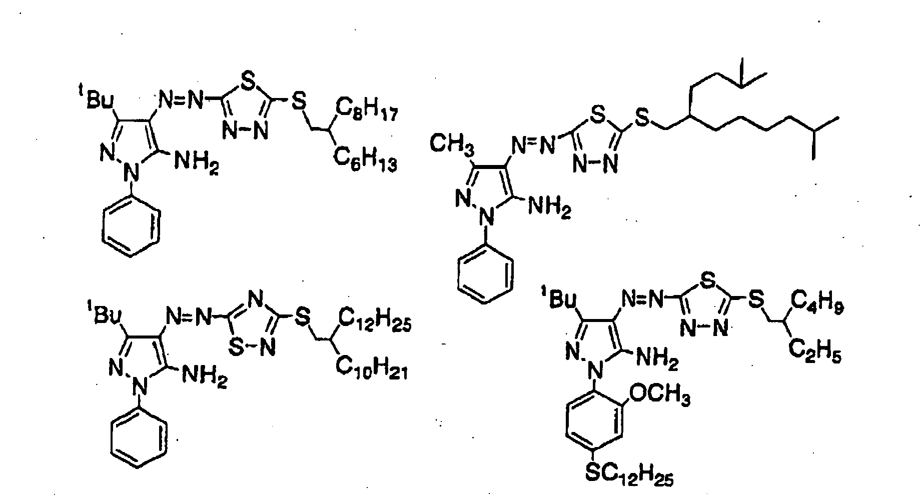

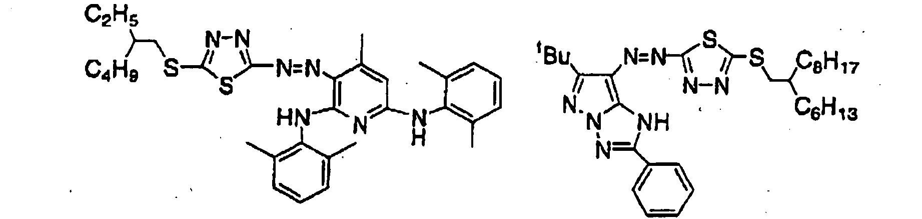

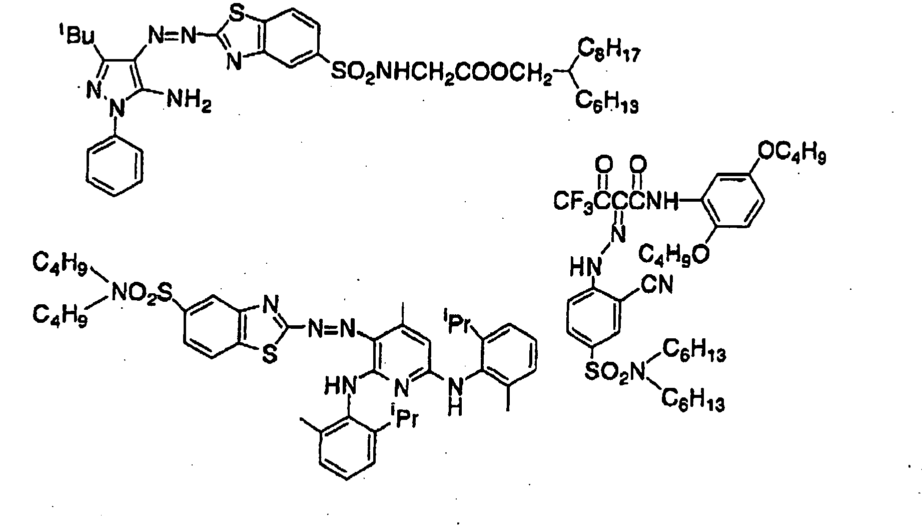

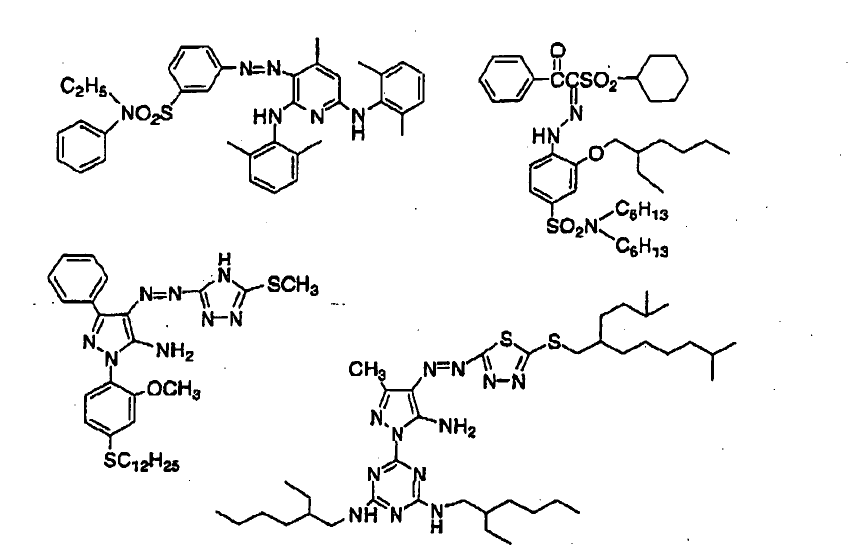

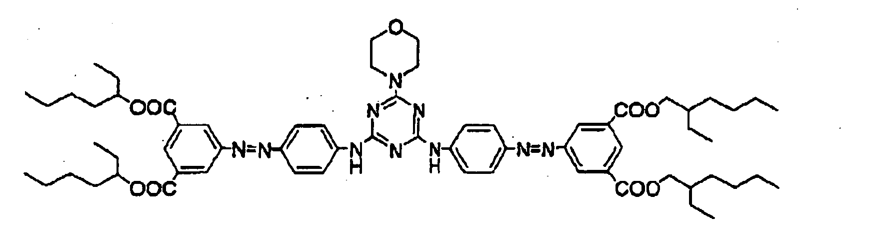

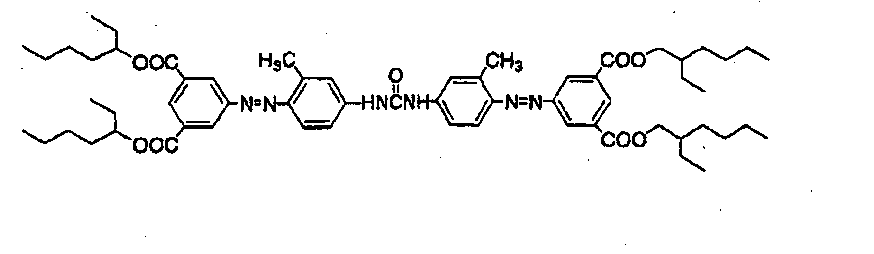

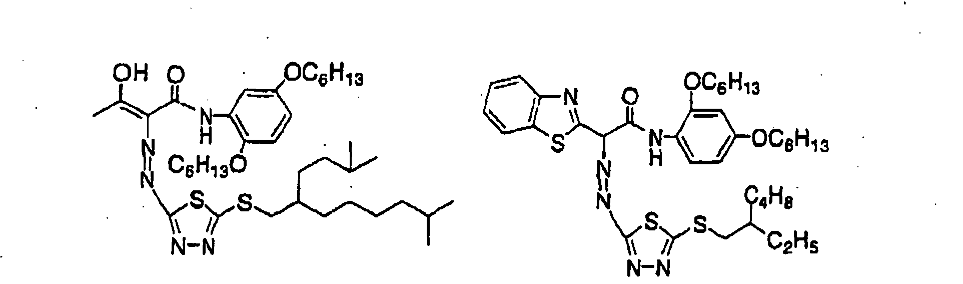

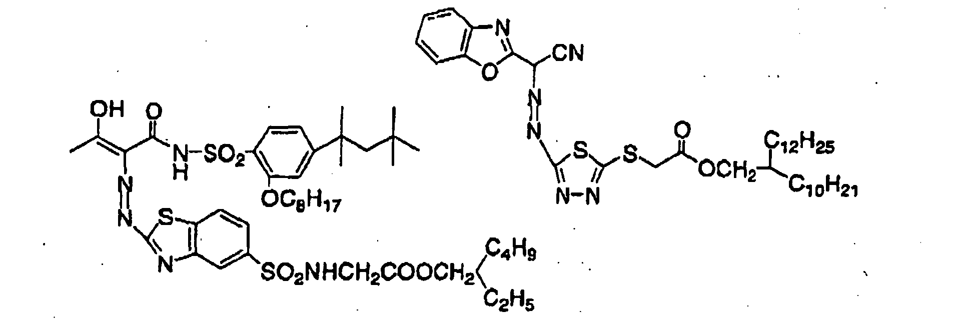

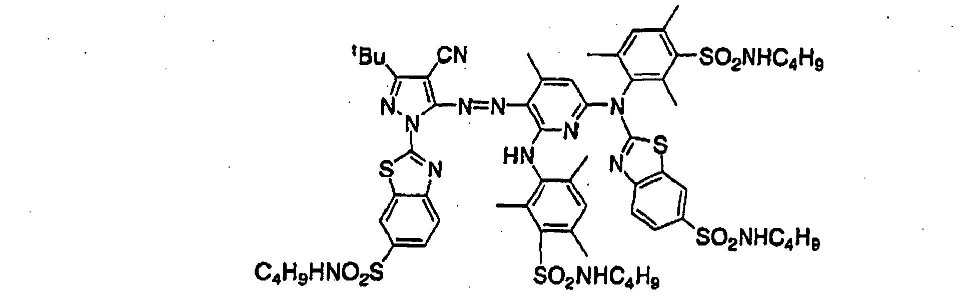

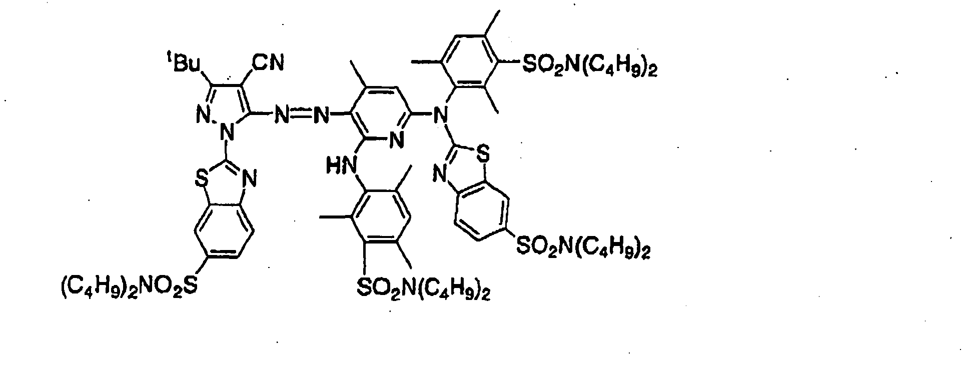

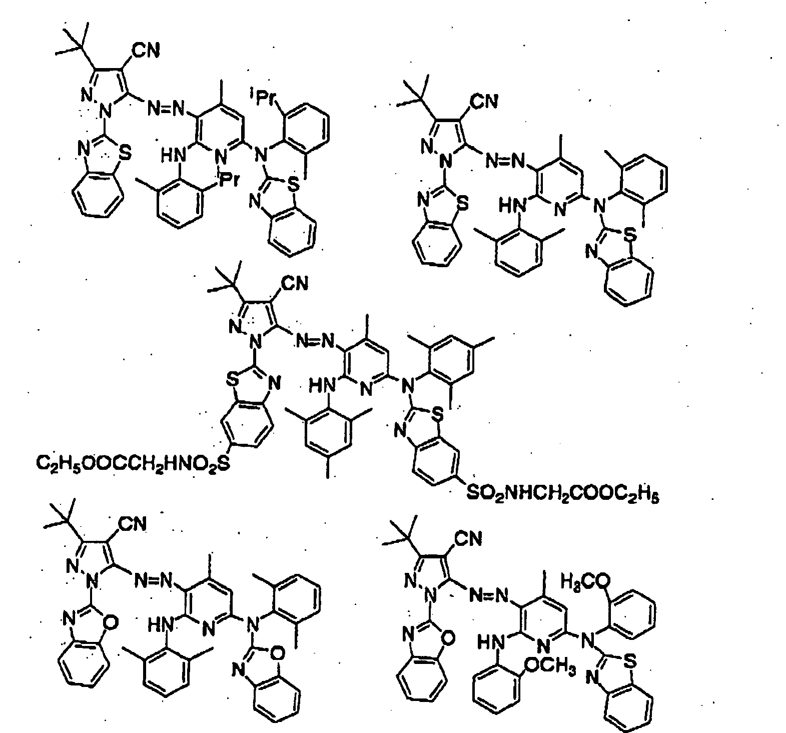

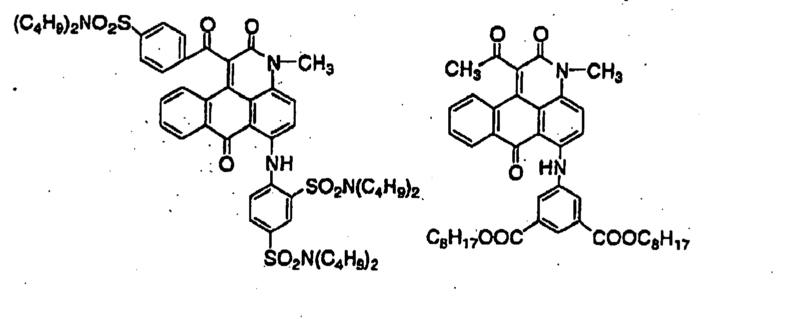

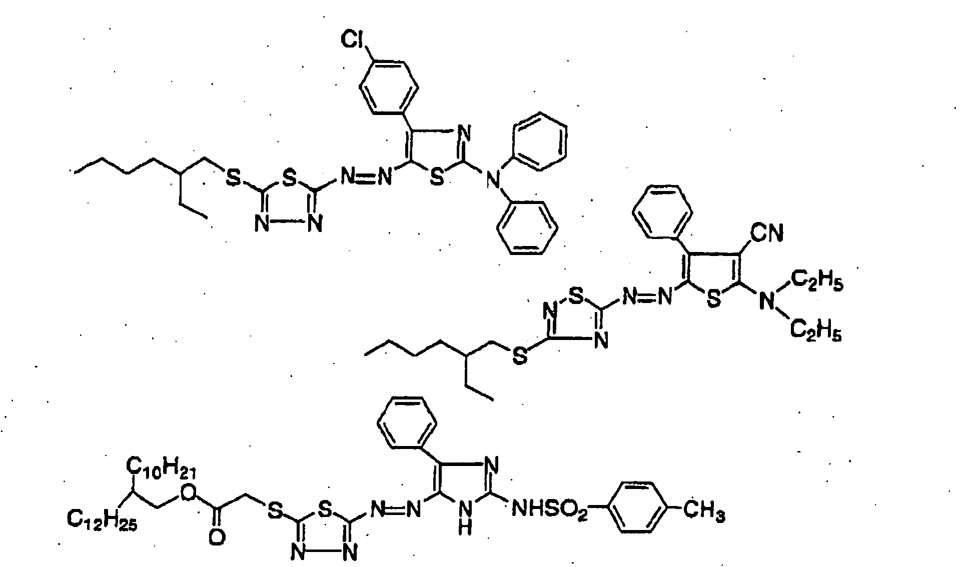

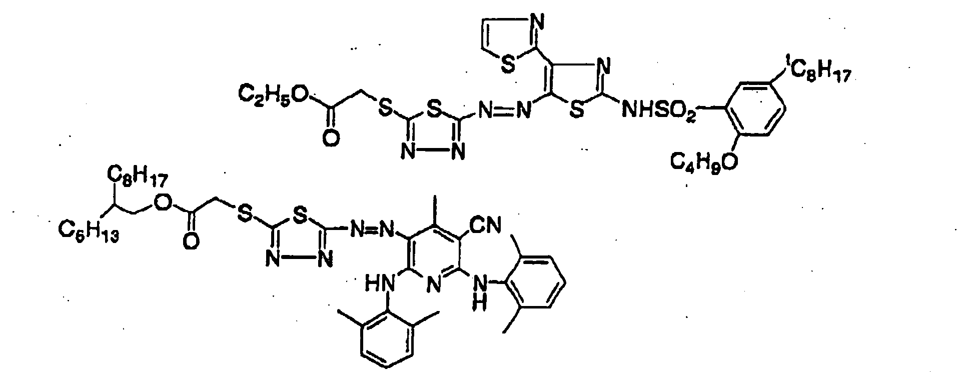

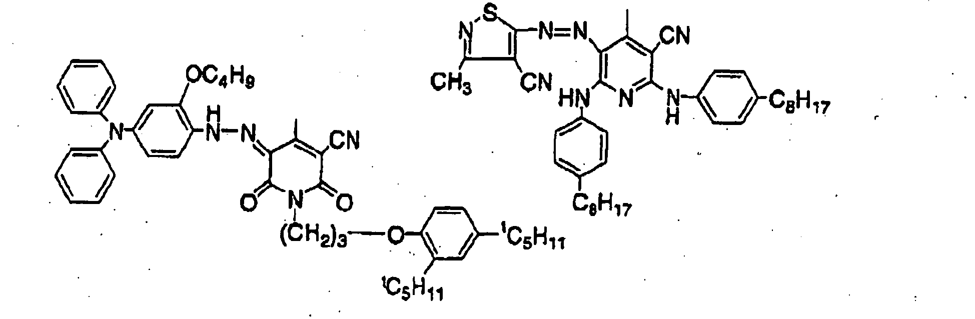

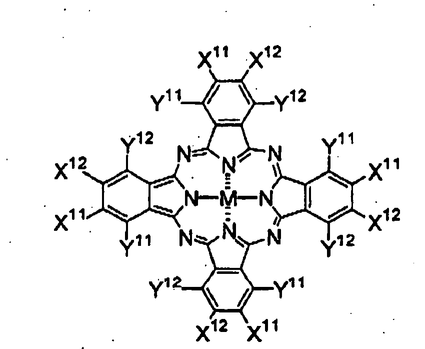

| In the formula, specific examples of respective pairs of (X¹¹,X¹²) (Y¹¹,Y¹²) may be in any order. | | | | |
|---|---|---|---|---|
| No. | M | X¹¹ | X¹² | Y¹¹,Y¹² |
| e-1 | Cu | 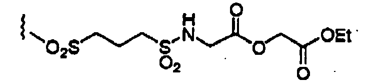 | H | H.H |
| e-2 | Cu | 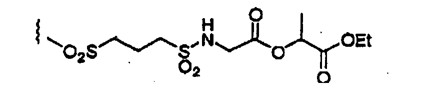 | H | H.H |
| e-3 | Cu | 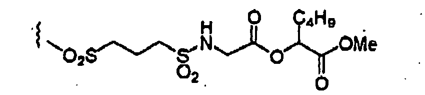 | H | H.H |
| e-4 | Cu | 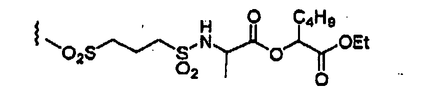 | H | H.H |
| e-5 | Cu | 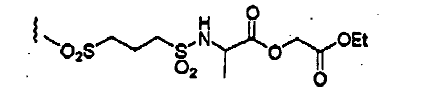 | H | H.H |
| e-6 | Cu | 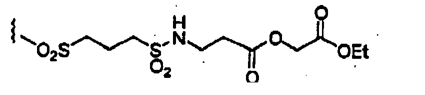 | H | H.H |
| e-7 | Cu | 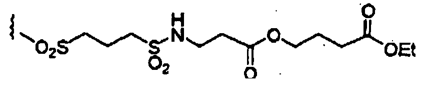 | H | H.H |
| e-8 | Cu | 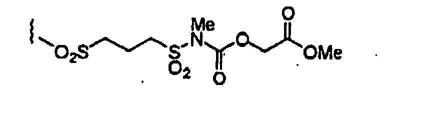 | H | H.H |
| e-9 | Cu | 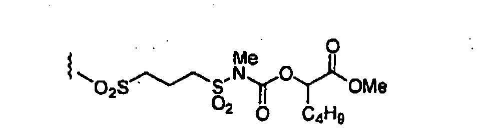 | H | H.H |
| e-10 | Cu | 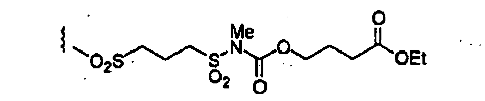 | H | H.H |
| e-11 | Cu | 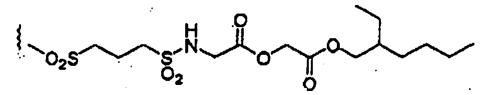 | H | H.H |
| e-12 | Cu | 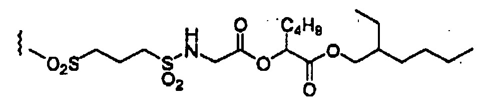 | H | H.H |
| e-13 | Cu | 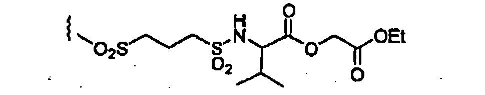 | H | H.H |
| e-14 | Cu | 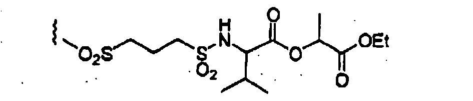 | H | H.H |
| e-15 | Cu | 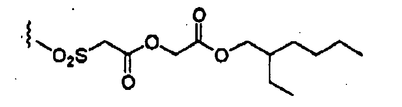 | H | H.H |
| e-16 | Cu | 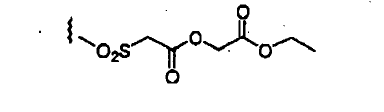 | H | H.H |
| e-17 | Cu | 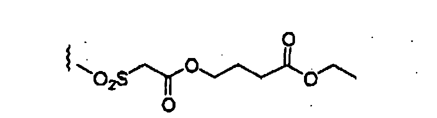 | H | H.H |
| e-18 | Cu | 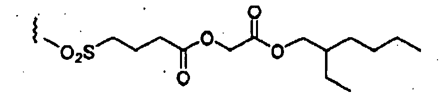 | H | H.H |
| e-19 | Cu | 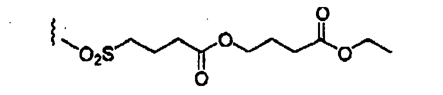 | H | H.H |
| e-20 | Cu | 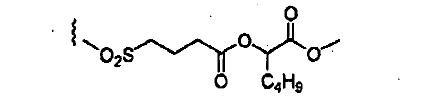 | H | H.H |
| e-21 | Cu | 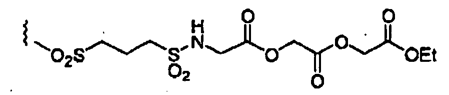 | H | H.H |
| e-22 | Cu | 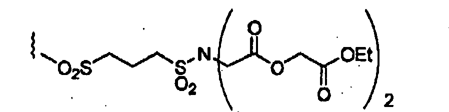 | H | H.H |
| e-23 | Cu | 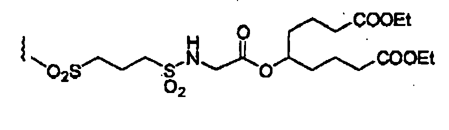 | H | H.H |
| e-24 | Cu | 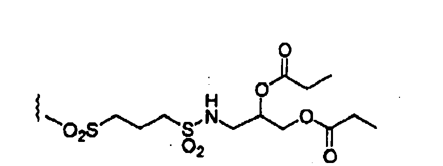 | H | H.H |
| e-25 | Cu | 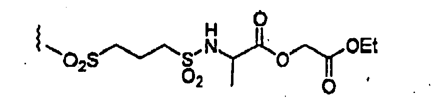 | H | H.Cl |
| e-26 | Cu | 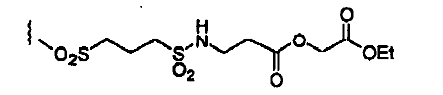 | H | H.Cl |
| e-27 | Cu | 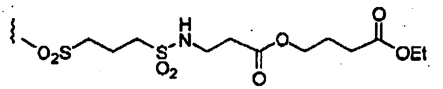 | H | H.Cl |
| e-28 | Cu | 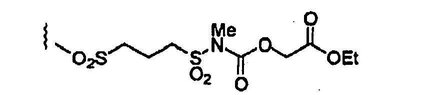 | H | H.Cl |
| e-29 | Cu | 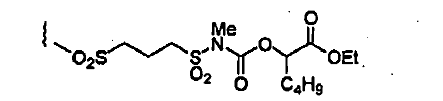 | H | H.Cl |
| e-30 | Cu | 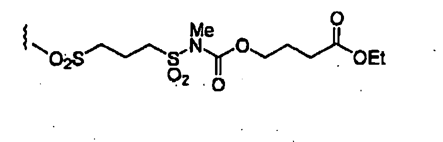 | H | H.Cl |

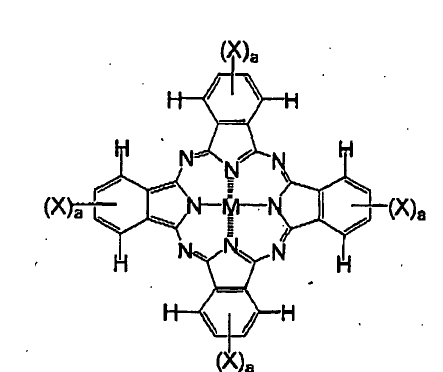

| No. | M | x | a |
|---|---|---|---|
| e-31 | Cu | 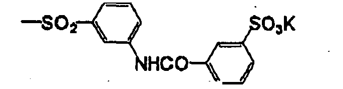 | 1 |
| e-32 | Cu | 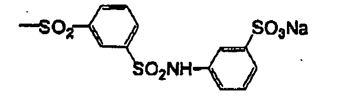 | 1 |
| e-33 | Cu | 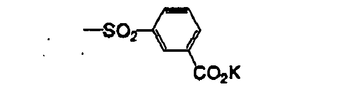 | 1 |
| e-34 | Ni | 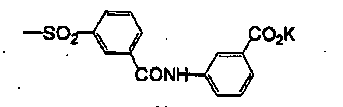 | 1 |
| e-35 | Cu | 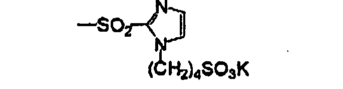 | 1 |
| e-36 | Cu | 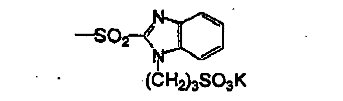 | 1 |
| e-37 | Cu | 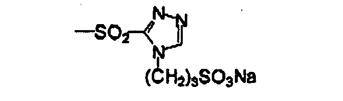 | 1 |
| e-38 | Cu | 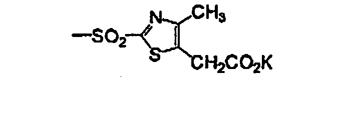 | 1 |
| e-39 | Cu | 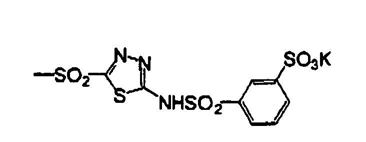 | 1 |
| e-40 | Cu | 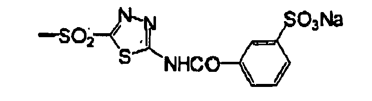 | 1 |
| e-41 | Cu | 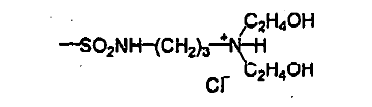 | 1 |
| e-42 | Cu | 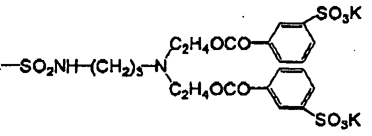 | 1 |
| e-43 | Cu | 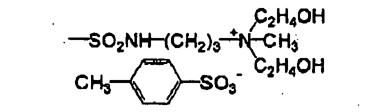 | 1 |
| e-44 | Cu | 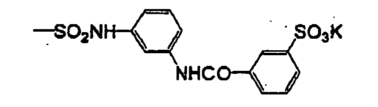 | 1 |
| e-45 | Cu | 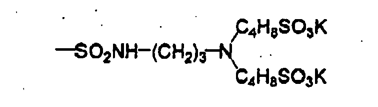 | 1 |
| e-46 | Ni | 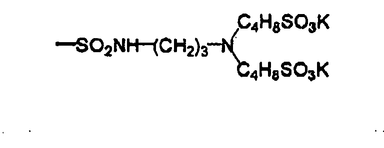 | 1 |
| e-47 | Zn | 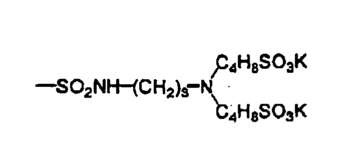 | 1 |
| e-48 | Cu | 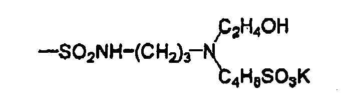 | 1 |
| e-49 | Cu | 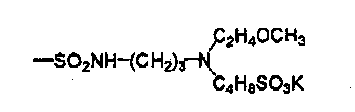 | 1 |
| e-50 | Cu | 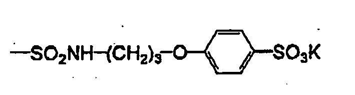 | 1 |

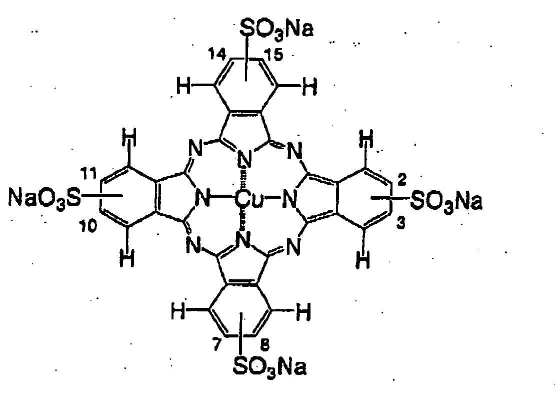

Regarding these colorants, 1 to 20 % by mass in terms of solid contents are preferably added, and more preferably 2 to 10 % by mass.

### OTHER COMPONENTS

Hereinafter is a description of various additives used as required.

### Ultraviolet absorber

In the present invention, an ultraviolet absorber may be used from the viewpoint of improving the weather resistance and preventing discoloration of the obtained image.

Examples of the ultraviolet absorber include benzotriazol compounds described in JP-A Nos. S58-185677, S61-190537, H02-782, H05-197075 and H09-34057; benzophenone compounds described in JP-A Nos. S46-2784 and H05-194483, and US Pat. No. 3214463; cinnamic acid compounds described in JP-B Nos. S48-30492 and S56-21141, and JP-A No.10-88106; triazine compounds described in JP-A Nos. H04-298503, H08-53427, H08-239368, and H10-182621, and JP-B No. 08-5012911; compounds described in Research Disclosure No. 24239; and compounds which absorb ultraviolet rays to generate fluorescence, such as stilbene and benzoxazol compounds, being so-called fluorescent brightening agents.

The dosage is suitably selected according to the object, however generally this is about 0.5 to 15 % by mass in terms of solid contents.

### Sensitizer

The ink composition of the present invention may be added with a sensitizer as required with an object of improving the acid generating efficiency of the photo-acid generator and elongating the wavelength of the photosensitized wavelength. The sensitizer may be anything as long as it sensitizes the photo-acid generator in an electron-transfer mechanism or an energy-transfer mechanism. Preferred examples thereof include aromatic polycondensed compounds such as anthracene, 9,10-dialkoxyanthracene, pyrene, and perylene, aromatic ketone compounds such as acetophenone, benzophenone, thioxanthone, and Michler's ketone, and heterocycle compounds such as phenothiazine, and N-aryloxazolidione. The dosage is suitably selected according to the object, however generally 0.01 to 1 mole %, and preferably 0.1 to 0.5 mole % is used with respect to the photo-acid generator.

### Anti-oxidant

An anti-oxidant may be added in order to improve the stability of the ink composition. Examples of the anti-oxidant include ones described in European Patent Publication Nos. 223739, 309401, 309402, 310551, 310552, and 459416, German Patent Publication No. 3435443, JP-A Nos. S54-48535, S62-262047, S63-113536, and S63-163351, JP-A No.02-262654, JP-A No.02-71262, JP-A No.03-121449, JP-A No.05-61166, JP-A No.05-119449, US Patent No. 4814262, and US Patent No. 4980275.

The, dosage is suitably selected according to the object, however generally this is about 0.1 to 8 % by mass in terms of solid contents.

### Discoloration inhibitor

Various organic compounds and metal complexes can be used as a discoloration inhibitor in the ink composition of the present invention. Examples of the organic discoloration inhibitor include hydroquinones, alkoxyphenols, dialkoxyphenols, phenols, anilines, amines, indans, chromans, alkoxyanilines, and heterocycles. Examples of the metal complexes include a nickel complex and a zinc complex. Specific examples thereof include the compounds disclosed in the cited patents described in the I or J paragraph of the VII section of Research Disclosure No. 17643, and Research Disclosure No. 15162, the left column of page 650 of Research Disclosure No. 18716, page 527 of Research Disclosure No. 36544, and page 872 of Research Disclosure No. 307105, and Research Disclosure No. 15162, and compounds included in the formulae of the representative compounds and examples of the compounds described in JP-A No.62-215272, page 127 to 137.

The dosage is suitably selected according to the object, however generally this is about 0.1 to 8 % by mass in terms of solid contents.

### Electroconductive salts

With an object of controlling the ejecting property, electroconductive salts such as potassium thiocyanate, lithium nitrate, ammonium thiocyanate, and dimethylamine hydrochloride may be added into the ink composition of the present invention.

### Solvent

In order to improve the adhesiveness onto the recording medium, it is also effective to add a trace amount of organic solvent into the ink composition of the present invention.

Examples of the solvent include: ketone solvents such as acetone, methylethyl ketone, diethyl ketone; alcohol solvents such as methanol, ethanol, 2-propanol, 1-propanol, 1-butanol, and tert-butanol; chlorinated solvents such as chloroform and methylene chloride; aromatic solvents such as benzene and toluene; ester solvents such as ethyl acetate, butyl acetate, and isopropyl acetate; ether solvents such as diethyl ether, tetrahydrofuran, and dioxane; and glycolether solvents such as ethylene glycol monomethylether and ethylene glycol dimethylether.

In this case, the effective addition is within a range not causing problems such as solvent resistance and VOC. The amount thereof is preferably within a range of 0.1 to 5 % by mass, and more preferably 0.1 to 3 % by mass with respect to the total ink composition.

### Polymer compound

In order to adjust the film property, various polymer compounds may be added into the ink composition of the present invention. Examples of the polymer compounds include an acrylic polymer, a polyvinyl butyral resin, a polyurethane resin, a polyamide resin, a polyester resin, an epoxy resin, a phenol resin, a polycarbonate resin, a polyvinylformal resin, a shellac, a vinyl resin, an acrylic resin, a rubber resin, waxes, and other natural resins. Two types of these may be used in combination. Among these, preferred is a vinyl copolymer obtained by the copolymerization of acrylic monomers. Furthermore, copolymers including "carboxyl group comprising monomcrs" , "alkylester methacrylate" , or "alkylester acrylate" as a structural unit can be also preferably be used as a copolymer composition of the polymer binding material.

### Surfactant

A surfactant may be added to the ink composition of the present invention.

Examples of the surfactant include those described in JP-A Nos. S62-173463 and S62-183457. Examples thereof include: anionic surfactants such as dialkyl sulfosuccinate, alkyl naphthalenesulfonate, and fatty acid salt; nonionic surfactants such as polyoxyethylene alkyl ether, polyoxyethylene alkyl aryl ether, acetylenic glycol, and polyoxyethylenelpolyoxypropyrene block copolymer; and cationic surfactants such as alkylamine salt, and quaternary ammonium salt. An organic fluoro compound may be mused instead of the surfactant. The organic fluoro compound is preferably hydrophobic. Examples of the organic fluoro compound include fluorine-comprising surfactants, oily fluorine-comprising compounds (such as fluorine oil), and fluorine-comprising solid resins (such as ethylene tetrafluoride resin). The organic fluoro compounds are described in JP-B No.57-9053 (column 8 to 17), and JP-A No.62-135826.

In addition, leveling addition agents, matte agents, waxes for adjusting the film property, and a tackifier which does not inhibit the polymerization, to improve the adhesiveness onto the recording medium such as polyolefine or PET may be added as necessary.

Specific example of the tackifier include cohesive polymers of high molecular weight described in JP-A No. 2001-49200, page 5 to 6 (for example, a copolymer having an ester of (meta)acrylate and alcohol including an alkyl group having 1 to 20 carbon atoms, an ester of (meta)acrylate and alicyclic alcohol having 3 to 14 carbon atoms, and an ester of (meta)acrylate and aromatic alcohol having 6 to 14 carbon atoms), and tackifying resins of low molecular weight having a polymerizable unsaturated bond.

### Preferred property of ink composition

Considering the ejecting property, the viscosity of the ink composition of the present invention is preferably 7 to 30 mPa.s, and more preferably 7 to 20 mPa.s at the temperature at the time of ejection. It is preferred to suitably adjust and determine the composition ratio so that the viscosity is within the above range. The ink viscosity is 35 to 500 mPa.s, and preferably 35 to 200 mPa.s at room temperature (25 to 30°C). By setting a high viscosity at room temperature, even if a porous recording medium is used, it becomes possible to prevent ink permeation into the recording medium, to decrease the uncured monomer, and to reduce odor. Furthermore, dot bleeding at the time of ink droplet spotting can be suppressed, resulting in improvement in the image quality. If the ink viscosity at 25 to 30°C is less than 35 mPa.s, the effect of preventing bleeding is insufficient. Conversely if it is more than 500 mPa.s, problems occur in the ink liquid delivery.

The surface tension of the ink composition of the present invention is preferably 20 to 30 mN/m, and more preferably 23 to 28 mN/m. If recording is performed onto various recording media such as polyolefine, PET, a coated paper, and an uncoated paper, the surface tension is preferably 20 mN/m or more from the viewpoint of bleeding and permeation, and preferably 30 mN/m or less from the viewpoint of wettability.

The ink composition of the present invention adjusted in this manner is preferably used as an inkjet recording ink. If it is used as an inkjet recording ink, the ink composition is ejected onto a recording medium by an inkjet printer, and then the ejected ink composition is cured by irradiating radiation to perform recording.

Since the image area is cured by irradiation of radiation such as ultraviolet rays, and the image area has excellent strength, the printed material obtained by the ink can be used for various usages such as formation of an ink receiving layer (image area) of a planographic printing plate, in addition to image formation by the ink.

### INKJET RECORDING METHOD AND INKJET RECORDING APPARATUS

Next is a description of an inkjet recording method and an inkjet recording apparatus, suitably employable for the present invention.

The inkjet recording method comprises ejecting the ink composition of the present invention onto a recording medium by an inkjet printer, and curing the ejected ink composition by irradiating radiation.

In the inkjet recording method, it is preferable that the ink composition is heated to 40 to 80°C and the ink composition viscosity is decreased to 7 to 30 mPa.s, then ejected. By using this method, a high ejecting stability can be achieved. The radiation curable ink composition generally has a greater viscosity than that of an aqueous ink. Therefore the viscosity greatly fluctuates due to the temperature fluctuation at the time of ink ejection. The fluctuation of the ink viscosity has a great direct affect on the droplet size and the droplet ejecting speed, causing deterioration in the image quality. Therefore, it is required to keep the ink composition temperature at the time of ink ejection as constant as possible. The control range of the ink composition temperature is suitably ±5°C, preferably ±2°C, and more preferably ±1 °C with respect to the set temperature.

One characteristic of the inkjet recording apparatus is that it comprises a stabilizing device for the ink composition temperature. Regarding the portion to be kept at a constant temperature, all piping systems and members from the ink tank (or intermediate tank, if any) to the nozzle ejecting surface become the subject.

The method of controlling the temperature is not specifically limited, however for example, it is preferable to provide a plurality of temperature sensors in the respective piping sites so as to control the heating according to the ink composition flow rate and the environmental temperature. Moreover, the head unit to be heated is preferably thermally blocked or insulated so that the main body of the apparatus is not affected by the outside temperature. In order to shorten the printer start-up time required for heating, or to reduce the heat energy loss, it is preferable to thermally insulate from the other parts, and decrease the heat capacity of the overall heating unit.

Next is a description of the irradiation condition of radiation. The basic irradiation method is disclosed in JP-A No.60-132767. Specifically, light sources are provided on the opposite sides of a head unit, and the head and the light sources are scanned by a shuttle method. Irradiation is performed after a fixed time after the ink is spotted. Furthermore, the curing is completed by another light source without driving. In WO99/54415, a method of using an optical fiber, and a method wherein a collimated light source is faced to a mirror surface provided on the side face of a head unit to irradiate UV light to a recording unit are disclosed as an irradiation method. In the present invention, these irradiation methods can be used.

Moreover, in the present invention, it is desirable to heat the ink composition to a fixed temperature, and to set the time from spotting to irradiation, to 0.01 to 0.5 seconds, preferably 0.01 to 0.3 seconds, and more preferably 0.01 to 0.15 seconds. Such a control of the time from spotting to irradiation within a very short time enables preventing bleeding of the spotted ink before being cured. Moreover, since a porous recording medium can also be exposed to light before the ink composition is permeated to the deep part where the light source cannot reach, the residual unreacted monomer can be reduced, resulting in odor reduction. By using the abovementioned inkjet recording method and the ink composition of the present invention together, a great synergistic effect is produced. In particular, if an ink composition having an ink viscosity of 35 to 500 MP.s at 25C° is used, a great effect can be obtained. By employing such a recording method, with respect to various recording media having various surface wettability, the dot diameter of the spotted ink can be kept constant and the image quality is improved. In order to obtain a color image, it is preferable to superpose inks in the order from less bright color to brighter color. If inks of less bright color are superposed, it is hard for radiation to reach to the ink at the bottom, readily causing inhibition of curable sensitivity, increase in residual monomer, generation of odor, and deterioration of adhesiveness. Moreover, in the irradiation, all colors can be ejected and exposed to light all in at once, however each color is preferably exposed to light one by one from the viewpoint of accelerating the curing.

The inkjet recording apparatus used in the present invention is not specifically limited, and a commercially available inkjet recording apparatus can be used. That is; in the present invention, recording can be performed on a recording medium using a commercially available inkjet recording apparatus.

### RECORDING MEDIUM

The recording medium to which the ink composition of the present invention can be applied is not specifically limited, and papers such as a normal uncoated paper and a coated paper, various non-absorptive resin materials used for so-called soft packaging, or a resin film thereof formed into a film shape may be used. Examples of various plastic films include a PET film, an OPS film, an OPP film, an ONy film, a PVC film, a PE film, and a TAC film. Other plastics that can be used as a material of the recording medium include a polycarbonate, an acrylic resin, ABS, polyacetal, PVA, and rubbers. Moreover, metals or glasses may be used as a recording medium.

Since the ink composition of the present invention has less heat shrinkage at the time of curing and superior adhesiveness onto a substrate (recording medium), there is an advantage of being capable of forming a very fine image even on a film that is easily curled or deformed by ink shrinkage on curing or heating during the curing reaction, such as a PET film, an OPS film, an OPP film, an ONy film, and a PVC film that can be shrunk by heat.

### PLANOGRAPHIC PRINTING PLATE

Preferred applications of the ink composition of the present invention include usage for a planographic printing plate.

The ink composition of the present invention is ejected onto a hydrophilic substrate using an inkjet recording apparatus or the like, and then the ink composition is cured by irradiating radiation so as to form a hydrophobic area. By so doing, the hydrophobic ink receiving area is formed in the form of image on the surface of the hydrophilic substrate. If the printing ink and an aqueous component are supplied thereto, the aqueous component is held in the exposed area of the hydrophilic substrate, and the printing ink is held in the hydrophobic area, so that the printing process can be performed thereafter at once.

Since the ink composition of the present invention shows excellent curability by irradiation of radiation, the planographic printing plate of the present invention applied therewith has excellent printing durability and an excellent quality image area. Moreover, using the inkjet recording apparatus, an image area of a very fine planographic printing plate can be formed directly from the digital data.

For the ink composition used for producing the planographic printing plate, the abovementioned ink composition of the present invention may be applied as is.

### Substrate

Here is a description of a substrate that can be preferably used for producing the planographic printing plate of the present invention.

The substrate used for the planographic printing plate of the present invention is not particularly limited as long as it is a dimensionally stable plate-like substrate. If the material constituting the substrate is hydrophilic, it can be used as is. Moreover, the surface of the plate-like material constituting the substrate may be used by hydrophilizing it.

Examples of the material constituting the substrate include a paper, a paper laminated with a plastic (such as polyethylene, polypropylene, and polystyrene), a metal plate (such as aluminum, zinc, and copper), a plastic film (such as cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinylacetal), and a paper or a plastic film on which the abovementioned metal is laminated or deposited. Preferred examples of the substrate include a polyester film and an aluminum plate. Among them, preferred is an aluminum plate having excellent dimensional stability at relatively low cost.

The aluminum plate is a pure aluminum plate, an alloy plate having aluminum as the main component and comprising a trace amount of different elements, or an aluminum or aluminum alloy thin film laminated with a plastic. Examples of the different elements comprised in the aluminum alloy include silicon, iron, manganese, copper, magnesium, chromium, zinc, bismuth, nickel, and titanium. The content of the different elements in the alloy is preferably 10 % by mass or less. In the present invention, a pure aluminum plate is preferred. However, since it is difficult to produce a completely pure aluminum from the point of refining techniques, a trace amount of different elements may be comprised. The composition of the aluminum plate is not specified and publicly known materials can be suitably used.

The thickness of the substrate is preferably 0.1 to 0.6 mm, and more preferably 0. 15 to 0.4 mm.

Prior to using the aluminum plate, it is preferred to apply surface treatments such as surface roughening and anodic oxidation. Such surface treatments facilitate improvement of the hydrophilicity and maintenance of the adhesiveness of the image recording layer and the substrate. Prior to the surface roughening of the aluminum plate, a degreasing treatment using, for example, a surfactant, an organic solvent or an alkaline aqueous solution is performed for removing rolling oil on the surface.

The surface roughening of the aluminum plate is performed by various methods, such as mechanical surface roughening, electrochemical surface roughening (surface roughening in which the surface is electrochemically dissolved), and chemical surface roughening (surface roughening in which the surface is chemically and selectively dissolved).

As the method of mechanical surface roughening, publicly known methods such as a ball polishing method, a brush polishing method, a blast polishing method, and a buff polishing method may be used. Moreover, at rolling the aluminum, a transcriptional method in which a corrugated shape is transcripted using a corrugated roller may be used.

The method of electrochemical surface roughening includes a method performed by alternating current or direct current in an electrolyte comprising an acid such as hydrochloric acid or nitric acid. Moreover, examples thereof include a method using a mixed acid described in JP-A No.54-63902.

After the surface roughening, the aluminum plate is subjected to alkali etching using a solution such as potassium hydroxide and sodium hydroxide as necessary. Furthermore, a neutralization treatment is performed, and then an anodic oxidation is performed in order to improve the abrasion resistance as desired.

In the anodic oxidation of the aluminum plate, any electrolyte may be used as long as it can form a porous oxide coating. Generally used are, for instance, a sulfuric acid, a hydrochloric acid, an oxalic acid, a chromic acid, or a mixture thereof. The concentration of these electrolytes is suitably determined depending on the type of electrolyte.

Since the condition for anodic oxidation variously vary depending on the type of electrolyte to be used, they cannot be indiscriminately specified. However, in general, it is preferable such that the electrolyte concentration is 1 to 80 % by mass solution, the liquid temperature is 5 to 70°C, the current density is 5 to 60 A/dm², the electric voltages is 1 to 100 V, and the electrolysis time is 10 seconds to 5 minutes. The amount of the anodic oxide coating formed is preferably 1.0 to 5.0 g/m², and more preferably 1.5 to 4.0 g/m². Within this range, excellent printing durability and excellent scratch resistance in the non-image area of the planographic printing plate may be obtained.

The substrate used in the present invention may be a substrate as is, that has been surface treated and has an anodic oxide coating. However, an expansion treatment or sealing of microspores in the anodic oxide coating described in JP-A No. 2001-253181 and JP-A No. 2001-32236, and a surface hydrophilizing in which the substrate is soaked in a solution comprising a hydrophilic compound may be suitably selected and performed, as necessary, in order to further improve the adhesiveness with the top layer, the hydrophilicity, the fouling resistance, the thermal insulation property, and the like. Of course, the expansion treatment and sealing are not limited to those described above, and any existing publicly known method may be performed.

### Sealing

Possible examples of the sealing besides vapor sealing include sealing by a solution comprising inorganic fluorine compounds such as treatment using zirconate fluoride only, treatment by sodium fluoride, vapor sealing by adding lithium chloride, and sealing by hot water.

Among them, preferred are sealing by a solution comprising inorganic fluorine compounds, sealing by vapor, and sealing by hot water.

### Hydrophilizing

Examples of the hydrophilizing used in the present invention include an alkali metal silicate method described in US Patent Nos. 2714066, 3181461, 3280734, and 3902734. In this method, a substrate is soaked in a solution such as sodium silicate, or is electrolyzed. Other examples include a method of treatment using potassium zirconate fluoride described in JP-B No.36-22063, and a method of treatment using a polyvinylsulfonic acid described in US Patent Nos. 3276868,4153461, and 4689272.

The substrate of the present invention preferably has an arithmetical mean deviation of profile of 0.10 to 1.2 µm. Within this range, excellent adhesiveness with an image recording layer (image area), excellent printing durability, and excellent fouling resistance can be obtained.

### EXAMPLES

Hereinafter is a specific description of the present invention with reference to the following examples. However, the present invention is not limited to the forms of these examples.

### Example 1-1

### <<Preparation of pigment dispersoid>>

According to the method described below, the respective pigment dispersoids 1 of yellow, magenta, cyan, and black were prepared. The dispersion condition was suitably adjusted using a publicly known dispersing device so that the mean particle diameter of each pigment particle was within a range between 0.2 and 0.3 µm. Then, filter filtering was performed under heating, for preparation.

### (Yellow pigment dispersoid 1)

| | |
|---|---|
| • C.I. pigment yellow 12 | 10 parts by mass |
| • Dispersing polymer (Solsperse series made by Zeneca Co.) | 5 parts by mass |
| • OXT-221 (oxetane compound: made by Toagosei Co. Ltd.) | 85 parts by mass |
| (Magenta pigment dispersoid 1) | |
| • CL pigment red 57:1 | 15 parts by mass |
| Dispersing polymer (Solsperse series made by Zeneca Co.) | 5 parts by mass |
| • OXT-221 (oxetane compound: made by Toagosei Co. Ltd.) | 80 parts by mass |
| (Cyan pigment dispersoid 1) | |
| • C.I. pigment red 15:3 | 20 parts by mass |
| • Dispersing polymer (Solsperse series made by Zeneca Co.) | 5 parts by mass |
| • OXT-221 (oxetane compound: made by Toagosei Co. Ltd.) | 75 parts by mass |
| (Black pigment dispersoid 1.) | |
| • C.I. pigment black 7 | 20 parts by mass |
| • Dispersing polymer (Solsperse series made by Zeneca Co.) | 5 parts by mass |
| • OXT-221 (oxetane compound: made by Toagosei Co. Ltd.) | 75 parts by mass |

### «Preparation of ink>>

The following components were mixed, and filtered with a filter to prepare inks of respective colors.

### (Yellow ink 1)

| | |
|---|---|
| Cationic polymerizable compound (a); | |
| Celloxide 2021 | 35 g |
| (epoxy compound: made by Daicel UCB Corp.) | |
| OXT-221 | 55 g |
| (oxetane compound: made by Toagosei Co. Ltd.) | |
| • photo-acid generator (b); | |
| The above compound example (b-27)/(b-32) = 1/2 | 5 g |
| • specific base component (c1); | |
| The above specific example (C-2) | 0.03 g |
| • colorant (e) (the pigment dispersoid); | |
| Yellow pigment dispersoid 1 | 5 go |
| (Magenta ink 1) | |
| • cationic polymerizable compound (a); | |
| Celloxide 2021 | 35 g |
| (epoxy compound: made by Daicel UCB Corp.) | |
| OXT-221 | 55 g |
| (oxctane compound: made by Toagosei Co. Ltd.) | |
| • photo-acid generator (b); . | |
| The above compound example (b-3) | 5 g |
| • specific base component (c1); | |
| The above specific example (C-11) | 0.03 g |
| • organic acidic component (d); | |
| phenoxyacetic acid | 0.03 g |
| • colorant (e) (the pigment dispersoid); | |
| Magenta pigment dispersoid 1 | 5 g |
| (Cyan ink 1) | |
| • cationic polymerizable compound (a); | |
| Celloxide 2021 | 35 g |
| (epoxy compound: made by Daicel UCB Corp.) | |
| OXT-221 | 55 g |
| (oxetane compound: made by Toagosei Co. Ltd.) | |
| • photo-acid generator (b); | |
| The above compound example (b-75) | 5 g |
| • specific base component (c1); | |
| The above specific example (C-14) | 0.03 g |
| • organic acidic component (d); | |
| salicylic acid | 0.03 g |
| • colorant (e) (the pigment dispersoid); | |
| Cyan pigment dispersoid 1 | 5 g |
| (Black ink 1) | |
| • cationic polymerizable compound (a); | |
| Celloxide 2021 | 35 g |
| (epoxy compound: made by Daicel UCB Corp.) | |
| OXT-221 | 55 g |
| (oxetane compound: made by Toagosei Co. Ltd.) | |
| • photo-acid generator (b); | |
| The above compound example (b-10) | 5 g |
| • specific base component (c1); | |
| The above specific example (C-17) | 0.03 g |
| • organic acidic component (d): | |
| cyclohexanecarboxylic acid | 0.03 g |
| • colorant (e) (the pigment dispersoid); | |
| Black pigment dispersoid 1 | 5 g |
| • Sensitizer | |
| 9,10-dimethoxyanthracene | 0.5 g |

### <<Inkjet image recording>> (Evaluation of multicolor image)

Next, recording on a recording medium was performed using a commercially available inkjet recording apparatus having a piezo type inkjet nozzle. The ink supply system comprised an initial tank, a supply piping, an ink supply tank immediately in front of an inkjet head, a filter, and a piezo type inkjet head. The heat insulation and heating were performed in the part from the ink supply tank to the inkjet head. The temperature sensors were respectively provided in the vicinity of the ink supply tank and the nozzle of the inkjet head to perform temperature control so that the nozzle part was always at 70°C ±2°C. The piezo type inkjet head was driven so that multisize dots of 8 to 30 pl could be ejected with a resolution of 720 x 720 dpi. After the spotting, the exposure system, the main scanning speed, and the ejection frequency were adjusted so that UV-A rays were concentrated to an exposure illuminance of 100 mW/cm², and the irradiation was started after 0.1 second since the ink had been spotted onto the recording medium. Moreover, the exposure time was variable to irradiate the exposure energy. dpi in the present invention denotes the number of dots per 2.54 cm.

The above ink of each color prepared was respectively ejected at an environmental temperature of 25°C, in the order of black → cyan → magenta → yellow, and the ultraviolet rays were irradiated for each color. Light exposure was performed such that the total exposure energy per one color was uniformly 300 mJ/cm², as an energy for completely curing, to eliminate the cohesiveness in a touch test. The respective color images were recorded on; a grained aluminum substrate, a biaxial oriented transparent polypropylene film that was surface treated to give printability, a soft polyvinyl chloride sheet, a cast coated paper, and a commercially available recycled paper, as the recording medium. As a result, all provided an image of high resolution without dot bleeding. Furthermore, on a woodfree paper, the ink did not penetrate to the backside, and the ink was sufficiently cured with almost no odor due to unreacted monomer. Moreover, the ink recorded onto the film had sufficient flexibility. Even if the film was bent, no cracking occurred in the ink, and there was no problem in the adhesiveness test by cellophane-tape peeling.

### Examples 1-2 to 1-9, Comparative Examples 1-1 and 1-2

### <<Preparation of ink>>

The following components were mixed, and filtered with a filter to prepare the ink compositions of example 1-2 to 1-9 (magenta inks 2-1 to 2-8). Moreover, in the same manner as that of example 1-9 except that the specific base component (c1) and the organic acidic component (d) were not comprised, the ink composition of comparative example 1-1 (magenta ink 2-9) was obtained. Furthermore, in the same manner as that of example 1-9 except that the specific base component (c1) was replaced by the comparative base composition (10) and the organic acidic component (d) was not comprised, the ink composition of comparative example 1-2 (magenta ink 2-10) was obtained.

### (Magenta inks 2-1 to 2-10)

| | |
|---|---|
| • cationic polymerizable compound (a) (compound described in Table 1-1) | 90 g |
| • photo-acid generator (b) (compound described in Table 1-1) | 5 g |
| • specific base component (c1) (or comparative base composition) | 0.03 g |
| (the Specific example described in Table 1-1, added as required) | |
| • organic acidic component (d) | 0.03g |
| (the organic acidic component described in Table 1-1, added as required) | |
| • colorant (e) (the above magenta pigment dispersoid 1) | 5 g |
| • Sensitizer (the sensitizer described in Table 1-1, added as required) | 0.5 g |

The details of the cationic polymerizable compound (a) described in Table 1-1 are as follows.
Cationic polymerizable compound (1):
   Celloxide 2021 (epoxy: made by Daicel UCB Corp.) / OXT-221 (oxetane: made by Toagosei Co. Ltd.) = 35/55 mixture
Cationic polymerizable compound (2):
   Celloxide 3000 (epoxy: made by Daicel UCB Corp.) / OXT-211 (oxetane: made by Toagosei Co. Ltd.) = 50/40 mixture
Cationic polymerizable compound (3):
   bisphenol A-diglycidyl ether / OXT-221 (oxetane: made by Toagosei Co. Ltd.) = 40/50 mixture
Cationic polymerizable compound (4):
   Celloxide 2021 (epoxy: made by Daicel UCB Corp.) OXT-101 (oxetane: made by Toagosei Co. Ltd.) = 55/35 mixture
The details of the organic acidic component described in Table 1-1 are as follows.
Organic acidic component (5): phenoxyacetic acid
Organic acidic component (6): cyclopentanecarboxylic acid
Organic acidic component (7): salicylic acid

The details of the sensitizer described in Table 1-1 are as follows.

### Sensitizer (8): 9,10-dimethoxyanthracene

### Sensitizer (9): pyrene

The details of the comparative base composition described in Table 1-1 are as follows.

### Comparative base composition (10): octylamine

In the ink composition made in the above examples and comparative examples, the ink viscosity at the ejection temperature was within a range between 7 and 20 mPa.s.

### [Inkjet image recording] (Evaluation of monocolor image)

In the inkjet image recording method described in example 1-1, preparation was done as above. In the same manner as that of example 1-1 except that only the ink compositions of examples 1-2 to 1-9 and comparative examples 1-1 and 1-2 (magenta inks 2-1 to 2-10) were used, magenta image printing was performed.

### [Evaluation of inkjet image]

Next, the respective ink compositions of the examples and comparative examples (magenta inks 2-1 to 2-10) were respectively evaluated in terms of; sensitivity required for curing, storage stability, permeability into a commercially available recycled paper, ink bleeding in a grained aluminum substrate, and adhesiveness with the grained aluminum substrate.

### 1. Measurement of curing sensitivity

The amount of exposure energy (mJ/cm²) providing no stickiness on the image surface after ultraviolet ray irradiation was defined as the curing sensitivity. A lower value means a higher sensitivity.

### 2. Evaluation of storage stability

The prepared ink composition was stored at 75% RH at 60°C for 3 days, and then the ink viscosity at the ejection temperature was measured The increment of the ink viscosity was shown as the viscosity ratio of after storage/before storage. The viscosity was determined such that the storage stability was excellent if the viscosity was not changed and the ratio was closer to 1.0. The storage stability was not preferable if the ratio exceeded 1.5 since clogging may occur at the time of ejection.

### 3. Evaluation of permeability into commercially available recycled paper

The permeability of the image printed on a commercially available recycled paper was evaluated according to the following standard.
a: almost no permeation, no odor of residual monomer
b: a little permeation, a little odor of residual monomer
c: apparent permeation of ink to the backside, strong odor of residual monomer Evaluation of ink bleeding on grained aluminum substrate

The ink bleeding of the image printed onto a grained aluminum substrate was evaluated according to the following standard.
a: no bleeding between adjacent dots
b: a little bleeding of dot
c: apparently blurred image due to bleeding of dots

### 5. Evaluation of adhesiveness on grained aluminum substrate

Regarding the printed image made in the above manner, a sample without any scratches on the printed surface, and a sample with 11 × 11 vertical and horizontal cuts at intervals of 1 mm on the printed surface having 100 grids of 1 mm² according to JISK 5400 were made. Cellophane-tapes were respectively attached onto the printed surfaces and quickly peeled off at an angle of 90 degrees. The conditions of the remaining printed image and the grids were evaluated according to the following standard.
a: no peel of printed image in the grid test
b: a little peel of ink in the grid test, but almost no peel unless the ink surface was scratched
c: both were easily peeled off by cellophane-tape

### [Evaluation as planographic printing plate]

Printing was performed on a grained aluminum substrate made in the above manner using the respective ink compositions of the examples and comparative examples (magenta inks 2-1 to 2-10) to form an image. This was used as a planographic printing plate and evaluated in terms of image and printing durability.

### a. Evaluation of image

The planographic printing plate produced using the ink compositions of the examples and comparative examples was treated by a Heidel KOR-D machine. An ink [VALUES-G red for sheet-feed (made by Dainippon Ink and Chemicals, Incorporated) and a dampening water [Ecolity 2 (made by Fuji Photo Film Co. Ltd.)] were supplied to perform printing. The printed material after 100 sheets of printing, was visually evaluated according to the following standard.
a: an image without a spot peeling on the printed area nor blots in the non-printed area was obtained.
b: a spot peeling on the printed area and/or blots in the non-printed area were slightly observed.
c: a spot peeling on the printed area and/or blots in the non-printed area were observed, at a problematic level for practical use.

### b. Evaluation of printing durability

Printing was continued at once, and the number of finished printouts was compared as an index of the printing durability (comparative example 1-1 was set to 100). The greater value means higher printing durability and is more preferable.

These evaluation results are shown in Table 1-1.

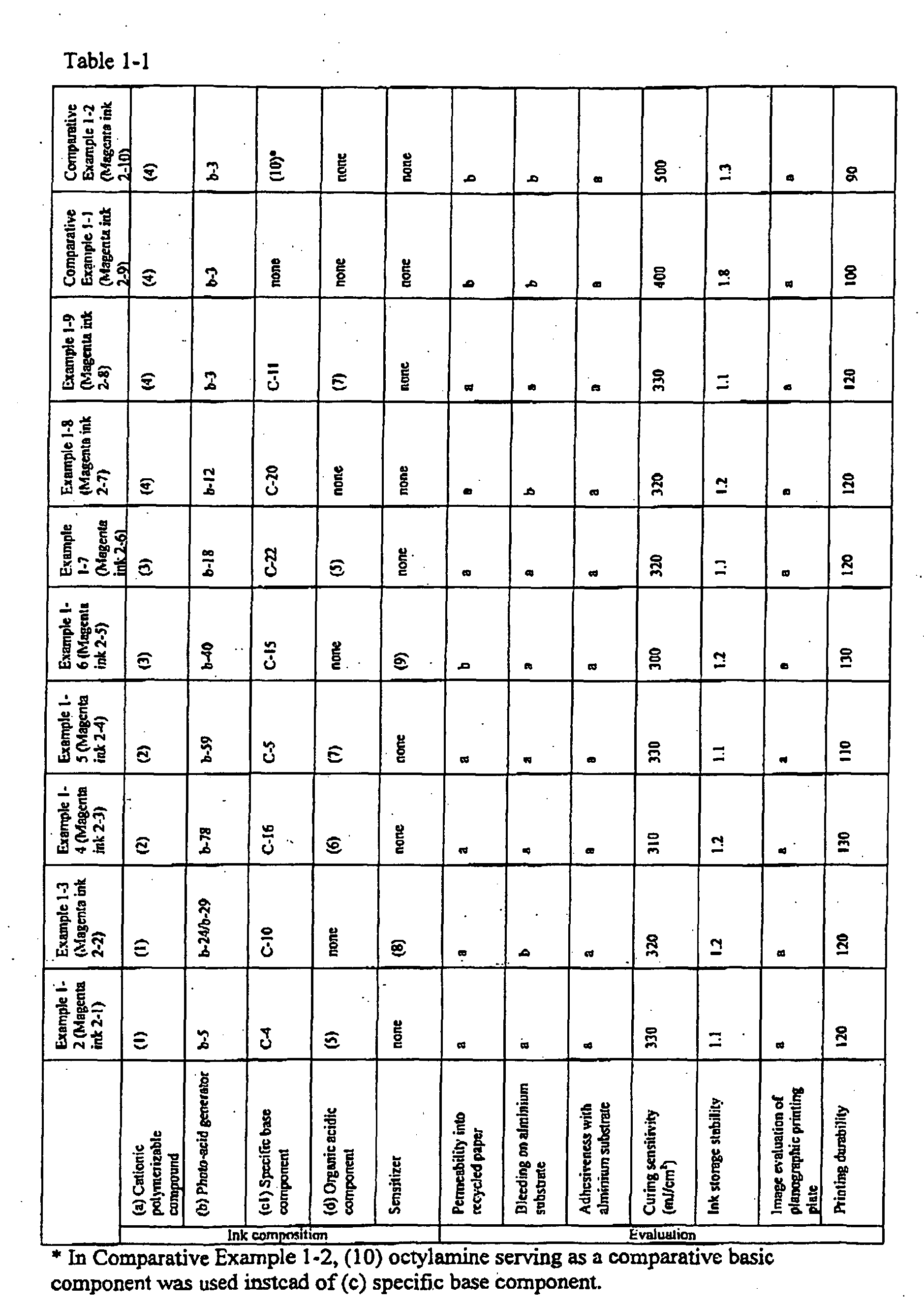

From Table 1-1, it is seen that the ink compositions of the respective examples were cured with a high sensitivity to irradiation of radiation, were capable of forming a high quality image in terms of the image formation property onto paper, and were excellent in storage stability. In this manner, it was found that in the present invention, the curing sensitivity, the bleeding suppression on a non-permeable substrate, and the ink storage stability were all achieved at the same time.

On the other hand, it was found that the ink composition of comparative example 1-1 which did not comprise the specific base component (cl), showed a problem in storage stability, and there was a slight inferiority in the permeability into recycled paper, the bleeding property on an aluminum substrate, and the curing sensitivity. Moreover, it was found that the ink composition of comparative example 1-2 where the comparative basic composition (10): octylamine was used instead of the specific base component (cl), showed an inferiority in the storage stability, a low curing sensitivity, and furthermore a slight inferiority in the permeability into a recycled paper and the bleeding property on an aluminum substrate.

Moreover, it was found that the planographic printing plate formed with an image by the ink composition of the present invention was capable of forming a high quality image and was excellent in printing durability.

The ink composition of the present invention not only enables forming a high quality image with excellent strength for use in normal printing, and obtaining high quality printed material, but also is useful as a photolithographic material since it can be suitably used for manufacturing a resist, a color filter, and an optical disk.

Moreover, by applying the inkjet recording method, the ink composition can be cured with a high sensitivity even if it is ejected on a non-absorptive recording medium, and an image area with excellent strength can be directly formed based on digital data. Consequently, the ink composition of the present invention can be suitably used for producing a planographic printing plate, in particular a large planographic printing plate of A2 or larger, and the obtained planographic printing plate has excellent printing durability.

### Example 2A-1

### <<Preparation of pigment dispersoid>>

According to the method described in example 1-1, the respective pigment dispersoids 1 of yellow, magenta, cyan, and black were prepared. The dispersion condition was suitably adjusted using a publicly known dispersing device so that the mean particle diameter of each pigment particle was within a range between 0.2 and 0.3 µm. Then, filter filtering was performed under heating, for preparation.

### «Preparation of ink»

The following components were mixed, and filtered with a filter to prepare inks of respective colors.

### (Yellow ink 1)

| | |
|---|---|
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b) [compound example (b-27)/(b-32) =1/2] | 5 g |
| • specific base component (c2A) [compound example (I-5)] | 0.05 g |
| • colorant (e) (the above yellow pigment dispersoid 1); | 5 g |

### (Magenta ink 1)

| | |
|---|---|
| cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b) [compound example (b-3)] | 5 g |
| • specific base component (c2A) [compound example (I-15)] | 0.03 g |
| • organic acidic component (d); (phenoxyacetic acid) | 0.03 g |
| • colorant (e) (the above magenta pigment dispersoid 1); | 5 g |

### (Cyan ink 1)

| | |
|---|---|
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b) [compound example (b-75)] | 5 g |
| • specific base component (c2A) [compound example (I-28)) | 0.03 g |
| • colorant (e) (the above cyan pigment dispersoid 1); | 5 g |

### (Black ink 1)

| | |
|---|---|
| • cationic polymerizable compound (a); | |
| Celloxide 2021 (epoxy compound: made by Daicel UCB Corp.) | 35g |
| OXT-221 (oxetane compound: made by Toagosei Co. Ltd.) | 55 g |
| • photo-acid generator (b) [compound example (b-10)] | 5g |
| • specific base component (c2A) [compound example (II-19)] | 0.03 g |
| • organic acidic component (d); (cyclohexanecarboxylic acid) | 0.03 g |
| • Sensitizer (9,10-dimethoxyanthracene) | 0.5 g |
| • colorant (e) (the above black pigment dispersoid 1); | 5 g |

### «inkjet image recording» (Evaluation of multicolor image)

Next, recording on a recording medium was performed using a commercially available inkjet recording apparatus having a piezo type inkjet nozzle. The ink supply system comprised an initial tank, a supply piping, an ink supply tank immediately in front of an inkjet head, a filter, and a piezo type inkjet head. The heat insulation and heating were performed in the part from the ink supply tank to the inkjet head. The temperature sensors were respectively provided in the vicinity of the ink supply tank and the nozzle of the inkjet head to perform temperature control so that the nozzle part was always at 70°C ±2°C. The piezo type inkjet head was driven so that multisize dots of 8 to 30 pl could be ejected with a resolution of 720 × 720 dpi. After the spotting, the exposure system, the main scanning speed, and the ejection frequency were adjusted so that UV-A rays were concentrated to an exposure illuminance of 100 mW/cm², and the irradiation was started after 0.1 second since the ink had been spotted onto the recording medium. Moreover, the exposure time was variable to irradiate the exposure energy. dpi in the present invention denotes the number of dots per 2.54 cm.

The above ink of each color prepared was respectively ejected at an environmental temperature of 25°C, in the order of black → cyan → magenta → yellow, and the ultraviolet rays were irradiated for each color. Light exposure was performed such that the total exposure energy per one color was uniformly 300 mJ/cm², as an energy for completely curing, to eliminate the cohesiveness in a touch test.

The respective color images were recorded on; a grained aluminum substrate, a biaxial oriented transparent polypropylene film that was surface treated to give printability, a soft polyvinyl chloride sheet, a cast coated paper, and a commercially available recycled paper, as the recording medium. As a result, all provided an image of high resolution without dot bleeding. Furthermore, on a woodfrec paper, the ink did not penetrate to the backside, and the ink was sufficiently cured with almost no odor due to unreacted monomer. Moreover, the ink recorded onto the film had sufficient flexibility. Even if the film was bent, no cracking occurred in the ink, and there was no peeling and no problem found in the adhesiveness test by cellophane-tape peeling.

### Examples 2A-2 to 2A-12, Comparative Examples 2A-1, 2A-2

### «Preparation of ink»

The following components were mixed, and filtered with a filter to prepare the ink compositions of examples 2A-2 to 2A-12. Moreover, in the same manner as that of example 2A-12 except that the specific base component (c2A) and the organic acidic component (d) were not comprised, the ink composition of comparative example 2A-(magenta ink 2) was obtained, and in the same manner as that of example 2A-1 except that octylamine was used, the ink composition of comparative example 2A-2 was obtained.

### (Magenta ink 2)

| | |
|---|---|
| • cationic polymerizable compound (a) (compound described in Table 2A-1) | 90 g |
| • photo-acid generator (b) [compound described in Table 2A-1] | 5 g |
| • specific base component (c2A) | 0.03 g |
| (the above specific example described in Table 2A-1, added as required) | |
| • organic acidic component (d) | 0.03g |
| (the organic acidic component described in Table 2A-1, added as requited) | |
| • colorant (e) (the above magenta pigment dispersoids 1); | 5 g |
| • Sensitizer (the sensitizer described in Table 2A-1, added as required) | 0.5 g |

The details of the cationic polymerizable compound (a) described in Table 2A-1 are as follows.
Cationic polymerizable compound (I):
   Celloxide 2021 (epoxy: made by Daicel UCB Corp.) /OXT-221-(oxetane: made by Toagosei Co. Ltd.) = 35/55 mixture
Cationic polymerizable compound (2):
   Celloxide 3000 (epoxy: made by Daicel UCB Corp.) / OXT-211 (oxetane: made by Toagosei Co. Ltd.) = 50/40 mixture
Cationic polymerizable compound (3):
   bisphenol A-diglycidyl ether / OXT-221 (oxetane: made by Toagosei Co. Ltd.) = 40/50 mixture
Cationic polymerizable compound (4):
   Celloxide 2021 (epoxy: made by Daicel UCB Corp.) /OXT-101 (oxetane: made by Toagosei Co. Ltd.) = 55/35 mixture

The details of the organic acidic component described in Table 2A-1 are as follows.
Organic acidic component (5): phenoxyacetic acid
Organic acidic component (6): cyclopentanecarboxylic acid
Organic acidic component (7): abietic acid
Organic acidic component (8): salicylic acid

The details of the sensitizer described in Table 2A-1 are as follows.
Sensitizer (9): 9,10-dimethoxyanthracene
Sensitizer (10): pyrene

As shown in Table 2A-1, in comparative example 2A-2, the basic compound octylamine was used instead of the specific base component (c2A).

### Comparative basic compound (11): octylamine

The pKa of a conjugate acid of specific base component (c2A) used for the ink composition was calculated by acid/base titration using HCl and NaOH standard solution in ethanol/water (7/3), and is described in Table 2A-1.

In the ink composition made in the above examples and comparative examples, the ink viscosity at the ejection temperature was within a range between 7 and 20 mPa.s.

### [Inkjet image recording] (Evaluation of monocolor image)

In the inkjet image recording method described in example 2A-1, preparation was done as above. In the same manner as that of example 2A-1 except that only the ink compositions of examples 2A-2 to 2A-12 and comparative example 2A-1 were used, magenta image printing was performed.

### [Evaluation of inkjet image]

Next, the respective ink compositions of the examples 2A-2 to 2A-12 and comparative examples were respectively evaluated in terms of; sensitivity required for curing, storage stability, permeability in a commercially available recycled paper, ink bleeding in a grained aluminum substrate, and adhesiveness with the grained aluminum substrate, in the same manner as that of example 1-1.

### [Evaluation as planographic printing plate]

Printing was performed on the grained aluminum substrate made in the above manner using the respective ink compositions of the examples 2A-2 to 2A-12 and comparative examples to form an image. This was used as a planographic printing plate and evaluated in terms of image and printing durability, in the same manner as that of example 1-1. Regarding the evaluation of printing durability, comparative example 2A-1 was set to 100.

These evaluation results are shown in Table 2A-1.

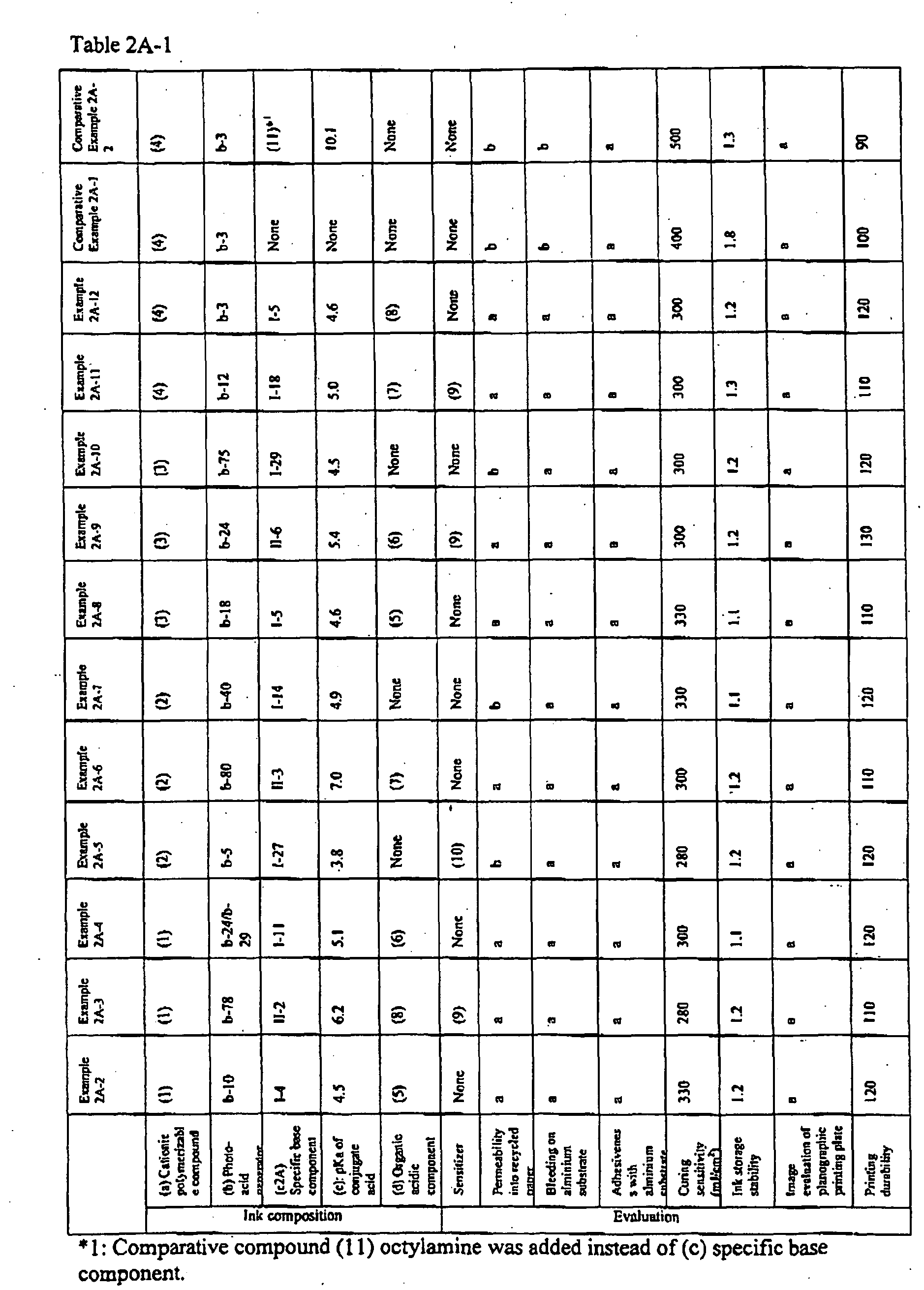

From Table 2A-1, it is seen that the ink compositions of the respective examples were cured with a high sensitivity to irradiation of radiation, were capable of forming a high quality image in terms of the image formation property onto paper, and were excellent in storage stability. In this manner, it was found that in the present invention, the curing sensitivity, the bleeding suppression on a non-permeable substrate, and the ink storage stability were all achieved at the same time.

On the other hand, it was found that the ink composition of comparative example 2A-1 which did not comprise the specific base component (c2A), showed a problem in storage stability, and there was a slight inferiority in the permeability into recycled paper, the bleeding property on an aluminum substrate, and the curing sensitivity. Moreover, it was found that the ink composition of comparative example 2A-2 where the basic compound octylamine was used instead of the specific base component (c2A), showed a great inferiority in the curing sensitivity, and a slight decrease in the printing durability when used on a planographic printing plate, though an improvement in the storage stability was shown.

Moreover, it was found that the planographic printing plate formed with an image by the ink composition of the present invention was capable of forming a high quality image and was excellent in printing durability.

### Example 2B-1

### «Preparation of pigment dispersoid»

According to the method described in example 1-1, the respective pigment dispersoids 1 of yellow, magenta, cyan, and black were prepared. The dispersion condition was suitably adjusted using a publicly known dispersing device so that the mean particle diameter of each pigment particle was within a range between 0.2 and 0.3 µm. Then, filter filtering was performed under heating, for preparation.

### «Preparation of ink»

The following components were mixed, and filtered with a filter to prepare inks of respective colors.

### (Yellow ink 1)

| | |
|---|---|
| • cationic polymerizable compound (a); | |
| Celloxide 2021 | 35 g |
| (epoxy compound: made by Daicel UCB Corp.) | |
| OXT-221 | 55 g |
| (oxetane compound: made by Toagosei Co. Ltd.) | |
| • photo-acid generator (b); | |
| The above compound example (b-27)/(b-32) = 1/2 | 5 g |
| • specific base component (c2B); | |
| The above specific example (I-5) | 0.05 g |
| • colorant (e) (the pigment dispersoid); | |
| Yellow pigment dispersoid 1 | 5 g |
| (Magenta ink I) | |
| • cationic polymerizable compound (a); | |
| Celloxide 2021 | 35 g |
| (epoxy compound: made by Daiccl UCB Corp.) | |
| OXT-221 | 55 g |
| (oxetane compound: made by Toagosei Co. Ltd.) | |
| • photo-acid generator (b); | |
| The above compound example (b-3) | 5 g |
| • specific base component (c2B); | |
| The above specific example (I-10) | 0.03 g |
| • organic acidic component (d); | |
| phenoxyacetic acid | 0.03 g |
| • colorant (e) (the pigment dispersoid); | |
| Magenta pigment dispersoid 1 | 5 g |
| (Cyan ink 1) | |
| • cationic polymerizable compound (a); | |
| Celloxide 2021 | 35 g |
| (epoxy compound: made by Daicel UCB Corp.) | |
| OXT-221 | 55 g |
| (oxetane compound: made by Toagosei Co. Ltd.) | |
| • photo-acid generator (b); | |
| The above compound example (b-75) | 5 g |
| • specific base component (c2B); | |
| The above specific example (Il-2) | 0.03 g |
| • organic acidic component (d); | |
| salicylic acid | 0.03 g |
| • colorant (e) (the pigment dispersoid); | |
| Cyan pigment dispersoid 1 | 5 g |
| (Black ink 1) | |
| • cationic polymerizable compound (a); | |
| Celloxide 2021 | 35 g |
| (epoxy compound: made by Daicel UCB Corp.) | |
| OXT-221 | 55 g |
| (oxetane compound: made by Toagosei Co. Ltd.) | |
| • photo-acid generator (b); | |
| The above compound example (b-10) | 5 g |
| • specific base component (c2B); | |
| The above specific example (II-4) | 0.03 g |
| • organic acidic component (d); | |
| cyclohexanecarboxylic acid | 0.03 g |
| • colorant (e) (the pigment dispersoid); | |
| Black pigment dispersoid 1 | 5g |
| • Sensitizer | |
| 9,10-dimethoxyanthracene | 0.5 g |

### «Inkjet image recording» (Evaluation of multicolor image)

Next, recording on a recording medium was performed using a commercially available inkjet recording apparatus having a piezo type inkjet nozzle. The ink supply system comprised an initial tank, a supply piping, an ink supply tank immediately in front of an inkjet head, a filter, and a piezo type inkjet head. The heat insulation and heating were performed in the part from the ink supply tank to the inkjet head. The temperature sensors were respectively provided in the vicinity of the ink supply tank and the nozzle of the inkjet head to perform temperature control so that the nozzle part was always at 70°C ±2°C. The piezo type inkjet head was driven so that multisize dots of 8 to 30 pl could be ejected with a resolution of 720 × 720 dpi. After the spotting, the exposure system, the main scanning speed, and the ejection frequency were adjusted so that UV-A rays were concentrated to an exposure illuminance of 100 mW/cm², and the irradiation was started after 0.1 second since the ink had been spotted onto the recording medium. Moreover, the exposure time was variable to irradiate the exposure energy dpi in the present invention denotes the number of dots per 2.54 cm.

The above ink of each color prepared was respectively ejected at an environmental temperature of 25°C, in the order of black → cyan → magenta → yellow, and the ultraviolet rays were irradiated for each color. Light exposure was performed such that the total exposure energy per one color was uniformly 300 mJ/cm², as an energy for completely curing, to eliminate the cohesiveness in a touch test. The respective color images were recorded on; a grained aluminum substrate, a biaxial oriented transparent polypropylene film that was surface treated to give printability, a soft polyvinyl chloride sheet, a cast coated paper, and a commercially available recycled paper as the recording medium. As a result, all provided an image of high resolution without dot bleeding. Furthermore, on a woodfree paper, the ink did not penetrate to the backside, and the ink was sufficiently cured with almost no odor due to unreacted monomer. Moreover, the ink recorded onto the film had sufficient flexibility. Even if the film was bent, no cracking occurred in the ink, and there was no problem in the adhesiveness test by cellophane-tape peeling.

### Examples 2B-2 to 2B-10, Comparative Example 2B-1

### <<Preparation of ink>>

The following components were mixed, and filtered with a filter to prepare the ink compositions of examples 2B-2 to 2B-10 (magenta inks 2-1 to 2-9). Moreover, in the same manner as that of example 2B-10 except that then specific base component (c2B) and the organic acidic component (d) were not comprised, the ink composition of comparative example 2B-1 (magenta ink 2-10) was obtained.

### (Magenta inks 2-1 to 2-10)

| | |
|---|---|
| • cationic polymerizable compound (a) (compound described in Table 2B-1) | 90 g |
| • photo-acid generator (b) (compound described in Table 2B-1) | 5 g |
| • specific base component (c2B) | 0.03 g |
| (the above specific example described in Table 2B-1 (pKa is also described), added as required) | |
| • organic acidic component (d) | 0.03g |
| (the organic acidic component described in Table 2B-1, added as required) | |
| • colorant (e) (the above magenta pigment dispersoid I) | 5 g |
| • Sensitizer (the sensitizer described in Table 2B-1, added as required) | 0.5 g |

The details of the cationic polymerizable compound (a) described in Table 2B-1 are as follows.
Cationic polymerizable compound (1):
   Celloxide 2021 (epoxy: made by Daicel UCB Corp.) /OXT-221 (oxetane: made by Toagosei Co. Ltd.) = 35/55 mixture
Cationic polymerizable compound (2):
   Celloxide 3000 (epoxy: made by Daicel UCB Corp.) / OXT-211 (oxetane: made by Toagosei Co. Ltd.) = 50140 mixture
Cationic polymerizable compound (3):
   bisphenol A-diglycidyl ether / OXT-221 (oxetane: made by Toagosei Co. Ltd.) = 40/50 mixture
Cationic polymerizable compound (4):
   Celloxide 2021 (epoxy: made by Daicel UCB Corp.) /OXT-101 (oxetane: made by Toagosei Co. Ltd.) = 55135 mixture

The details of the organic acidic component described in Table 2B-1 are as follows.
Organic acidic component (5): phenoxyacetic acid
Organic acidic component (6): cyclopentanecarboxylic acid
Organic acidic component (7): 1-adamantanecarboxylic acid
Organic acidic component (8): abietic acid.

The details of the sensitizer described in Table 2B-1 are as follows.
Sensitizer (9): 9,10-dimethoxyanthracene
Sensitizer (10): pyrene

In the ink composition made in the above examples and comparative examples, the ink viscosity at the ejection temperature was within a range between 7 and 20 mPa.s.

### [Inkjet image recording] (Evaluation of monocolor image)

In the inkjet recording method described in example 2B-1, in the same manner as that of example 2B-1 except that only the ink compositions of examples 2B-2 to 2B-10 and comparative example 2B-1 (magenta inks 2-1 to 2-10) prepared as above were used, magenta image printing was performed.

### [Evaluation of inkjet image]

Next, the respective ink compositions of the examples and comparative examples (magenta inks 2-1 to 2-10) were respectively evaluated in terms of; sensitivity required for curing, storage stability, permeability in a commercially available recycled paper, ink bleeding in a grained aluminum substrate, and adhesiveness with the grained aluminum substrate, in the same manner as that of example 1-1.

### [Evaluation as planographic printing plate]

Printing was performed on the grained aluminum substrate made in the above manner using the respective ink compositions of the examples and comparative examples (magenta inks 2-1 to 2-10) to form an image. This was used as a planographic printing plate and evaluated in terms of image and printing durability, in the same manner as that of example 1-1. Regarding the evaluation of printing durability, comparative example 2B-1 was set to 100.

These evaluation results are shown in Table 2B-1.

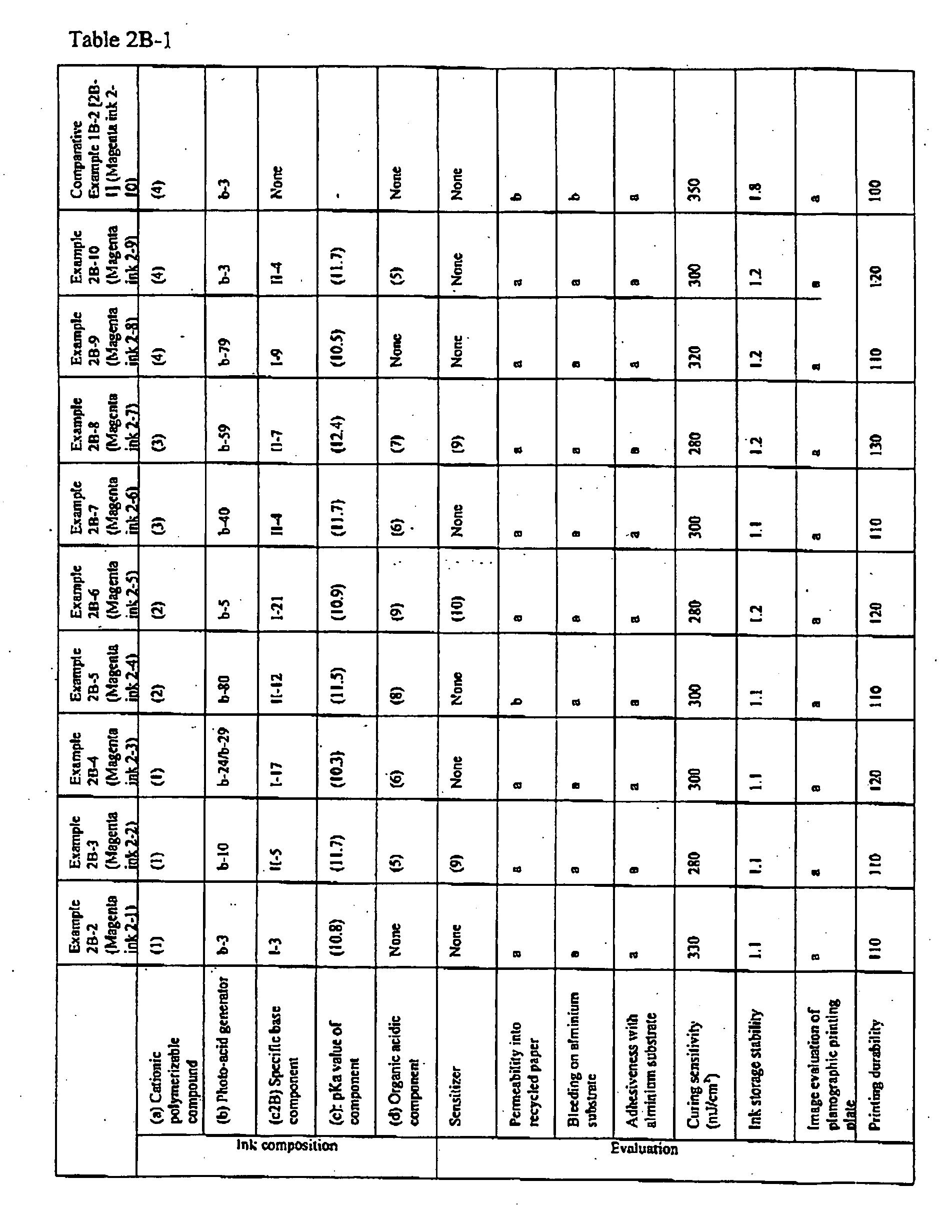

From Table 2B-1, it is seen that the ink compositions of the respective examples were cured with a high sensitivity to irradiation of radiation, were capable of forming a high quality image in terms of the image formation property onto paper, and were excellent in storage stability. In this manner, it was found that in the present invention, the curing sensitivity, the bleeding suppression on a non-permeable substrate, and the ink storage stability were all achieved at the same time.

On the other hand, it was found that the ink composition of comparative example 2B-I which did not comprise the specific base component (c2B), showed a problem in storage stability, and there was a slight inferiority in the permeability into recycled paper, the bleeding property on an aluminum substrate, and the curing sensitivity.

Moreover, it was found that the planographic printing plate formed with an image by the ink composition of the present invention was capable of forming a high quality image and was excellent in printing durability.

### Example 3-1

### <<Preparation of pigment dispersoid>>

The respective pigment dispersoids 1 of yellow, magenta, cyan, and black described below were prepared. The dispersion condition was suitably adjusted using a publicly known dispersing device so that the mean particle diameter of each pigment particle was within a range between 0.2 and 0.3 µm. Then, filter filtering was performed under heating, for preparation.

### (Yellow pigment dispersoids)

| | |
|---|---|
| C.I. pigment yellow 12 | 10 parts by mass |
| Dispersing polymer (Solsperse series made by Zeneca Co.) | 5 parts by mass |
| Stearylacrylate | 85 parts by mass |
| (Magenta pigment dispersoid 1) | |
| C.I. pigment red 57:1 | 15 parts by mass |
| Dispersing polymer (Solsperse series made by Zeneca Co.) | 5 parts by mass |
| Stearylacrylate | 80 parts by mass |
| (Cyan pigment dispersoid 1) | |
| C.I. pigment red 15:3 | 20 parts by mass |
| Dispersing polymer (Solsperse series made by Zeneca Co.) | 5 parts by mass |
| Stearylacrylate | 75 parts by mass |
| (Black pigment dispersoid 1) | |
| C.I. pigment black 7 | 20 parts by mass |
| Dispersing polymer (Solsperse series made by Zeneca Co.) | 5 parts by mass |
| Stearylacrylate | 75 parts by mass |

### «Preparation of ink»

The following components were mixed, and filtered with a filter to prepare inks of respective colors.

### (Yellow ink 1)

| | |
|---|---|
| • Cationic polymerizable compound (a); | |
| Celloxide 2021 (epoxy compound: made by Daicel UCB Corp.) | 35 g |
| OXT-221 (oxetane compound: made by Toagosei-Co. Ltd.) | 55 g |
| • photo-acid generator (b); | |
| Compound example (b-27)/(b-32) = 1/2 | 5 g |
| • specific base component (c3); | |
| Compound example (1-6) | 0.05 g |
| • colorant (e) (the pigment dispersoid); | |
| Yellow pigment dispersoid 1 | 5 g |
| (Magenta ink 1) | |
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b); | |
| Compound example (b-3) | 5 g |
| • specific base component (c3); | |
| Compound example (1-5) | 0.03 g |
| • organic acidic component (d); | |
| phenoxyacetic acid | 0.03 g |
| • colorant (e) (the pigment dispersoid); | |
| Magenta pigment dispersoid 1 | 5 g |
| (Cyan ink 1) | |
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b); | |
| Compound example (b-75) | 5 g |
| • specific base component (c3); | |
| Compound example (I-11) | 0.03 g |
| • organic acidic component (d); | |
| salicylic acid | 0.03 g |
| • colorant (e) (the pigment dispersoid); | |
| Cyan pigment dispersoid 1 | 5 g |
| (Black ink 1) | |
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b); | |
| Compound example (b-10) | 5 g |
| • specific base component (c3); | |
| Compound example (I-16) | 0.03 g |
| • organic acidic component (d); | |
| cyclohexanecarboxylic acid | 0.03 g |
| • colorant (e) (the pigment dispersoid); | |
| Black pigment dispersoid 1 | 5 g |
| • Sensitizer; | |
| • 9,10-dimethoxyanthracene | 0.5 g |

### «inkjet image recording» (Evaluation of multicolor images)

Next, recording on a recording medium was performed using a commercially available inkjet recording apparatus having a piezo type inkjet nozzle. The ink supply system comprised an initial tank, a supply piping, an ink supply tank immediately in front of an inkjet head, a filter, and a piezo type inkjet head. The heat insulation and heating were performed in the part from the ink supply tank to the inkjet head. The temperature sensors were respectively provided in the vicinity of the ink supply tank and the nozzle of the inkjet head to perform temperature control so that the nozzle part was always at 70°C ±2°C. The piezo type inkjet head was driven so that multisize dots of 8 to 30 pl could be ejected with a resolution of 720 × 720 dpi. After the spotting, the exposure system, the main scanning speed, and the ejection frequency were adjusted so that UV-A rays were concentrated to an exposure illuminance of 100 mW/cm², and the irradiation was started after 0.1 second since the ink had been spotted onto the recording medium. Moreover, the exposure time was variable to irradiate the exposure energy. dpi in the present invention denotes the number of dots per 2.54 cm.

The above ink of each color prepared was respectively ejected at an environmental temperature of 25°C, in the order of black → cyan → magenta → yellow, and the ultraviolet rays were irradiated for each color. Light exposure was performed such that the total exposure energy per one color was uniformly 300 mJ/cm², as an energy for completely curing, to eliminate the cohesiveness in a touch test. The respective color images were recorded on; a grained aluminum substrate, a biaxial oriented transparent polypropylene film that was surface treated to give printability, a soft polyvinyl chloride sheet, a cast coated paper, and a commercially available recycled paper as the recording medium. As a result, all provided an image of high resolution without dot bleeding. Furthermore, on a woodfree paper, the ink did not penetrate to the backside, and the ink was sufficiently cured with almost no odor due to unreacted monomer. Moreover, the ink recorded onto the film had sufficient flexibility. Even if the film was bent, no cracking occurred in the ink, and there was no problem in the adhesiveness test by cellophane-tape peeling.

### Examples 3-2 to 3-10, Comparative Example 3-1

### <<Preparation of ink>>

The following components were mixed, and filtered with a filter to prepare the ink compositions of 2-2 to 2-10 (magenta inks 2-1 to 2-9). Moreover, in the same manner as that of example 3-10 except that the specific base component (c3) and the organic acidic component (d) were not comprised, the ink composition of comparative example 3-1 (magenta ink 2-10) was obtained.

### (Magenta inks 2-1 to 2-10)

| | |
|---|---|
| • cationic polymerizable compound (a) (compound described in Table 3-1) | 90 g |
| • photo-acid generator (b) (compound described in Table 3-1) | 5 g |
| • specific base component (c3) | 0.03 g |
| • organic acidic component (d) (the organic acidic component described in Table 3-1, added as required) | 0.03 g |
| • colorant (e) (the above magenta pigment dispersoid 1) | 5 g |
| • Sensitizer (the sensitizer described in Table 3-1, added as required) | 0.5 g |

The details of the cationic polymerizable compound described in Table 3-1 are as follows.
Cationic polymerizable compound (1):
   Celloxide 2021 (epoxy: made by Daicel UCB Corp.) / OXT-221 (oxetane: made by Toagosei Co. Ltd.) = 35/55 mixture
Cationic polymerizable compound (2):
   Celloxide 3000 (epoxy: made by Daicel UCB Corp.) /OXT-211 (oxetane: made by Toagosei Co. Ltd.) = 50/40 mixture
Cationic polymerizable compound (3):
   bisphenol A-diglycidyl ether / OXT-221 (oxetane: made by Toagosei Co. Ltd.) = 40/50 mixture
Cationic polymerizable compound (4):
   Celloxide 2021 (epoxy: made by Daicel UCB Corp.) / OXT-101 (oxetane: made by Toagosei Co. Ltd.) = 55/35 mixture

The details of the organic acidic component described in Table 3-1 are as follows.
Organic acidic component (5): phenoxyacetic acid
Organic acidic component (6): cyclopentanecarboxylic acid
Organic acidic component (7): 1-adamantanecarboxylic acid
Organic acidic component (8): 4-hydroxybenzoic acid

The details of the sensitizer described in Table 3-1 are as follows.
Sensitizer (9): 9,10-dimetboxyanthracene
Sensitizer (10): pyrene

In the ink composition made in the above examples and comparative examples, the ink viscosity at the ejection temperature was within a range between 7 and 20 mPa.s.

### [Inkjet image recording] (Evaluation of monocolor image)

In the same manner as that of example 3-1 except that only the ink compositions of examples 3-2 to 3-10 and comparative example 3-1 prepared as above were used, magenta image printing was performed.

### [Evaluation of inkjet image]

Next, the respective images formed were evaluated in terms of; sensitivity required for curing, storage stability, permeability in a commercially available recycled paper, ink bleeding in a grained aluminum substrate, and adhesiveness with the grained aluminum substrate, in the same manner as that of example 1-1.

### [Evaluation as planographic printing plate]

Printing was performed on the grained aluminum substrate made in the above manner using the ink compositions of the examples and comparative examples to form an image. This was used as a planographic printing plate and evaluated in terms of image and printing durability, in the same manner as that of example 1-1. Regarding the evaluation of printing durability, comparative example 3-1 was set to 100.

These evaluation results are shown in Table 3-1.

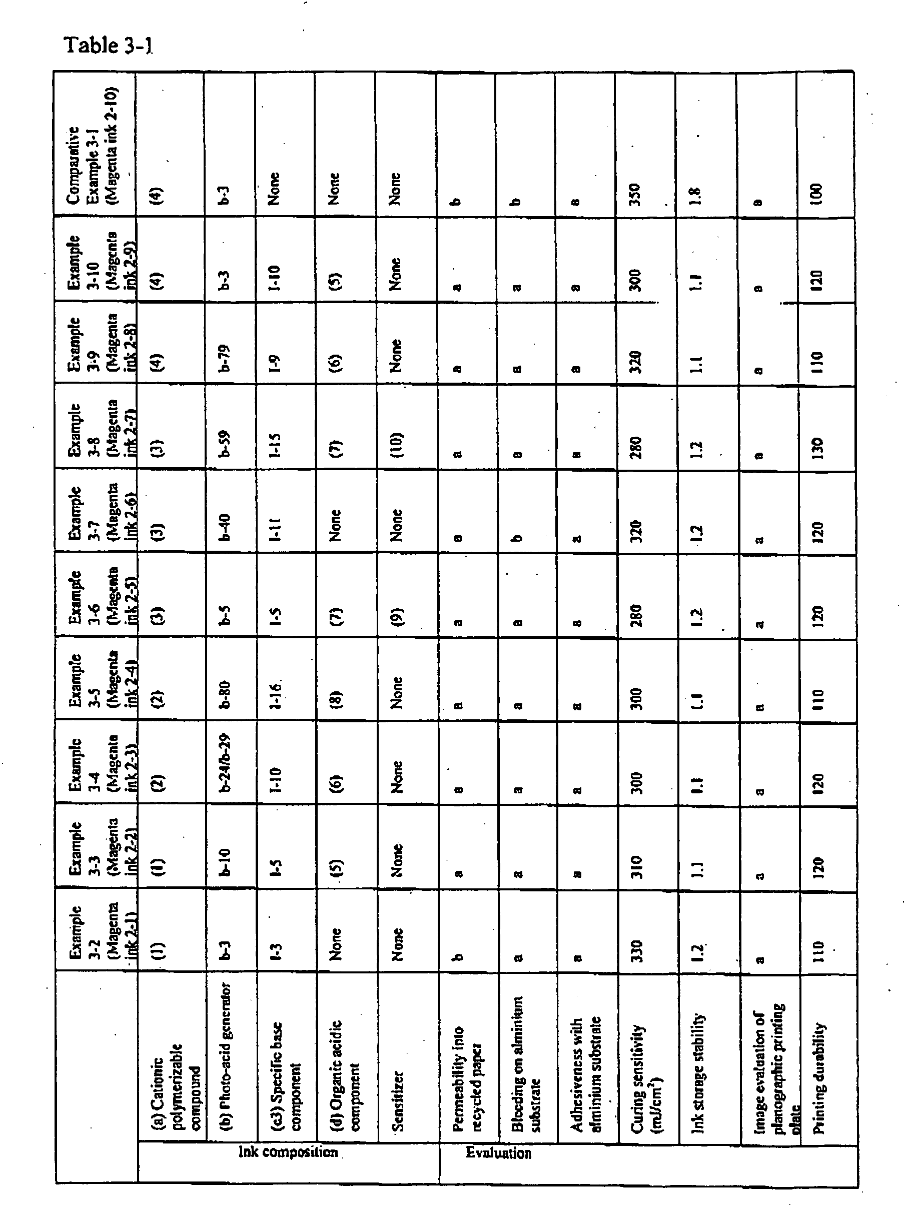

From Table 3-1, it is seen that the ink compositions of the respective examples were cured with a high sensitivity to irradiation of radiation, were capable of forming a high quality image in terms of the image formation property onto paper, and were excellent in storage stability. In this manner, it was found that in the present invention, the curing sensitivity, the bleeding suppression on a non-permeable substrate, and the ink storage stability were all achieved at the same time.

On the other hand, it was found that the ink composition of comparative example 3-1 which did not comprise the specific base component (c3), showed a problem in storage stability, and there was a slight inferiority in the permeability into recycled paper, the bleeding property on an aluminum substrate, and the curing sensitivity.

Moreover, it was found that the planographic printing plate formed with an image by the ink composition of the present invention was capable of forming a high quality image and was excellent in printing durability.

### Example 4-1

### <<Preparation of pigment dispersoid>>

According to the method described in example 1-1, the respective pigment dispersoids 1 of yellow, magenta, cyan, and black were prepared. The dispersion condition was suitably adjusted using a publicly known dispersing device so that the mean particle diameter of each pigment particle was within a range between 0.2 and 0.3 µm. Then, filter filtering was performed under heating, for preparation.

### «Preparation of ink»

The following components were mixed, and filtered with a filter to prepare inks of respective colors.

### (Yellow ink 1)

| | |
|---|---|
| • cationic polymerizable compound (a); | |
| Celloxide 2021 (epoxy compound made by Daicel UCB Corp.) | 35 g |
| OXT-221 (oxetane compound: made by Toagosei Co. Ltd.) | 55 g |
| • photo-acid generator (b) [compound example (b-27)/(b-32) =1/2] | 5 g |
| • specific base component (c4) [compound example (I-12)] | 0.05 g |
| • colorant (e) (the yellow pigment dispersoid 1) | 5 g |
| (Magenta ink 1) | |
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b) [compound example (b-3)] | 5 g |
| • specific base component (c4) [compound example (II-4)] | 0.05 g |
| • colorant (e) (the above magenta pigment dispersoid 1) | 5 g |
| (Cyan ink 1) | |
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b) [compound example (b-75)] | 5 g |
| • specific base component (c4) [compound example (III-5)] | 0.05 g |
| • colorant (e) (the above cyan pigment dispersoid 1) | 5 g |
| (Black ink 1) | |
| • cationic polymerizable compound (a); | |
| Celloxide 2021 (epoxy compound: made by Daicel UCB Corp.) | 35 g |
| OXT-221 (oxetane compound: made by Toagosei Co. Ltd.) | 55 g |
| • photo-acid generator (b) [compound example (b-10)] | 5g |
| • specific base component (c4) [compound example (III-8)] | 0.05 g |
| • Sensitizer (9,10-dimethoxyanthracene) | 0.5 g |
| • colorant (e) (the above black pigment dispersoid 1) | 5 g |

### <<Inkjet image recording>> (Evaluation of multicolor image)

Next, recording on a recording medium was performed using a commercially available inkjet recording apparatus having a piezo type inkjet nozzle. The ink supply system comprised an initial tank, a supply piping, an ink supply tank immediately in front of an inkjet head, a filter, and a piezo type inkjet head. The heat insulation and heating were performed in the part from the ink supply tank to the inkjet head. The temperature sensors were respectively provided in the vicinity of the ink supply tank and the nozzle of the inkjet head to perform temperature control so that the nozzle part was always at 70°C ±2°C. The piezo type inkjet head was driven so that multisize dots of 8 to 30 pl could be ejected with a resolution of 720 × 720 dpi. After the spotting, the exposure system, the main scanning speed, and the ejection frequency were adjusted so that UV-A rays were concentrated to an exposure illuminance of 100 mW/cm², and the irradiation was started after 0.1 second since the ink had been spotted onto the recording medium. Moreover, the exposure time was variable to irradiate the exposure energy. dpi in the present invention denotes the number of dots per 2.54 cm.

The above ink of each color prepared was respectively ejected at an environmental temperature of 25°C, in the order of black →cyan→ magenta → yellow, and the ultraviolet rays were irradiated for each color. Light exposure was performed such that the total exposure energy per one color was uniformly 300 mJ/cm², as an energy for completely curing, to eliminate the cohesiveness in a touch test.

The respective color images were recorded on; a grained aluminum substrate, a biaxial oriented transparent polypropylene film that was surface treated to give printability, a soft polyvinyl chloride sheet, a cast coated paper, and a commercially available recycled paper as the recording medium. As a result, all provided an image of high resolution without dot bleeding. Furthermore, on a woodfree paper, the ink did not penetrate to the backside, and the ink was sufficiently cured with almost no odor due to unreacted monomer. Moreover, the ink recorded onto the film had sufficient flexibility. Even if the film was bent, no cracking occurred in the ink, and there was no peeling and no problem found in the adhesiveness test by cellophane-tape peeling.

### Examples 4-2 to 4-12, Comparative Examples 4-1 to 4-2

### <<Preparation of ink>>

The following components were mixed, and filtered with a filter to prepare the ink compositions of examples 4-2 to 4-12. Moreover, in the same manner as that of example 4-12 except that the specific base component (c4) and the organic acidic component (d) were not comprised, the ink composition of comparative example 4-1 (magenta ink 2) was obtained. In the same manner as that of example 4-12 except that the comparative basic compound octylamine was used instead of the specific base component (c4), the ink composition of comparative example 4-2 (magenta ink 2) was obtained.

### (Magenta ink 2)

| | |
|---|---|
| • cationic polymerizable compound (a) (compound described in Table 4-1) | 90 g |
| • photo-acid generator (b) (compound described in Table 4-1) | 5 g |
| • specific base component (c4) | 0.05 g |
| (the specific example described in Table 4-1, added as required) | |
| • organic acidic component (d) | 0.03g |
| (the organic acidic component described in Table 4-1, added as required) | |
| • colorant (e) (the above magenta pigment dispersoid 1) | 5 g |
| • Sensitizer (the sensitizer described in Table 4-1, added as required) | 0.5 g |

The details of the cationic polymerizable compound (a) described in Table 4-1 are as follows.
Cationic polymerizable compound (1):
   Celloxide 2021 (epoxy: made by Daicel UCB Corp.) /OXT-221 (oxetane: made by Toagosei Co. Ltd.) = 35/55 mixture
Cationic polymerizable compound (2):
   Celloxide 3000 (epoxy: made by Daicel UCB Corp.) / OXT-211 (oxetane: made by Toagosei Co. Ltd.) = 50/40 mixture
Cationic polymerizable compound (3):
   bisphenol A-diglycidyl ether / OXT-221 (oxetane: made by Toagosei Co. Ltd.) = 40/50 mixture
Cationic polymerizable compound (4):
   Celloxide 2021 (epoxy: made by Daicel UCB Corp.) / OXT-101 (oxetane: made by Toagosei Co. Ltd.) = 55/35 mixture

The details of the organic acidic component described in Table 4-1 are as follows.
Organic acidic component (5): phenoxyacetic acid
Organic acidic component (6): cyclopentanecarboxylic acid

The details of the sensitizer described in Table 4-1 are as follows.
Sensitizer (7): 9,10-dimethoxyanthracene
Sensitizer (8): pyrene

As shown in Table 4-1, in comparative example 4-2, the basic compound octylamine was used instead of the specific base component (c4).

### Comparative basic compound (9): octylamine

In the ink composition made in the above examples and comparative examples, the ink viscosity at the ejection temperature was within a range between 7 and 20 mPa.s.

### [Inkjet image recording] (Evaluation of monocolor image)

In the inkjet image recording method described in example 4-1, preparation was done as above. In the same manner as that of example 4-1 except that only the ink compositions of examples 4-2 to 4-12 and comparative example 4-1 were used, magenta image printing was performed.

### [Evaluation of inkjet image]

Next, the respective ink compositions of the examples 4-2 to 4-12 and comparative examples were respectively evaluated in terms of; sensitivity required for curing, storage stability, permeability in a commercially available recycled paper, ink bleeding in a grained aluminum substrate, and adhesiveness with the grained aluminum substrate, in the same manner as that of example 1-1.

### [Evaluation as planographic printing plate]

Printing was performed on the grained aluminium substrate made in the above manner using the respective ink compositions of the examples 4-2 to 4-12 and comparative examples to form an image. This was used as a planographic printing plate and evaluated in terms of image and printing durability. Regarding the evaluation of printing durability, the data of example 4-1 was set to 100, and relative evaluation was employed.

These evaluation results are shown in Table 4-1.

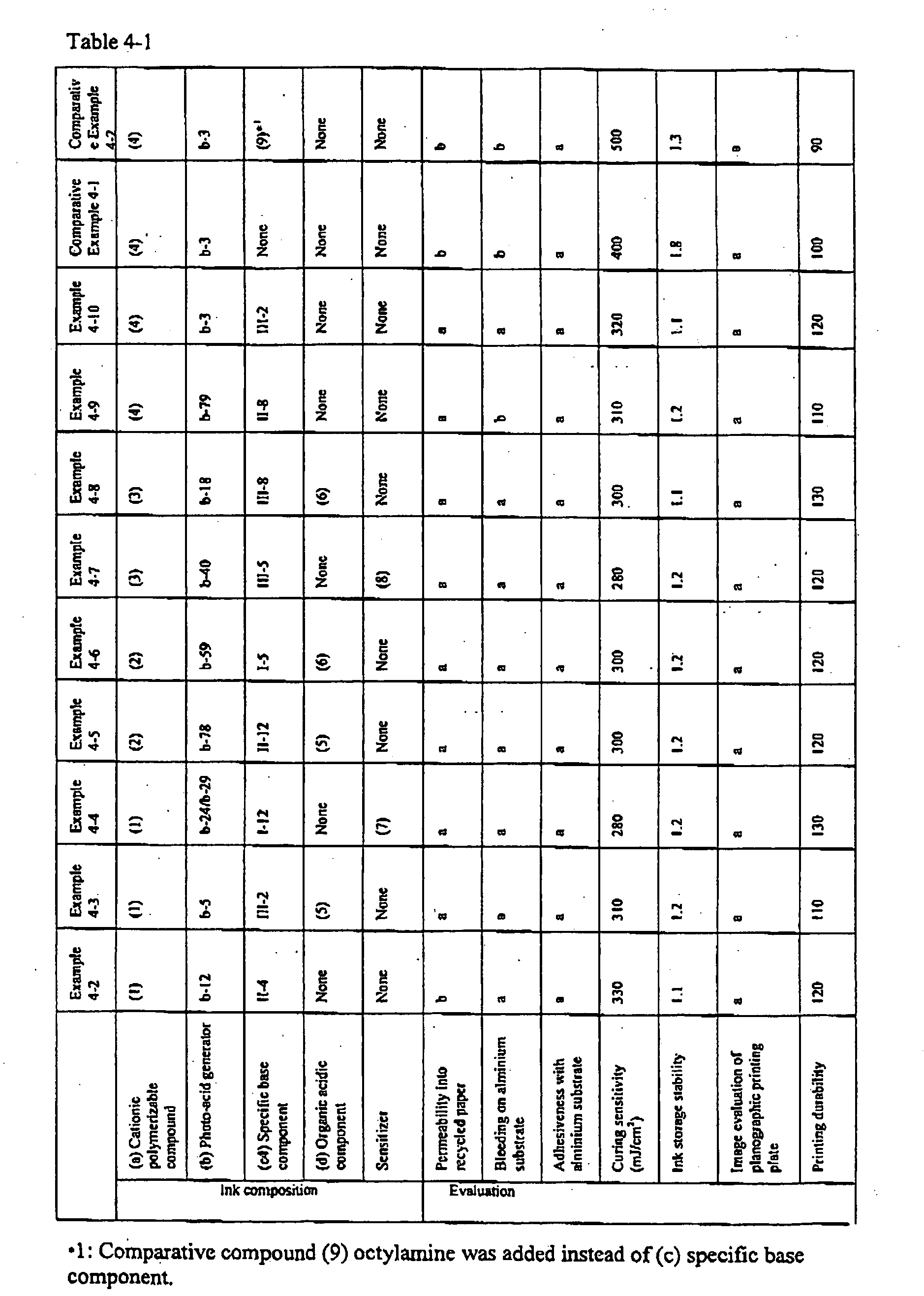

From Table 4-1, it is seen that the ink compositions of the respective examples were cured with a high sensitivity to irradiation of radiation, were capable of forming a high quality image in terms of the image formation property onto paper, and were excellent in storage stability. In this manner, it was found that in the present invention, the curing sensitivity, the bleeding suppression on a non-permeable substrate, and the ink storage stability were all achieved at the same time.

On the other hand, it was found that the ink composition of comparative example which did not comprise the specific base component (c4), showed a problem in storage stability, and there was a slight inferiority in the permeability into recycled paper, the bleeding property on an aluminum substrate, and the curing sensitivity. Moreover, it was found that the ink composition of comparative example 4-2 where the basic compound octylamine was used instead of the specific base component (c4), showed a great inferiority in the curing sensitivity, and a slight decrease in the printing durability when used on a planographic printing plate, though an improvement in the storage stability was shown.

Moreover, it was found that the planographic printing plate formed with an image by the ink composition of the present invention was capable of forming a high quality image and was excellent in printing durability.

According to the present invention, an ink composition which is curable by irradiation of radiation with a high sensitivity, is capable of forming a high quality image, is superior in adhesiveness onto a recording medium, is excellent in storage stability, and is suitable for inkjet recording, and an inkjet recording method using the ink composition, can be provided.

Moreover, a printed material obtained by using the ink composition of the present invention which is superior in storage stability and is curable with a high sensitivity to irradiation of ultraviolet rays, has a high quality image and a superior strength in the image area. Furthermore, by using the ink composition of the present invention, a planographic printing plate with a high printing durability and a high quality image can be formed based on digital data.

In the present invention, the polyfunctional amine compound (c1) of the ink composition of the present invention may be a polyfunctional amine compound having the two basic nitrogen atoms bonded via a linking group having 2 or 3 carbon atoms.

Moreover, the ink composition of the present invention further comprising an organic acidic component (d) exhibiting a pKa value of 2 to 6.

The the ink composition of the present invention, further comprising a colorant (e). And the colorant (e) may be a pigment or an oil soluble dye.

The ink composition of the present invention may be used for inkjet recording.

The compound (c2) of the ink composition of the present invention may be a compound (c2A) having a basic nitrogen atom and a conjugate acid exhibiting a pKa value of 3 to 10. And the compound (c2A) may be a compound having a basic nitrogen atom and a conjugate acid exhibiting a pKa value of 4 to 7. Moreover, the compound (c2A) may be a compound represented by the following formulae (I-2A) or (II-2A): 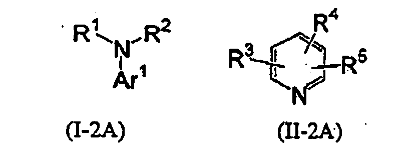 wherein in the formula (I-2A) and the formula (II-2A), R¹ and R² independently represent a hydrogen atom, an alkyl group, a cycloalkyl group, an aralkyl group, or an aryl group, Ar¹ represents an aryl group; R³ to R⁵ independently represent a hydrogen atom, an alkyl group, a cycloalkyl group, an aralkyl group, an aryl group, a hydroxy group, a carboxy group, a cyano group, a nitro group, an acyl group, or an -N(R¹)(R²) group; and, R¹ and R² in the formula (I-2A), or any two of R³ to R⁵ in the formula (II-2A) may be bonded to each other to form an aliphatic ring, an aromatic ring, or a heterocycle.

The compound (c2A) represented by the formulae (I-2A) or (II-2A) may be a compound having an OH group or a COOH group as a substituent.

The compound (c2) of the ink composition of the present invention may be a compound (c2B) having a basic nitrogen atom and a conjugate acid exhibiting a pKa value of 10 or more. And the compound (c2B) may be a compound represented by the following formulae (1-2B) or (II-2B): 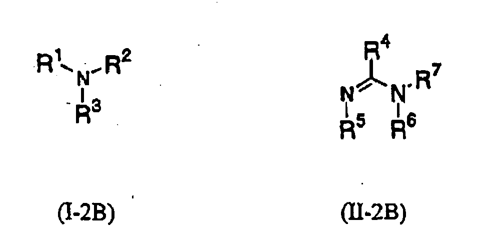 wherein in the formula (I-2B) and the formula (II-2B), R¹ to R³ and R⁵ to R⁷ independently represent a hydrogen atom, an alkyl group, a cycloalkyl group, or an aralkyl group; R⁴ represents an alkyl group, a cycloalkyl group, an aralkyl group, an aryl group, an -N(R⁸)(R⁹) group, or an -OR¹⁰ group, wherein, R⁸ to R¹⁰ independently represent a hydrogen atom, an alkyl group, a cycloalkyl group, or an aralkyl group; and, any two of R¹ to R³ in the formula (I-2B), or any two of R⁴ to R¹⁰ in the formula (II-2B) may be bonded to each other to form an aliphatic ring, an aromatic ring, or a heterocycle.

The hindered amine compound (c3) of the ink composition of the present invention may be a hindered amine compound represented by the following formula (I-3): 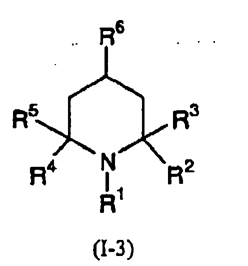 wherein in the formula, R¹ represents a hydrogen atom, an alkyl group, a cycloalkyl group, an aralkyl group, or an acyl group; R² to R⁵ independently represent an alkyl group, a cycloalkyl group, or an aralkyl group; R⁶ represents a hydrogen atom, an alkyl group, a cycloalkyl group, an aralkyl group, a hydroxy group, an -O-CO-R⁷ group, or an -N(R⁸)(R⁹) group; R⁷ represents an alkyl group, a cycloalkyl group, an aralkyl group, or an aryl group; and R⁸ to R⁹ independently represent a hydrogen atom, an alkyl group, a cycloalkyl group, an acyl group, an acyloxy group, or an amide group.

The compound (c4) of the ink composition of the present invention may be represented by the following formula (I-4), formula (II-4), or formula (III-4): 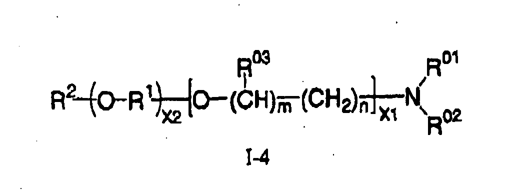 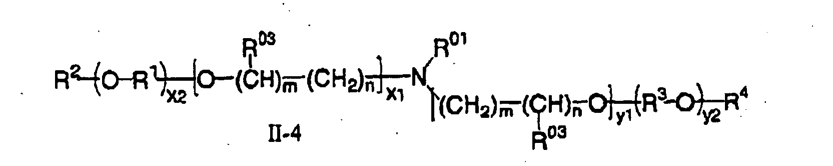 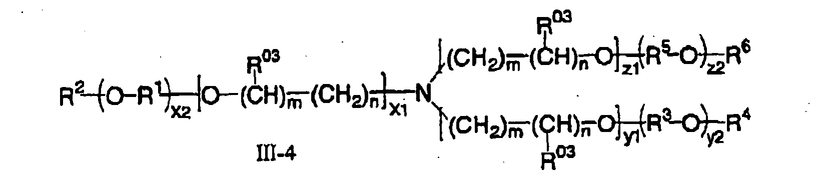 wherein in the formula (I-4) through formula (III-4), R⁰¹ and R⁰² independently represent a hydrogen atom, an alkyl group, a cycloalkyl group, an aryl group, or an aralkyl group; R⁰³ represents a hydrogen atom, or an alkyl group; R¹, R³ and R⁵ independently represent an alkylene group, a cycloalkylene group, or an aralkylene group; R², R⁴ and R⁶ independently represent a hydrogen atom, an alkyl group, a cycloalkyl group, an aralkyl group, an aryl group, or an -N(R⁷)(R⁸) group, wherein, R⁷ and R⁸ independently represent a hydrogen atom, an alkyl group, a cycloalkyl group, or an aralkyl group; x1 x2, y1 y2, z1, and z2 independently represent an integer of 0 to 20; m and n independently represent an integer of 0 to 6; x1 and x2, y1 and y2, z1 and z2, and m and n are not 0 at the same time, and R², R⁴ and R⁶ is not a hydrogen atom if the corresponding x2, y2, or z2 is 0; and, any two of R⁰¹, R⁰², R⁰³ and R² in the formula (I-4), any two of R⁰¹, R⁰³, R² and R⁴ in the formula (II-4), or any two of R⁰³, R², R⁴ and R⁶ in the formula (III-4) may be bonded to each other to form a ring.

## Claims

1. An ink composition comprising: a cationic polymerizable compound (a), a compound (b) which generates an acid by irradiation of radiation, and a hindered amine compound (c3) having a basic nitrogen atom, wherein the nitrogen atom is substituted with at least two tertiary alkyl groups.

2. The ink composition according to claim 1 wherein the hindered amine compound (c3) having a basic nitrogen atom, wherein the nitrogen atom is substituted with at least two tertiary alkyl groups, is a hindered amine compound represented by the following formula (I-3): 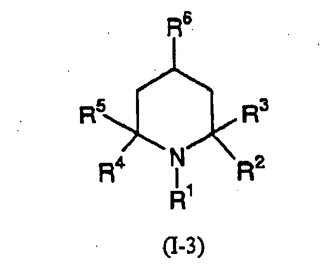 wherein in the formula, R' represents a hydrogen atom, an alkyl group, a cycloalkyl group, an aralkyl group, or an acyl group; R² to R⁵ independently represent an alkyl group, a cycloalkyl group, or an aralkyl group; R⁶ represents a hydrogen atom, an alkyl group, a cycloalkyl group, an aralkyl group, a hydroxy group, an -O-CO-R⁷ group, or an -N.(R⁸)(R⁹) group; R⁷ represents an alkyl group, a cycloalkyl group, an aralkyl group, or an aryl group; and R⁸ to R⁹ independently represent a hydrogen atom, an alkyl group, a cycloalkyl group, an acyl group, an acyloxy group, or an amide group.

3. The ink composition according to claim 1 or 2 further comprising an organic acidic component (d) exhibiting a pKa value of 2 to 6.

4. The ink composition according to any one of claims 1 to 3, further comprising a colorant (e).

5. The ink composition according to any one of claims 1 to 4, wherein the colorant (e) is a pigment or an oil-soluble dye.

6. A use of the ink composition according to any one of claims 1 to 5 for inkjet recording.

7. An inkjet recording method comprising: ejecting the ink composition according to any one of claims 1 to 5 onto a recording medium by an inkjet printer, and curing the ejected ink composition by irradiating radiation.

8. A printed material formed by ejecting the ink composition according to any one of claims 1 to 5 onto a recording medium by an inkjet printer, and then curing the ink composition by irradiating radiation.

9. A method of producing a planographic printing plate comprising: ejecting the ink composition according to any one of claims 1 to 5 onto a hydrophilic substrate, and then curing the ink composition by irradiation of radiation so as to form a hydrophobic area.

10. A planographic printing plate comprising a hydrophobic area formed by ejecting the ink composition according to any one of claims 1 to 5 onto a hydrophilic substrate, and then curing the ink composition by irradiating radiation.

## Patentansprüche

1. Tintenzusammensetzung, umfassend: eine kationisch polymerisierbare Verbindung (a), eine Verbindung (b), die durch die Einstrahlung von Strahlung eine Säure bildet, und eine gehinderte Aminverbindung (c3), die ein basisches Stickstoffatom aufweist, worin das Stickstoffatom mit mindestens zwei tertiären Alkylgruppen substituiert ist.

2. Tintenzusammensetzung gemäß Anspruch 1, worin die gehinderte Aminverbindung (c3), die ein basisches Stickstoffatom aufweist, worin das Stickstoffatom mit mindestens zwei tertiären Alkylgruppen substituiert ist, eine gehinderte Aminverbindung ist, die durch die folgende Formel (1-3) dargestellt wird: 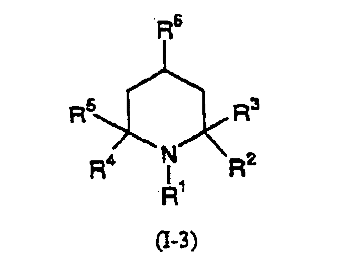 worin in der Formel R¹ ein Wasserstoffatom, eine Alkylgruppe, eine Cycloalkylgruppe, eine Aralkylgruppe oder eine Acylgruppe darstellt; R² bis R⁵ unabhängig voneinander eine Alkylgruppe, eine Cycloalkylgruppe oder eine Aralkylgruppe darstellen; R⁶ ein Wasserstoffatom, eine Alkylgrupp, eine Cycloalkylgruppe, eine Aralkylgruppe, eine Hydroxygruppe, eine -O-CO-R⁷-Gruppe oder eine -N(R⁸)(R⁹)-Gruppe darstellt, R⁷ eine Alkylgruppe, eine Cycloalkylgruppe, eine Aralkylgruppe oder eine Arylgruppe darstellt; und R⁸ bis R⁹ jeweils unabhängig voneinander ein Wasserstoffatom, eine Alkylgruppe, eine Cycloalkylgruppe, eine Acylgruppe, eine Acyloxygruppe oder eine Amidgruppe darstellen.

3. Tintenzusammensetzung gemäß Anspruch 1 oder 2, ferner umfassend eine organische saure Komponente (d), die einen pKa-Wert von 2 bis 6 aufweist.

4. Tintenzusammensetzung gemäß irgendeinem der Ansprüche 1 bis 3, ferner umfassend ein Färbemittel (e).

5. Tintenzusammensetzung gemäß irgendeinem der Ansprüche 1 bis 4, worin das Färbemittel (e) ein Pigment oder ein öllöslicher Farbstoff ist.

6. Verwendung der Tintenzusammensetzung gemäß irgendeinem der Ansprüche 1 bis 5 für die Tintenstrahlaufzeichnung.

7. Tintenstrahlaufzeichnungsverfahren, umfassend: Ausstoßen der Tintenzusammensetzung gemäß irgendeinem der Ansprüche 1 bis 5 auf ein Aufzeichnungsmedium mit einem Tintenstrahldrucker; und Härten der ausgestoßenen Tintenzusammensetzung durch Einstrahlen von Strahlung.

8. Bedrucktes Material/Drucksache, gebildet durch Ausstoßen der Tintenzusammensetzung gemäß irgendeinem der Ansprüche 1 bis 5 auf ein Aufzeichnungsmedium mit einem Tintenstrahldrucker, und dann Härten der Tintenzusammensetzung durch Einstrahlen von Strahlung.

9. Verfahren zur Herstellung einer Flachdruckplatte, umfassend: Ausstoßen der Tintenzusammensetzung gemäß irgendeinem der Ansprüche 1 bis 5 auf ein hydrophiles Substrat, und dann Härten der Tintenzusammensetzung durch Einstrahlen von Strahlung, um so einen hydrophoben Bereich zu bilden.

10. Flachdruckplatte, umfassend einen hydrophoben Bereich, gebildet durch Ausstoßen der Tintenzusammerisetzung gemäß irgendeinem der Ansprüche 1 bis 5 auf ein hydrophiles Substrat, und dann Härten der Tintenzusammensetzung durch Einstrahlen von Strahlung.

## Revendications

1. Composition d'encre comprenant : un composé cationique polymérisable (a), un composé (b) qui génère un acide par irradiation par rayonnement, et un composé d'amine bloquée (c3) ayant un atome d'azote de base, dans lequel l'atome d'azote est substitué par au moins deux groupes alkyle tertiaire.

2. Composition d'encre selon la revendication 1, dans laquelle le composé d'amine bloquée (c3) ayant un atome d'azote de base, dans lequel l'atome d'azote est substitué par au moins deux groupes alkyle tertiaire, est un composé d'amine bloquée représenté par la formule suivante (I-3) : 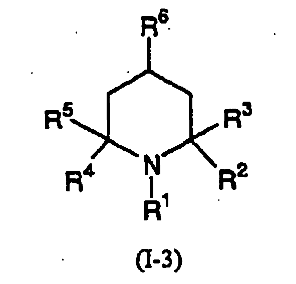 dans laquelle dans la formule, R¹ représente un atome d'hydrogène, un groupe alkyle, un groupe cycloalkyle, un groupe aralkyle, ou un groupe acyle ; R² à R⁵ représentent indépendamment un groupe alkyle, un groupe cycloalkyle, ou un groupe aralkyle ; R⁶ représente un atome d'hydrogène, un groupe alkyle, un groupe cycloalkyle, un groupe aralkyle, un groupe hydroxy, un groupe -O-CO-R⁷, ou un groupe -N(R⁸) (R⁹) ; R⁷ représente un groupe alkyle, un groupe cycloalkyle, un groupe aralkyle, ou un groupe aryle ; et R⁸ et R⁹ représentent indépendamment un atome d'hydrogène, un groupe alkyle, un groupe cycloalkyle, un groupe acyle, un groupe acyloxy, ou un groupe amide.

3. Composition d'encre selon la revendication 1 ou 2, comprenant en outre un composant acide organique (d) présentant une valeur pKa de 2 à 6.

4. Composition d'encre selon l'une quelconque des revendications 1 à 3, comprenant en outre un colorant (e).

5. Composition d'encre selon l'une quelconque des revendications 1 à 4, dans laquelle le colorant (e) est un pigment ou une teinture soluble dans de l'huile.

6. Utilisation de la composition d'encre selon l'une quelconque des revendications 1 à 5, pour un enregistrement à jet d'encre.

7. Procédé d'enregistrement à jet d'encre comprenant : l'éjection de la composition d'encre selon l'une quelconque des revendications 1 à 5 sur un support d'enregistrement par une imprimante à jet d'encre ; et le durcissement de la composition d'encre éjectée par irradiation par rayonnement.

8. Matière imprimée formée en éjectant la composition d'encre selon l'une quelconque des revendications 1 à 5 sur un support d'enregistrement par une imprimante à jet d'encre, et ensuite en durcissant la composition d'encre par irradiation par rayonnement.

9. Procédé de production d'une plaque d'impression planographique comprenant : l'éjection de la composition d'encre selon l'une quelconque des revendications 1 à 5 sur un substrat hydrophile, et ensuite le durcissement de la composition d'encre par irradiation par rayonnement de façon à former une zone hydrophobe.

10. Plaque d'impression planographique comprenant une zone hydrophobe formée en éjectant la composition d'encre selon l'une quelconque des revendications 1 à 5 sur un substrat hydrophile, et ensuite en durcissant la composition d'encre par irradiation par rayonnement.
